# EUROPEAN PATENT SPECIFICATION

(11) **EP 3 998 697 B1**
(45) Date of publication and mention of the grant of the patent: **20.12.2023**
(21) Application number: 20837147.6
(22) Date of filing: 19.06.2020
(51) Int. Cl.: H02K 1/16, H02K 3/487, H02K 17/12, H02K 17/16, H02K 9/06

(54) **IE5 THREE-PHASE ASYNCHRONOUS MOTOR BASED ON CAST ALUMINUM ROTOR AND STATOR LAMINATIONS HAVING SLOTS OF UNEQUAL SIZE**
IE5 DREHSTROM-ASYNCHRONMOTOR AUF DER BASIS VON ALUMINIUMGUSSROTOREN UND STATORBLECHEN MIT UNGLEICH GROSSEN SCHLITZEN
MOTEUR ASYNCHRONE TRIPHASÉ IE5 BASÉ SUR UN ROTOR EN ALUMINIUM COULÉ ET DES TÔLES MAGNÉTIQUES DE STATOR AYANT DES FENTES DE TAILLE INÉGALE

(30) Priority: 09.07.2019 CN 201910612448; 09.07.2019 CN 201910612482; 09.07.2019 CN 201910612469; 09.07.2019 CN 201910612481; 09.07.2019 CN 201910612476; 09.07.2019 CN 201910612449
(43) Date of publication of application: 18.05.2022
(73) Proprietor: Shanxi Electric Motor Manufacturing Co., Ltd., Taiyuan, Shanxi 030000 (CN)
(72) Inventor: ZHANG, Wenhe, Taiyuan, Shanxi 030000 (CN); MA, Liya, Taiyuan, Shanxi 030000 (CN); CHEN, Pu, Taiyuan, Shanxi 030000 (CN); JIA, Jianping, Taiyuan, Shanxi 030000 (CN); WU, Zeyong, Taiyuan, Shanxi 030000 (CN); DENG, Hongwei, Taiyuan, Shanxi 030000 (CN); ZHANG, Wenhua, Taiyuan, Shanxi 030000 (CN); FENG, Jianping, Taiyuan, Shanxi 030000 (CN); JIA, Yuqing, Taiyuan, Shanxi 030000 (CN); LIU, Lanbing, Taiyuan, Shanxi 030000 (CN); WU, Dongmin, Taiyuan, Shanxi 030000 (CN); YANG, Chuangzhao, Taiyuan, Shanxi 030000 (CN); GUO, Caiye, Taiyuan, Shanxi 030000 (CN); MA, Changai, Taiyuan, Shanxi 030000 (CN); CHENG, Penghang, Taiyuan, Shanxi 030000 (CN); LIU, Huizhen, Taiyuan, Shanxi 030000 (CN); PEI, Liangyu, Taiyuan, Shanxi 030000 (CN); ZHI, Yan, Taiyuan, Shanxi 030000 (CN); WEN, Zepeng, Taiyuan, Shanxi 030000 (CN); HOU, Zhijian, Taiyuan, Shanxi 030000 (CN); GUO, Baoquan, Taiyuan, Shanxi 030000 (CN); ZHAI, Xijuan, Taiyuan, Shanxi 030000 (CN); CAO, Gailan, Taiyuan, Shanxi 030000 (CN); KONG, Xiangyong, Taiyuan, Shanxi 030000 (CN); GAO, Xiuqing, Taiyuan, Shanxi 030000 (CN); LI, Wei, Taiyuan, Shanxi 030000 (CN); LI, Jun, Taiyuan, Shanxi 030000 (CN); FU, Hongwei, Taiyuan, Shanxi 030000 (CN); YANG, Dashan, Taiyuan, Shanxi 030000 (CN); ZHANG, Hongrong, Taiyuan, Shanxi 030000 (CN); YU, Jin, Taiyuan, Shanxi 030000 (CN); LIU, Jianjun, Taiyuan, Shanxi 030000 (CN)
(74) Representative: Köllner & Partner mbB
(86) International application number: PCT/CN2020/096945
(87) International publication number: WO 2021/004250

(56) References cited:
- CN-U- 201 690 331
- CN-U- 201 690 331
- CN-U- 205 945 464
- CN-U- 207 743 774
- CN-U- 207 743 774
- JP-A- H11 252 841
- Bai Yingjie, Zhuang Sheng-sian , Cui Tian-Xiang . Zhou Juan: "A New Method to Improve the EMF of the Modular Permanent-Magnet Synchronous Machine", Small & Special Electrical Machines, vol. 43, no. 5, 3 June 2015 (2015-06-03), pages 43-46, XP055772254, ISSN: 1004-7018

## Description

### RELATED APPLICATIONS

The present application claims all the priority benefits of the Chinese patent application Nos. 201910612448.1 entitled "A stator lamination with large and small slots", 201910612482.9 entitled "A stator lamination with 4 large and small slots per pole and phase", 201910612469.3 entitled "A stator lamination with 6 large and small slots per pole and phase", 201910612481.4 entitled "A stator lamination with 7 large and small slots per pole and phase", 201910612476.3 entitled "A stator lamination with 8 large and small slots per pole and phase", 201910612449.6 entitled "A stator lamination with 9 large and small slots per pole and phase", which were all filed on July 9, 2019 before the National Intellectual Property Administration, PRC.

### FIELD OF THE INVENTION

The present invention belongs to the technical field of three-phase asynchronous motor, and in particular relates to IE5 three-phase asynchronous motor based on cast aluminum rotor and stator lamination with unequal slots.

### BACKGROUND OF THE INVENTION

In 2014, IEC (International Electro Technical Commission) issued IEC60034-30-1: "energy efficiency classification of single speed and three-phase cage induction motor", in which the energy efficiency of the motor is classified into four levels, IE1, IE2, IE3 and IE4, among which IE4 is the highest level at present.

With the improvement of product performance index requirements in domestic and foreign markets, IE4 motor which is the highest level product in the present market will be replaced by IE5 motor. The target value of IE5 is determined by reducing the loss by 20% on the basis of IE4 level. However, it is difficult to realize IE5 efficiency motor technology, and there are no relevant product standards and practical achievements now. On the basis of IE4 motor, some motor manufacturers have tried to increase the outer diameter of stator lamination, increase the slot area of stator lamination, increase the copper consumption of stator winding, increase the length of stator core, increase the length of motor base, etc., and adopt measures such as cast copper rotor, to enlarge the motor volume and increase the material cost to meet the performance index of IE5 motor. However, it is obvious that such an attempt will inevitably increase the cost of products, and is not in line with the current purpose of energy saving and consumption reduction. CN 207 743 774 U discloses for example a stator core with unequal slots for reduction of core losses.

### SUMMARY OF THE INVENTION

The invention aims to put forward innovative schemes in the aspects of design technology, process realization, etc., so as to innovatively provide IE5 three-phase asynchronous motor based on cast aluminum rotor and stator lamination with unequal slots by effectively reducing core loss, wind friction loss, stray loss and copper loss of stator and rotor of the three-phase asynchronous motor under the premise of maintaining economy.

The IE5 three-phase asynchronous motor based on cast aluminum rotor and stator lamination with unequal slots according to the present invention comprises a shaft, a front end cap, a bearing, a junction box, a stator, a rotor, a motor frame, a rear end cap, a fan and a fan cover, wherein the rotor is installed in the inner cavity of the stator, the center of the rotor is provided with a shaft hole in which the shaft is installed, the bearing installed on the shaft supports the rotor on the front end cap and the rear end cap, wherein:
the rotor is composed of a rotor core and a rotor winding, the rotor core is made by laminating a plurality of rotor laminations, the rotor lamination includes a ring-shaped first substrate, a plurality of closed slots are radially uniformly arranged on the outer ring surface of the first substrate along the circumference direction of the first substrate, all the closed slots of the plurality of rotor laminations together form the rotor winding trunking, aluminum guide strips are cast in the rotor winding trunking and form the rotor winding;
the stator is composed of stator winding and stator core, the stator core is made by laminating a plurality of stator laminations with unequal slots,
the stator lamination with unequal slots includes a ring-shaped second substrate, at least six stator slot groups for placing copper wire are radially and uniformly arranged on the inner ring surface of the second substrate along the circumference direction of the second substrate, the number of stator slots per pole and phase in each stator slot group is at least three, the number and arrangement of the stator slots are one of the following forms: (i) the stator slots per pole and phase in each stator slot group include at least one large stator slot and at least two small stator slots, the large stator slot is arranged in the middle of the stator slot group, the two sides of the large stator slot are respectively arranged with one or more small stator slots, the one or more small stator slots on one side of the large stator slot and the one or more small stator slots on the other side of the large stator slot are symmetrically arranged with respect to the large stator slot; or (ii) the stator slots per pole and phase in each stator slot group include at least one large stator slot, at least two middle stator slots and at least two small stator slots, the large stator slot is arranged in the middle of the stator slot group, the two sides of the large stator slot are respectively arranged with one or more small stator slots, and between the large stator slot and the small stator slot are respectively arranged with one or more middle stator slots, the one or more small stator slots on one side of the large stator slot and the one or more small stator slots on the other side of the large stator slot are respectively symmetrically arranged with respect to the large stator slot, the one or more middle stator slots on one side of the large stator slot and the one or more middle stator slots on the other side of the large stator slot are respectively symmetrically arranged with respect to the large stator slot;
the area of the small stator slot is 80% - 95% of that of the large stator slot, the area of the middle stator slot is between that of the small stator slot and the large stator slot, and the center angles between the adjacent stator slots are equal;
the large stator slot, the middle stator slot and the small stator slot are semi closed shaped slots composed of a rectangular slot, a first isosceles trapezoidal slot, a second isosceles trapezoidal slot and a semicircle slot, one end of the stator slot close to the inner ring surface of the second substrate is set as the rectangular slot, the width of the rectangular slot defining the slot width of the stator lamination is 2.5-4.2mm, the height of the rectangular slot defining the slot height of the stator lamination is 0.9-2.0mm, the second isosceles trapezoidal slot is arranged at the end of the first isosceles trapezoidal slot far from the center of the second substrate, the upper base of the first isosceles trapezoidal slot is collinear with the long side of the rectangular slot, the lower base of the first isosceles trapezoidal slot is collinear with the upper base of the second isosceles trapezoidal slot, the width of the lower base of the first isosceles trapezoidal slot defining the slot shoulder width of the stator lamination is 5-10mm, the angle between the hypotenuse and the lower base of the first isosceles trapezoidal slot defining the slot angle of the stator lamination is 20°-30°, the width of the lower base of the second isosceles trapezoidal slot is 8-15mm, and the height of the second isosceles trapezoidal slot is 12-40mm, the semicircle slot is arranged at the lower base of the second isosceles trapezoidal slot, and the diameter of the semicircle slot is equal to the width of the lower base of the second isosceles trapezoidal slot;
all the large stator slots, the middle stator slot and the small stator slots of the plurality of stator laminations with unequal slots which form the stator core by laminating respectively form a large slot of stator winding, a middle slot of stator winding and a small slot of stator winding, the stator winding coil made of copper wire is embedded in the large slot of stator winding, the middle slot of stator winding and the small slot of stator winding so as to form the stator winding, concave slot wedge or convex slot wedge are respectively blocked in the large slot of stator winding, the middle slot of stator winding and the small slot of stator winding embedded with the stator winding;
the concave slot wedge includes a rectangular main part, a recess provided on the bottom surface of the rectangular main part, and an oblique part provided on both sides of the recess, the width of the rectangular main part is 0.7mm smaller than the slot shoulder width of the stator lamination, the angle between the hypotenuse of the oblique part and the bottom surface of the rectangular main part is equal to the slot angle of the stator lamination, the width of the recess is the same as the slot width of the stator lamination, and the height of the rectangular main part is 1.5-2mm;
the convex slot wedge includes a rectangular main part, an isosceles trapezoidal part provided on the bottom surface of the rectangular main part, and a bump protruding from the isosceles trapezoidal part, the width of the rectangular main part is 1-3 mm smaller than the slot shoulder width of the stator lamination, the width of the bump is 0.1mm smaller than the slot width of the stator lamination, the height of the bump is 0.3mm smaller than the slot height of the stator lamination, the angle between the hypotenuse of the isosceles trapezoidal part and the bottom surface of the rectangular main part is equal to the slot angle of the stator lamination.

Preferably, in the IE5 three-phase asynchronous motor based on cast aluminum rotor and stator lamination with unequal slots of the invention, the number of stator slots per pole and phase in each stator slot group is three, including one large stator slot and two small stator slots, the one large stator slot is arranged in the middle of the stator slot group, and the two sides of the one large stator slot are respectively symmetrically arranged with one small stator slot, the one small stator slot on one side of the large stator slot and the one small stator slot on the other side of the large stator slot are symmetrically arranged with respect to the large stator slot in the middle position.

Preferably, in the IE5 three-phase asynchronous motor based on cast aluminum rotor and stator lamination with unequal slots of the invention, the number of stator slots per pole and phase in each stator slot group is four, including two large stator slots and two small stator slots, the two large stator slots are arranged in the middle of the stator slot group, and the two sides of the two large stator slots are respectively symmetrically arranged with one small stator slot, the one small stator slot on one side of the two large stator slots and the one small stator slot on the other side of the two large stator slots are symmetrically arranged with respect to the center line of the two large stator slots along the circumference direction of the second substrate.

Preferably, in the IE5 three-phase asynchronous motor based on cast aluminum rotor and stator lamination with unequal slots of the invention, the number of stator slots per pole and phase in each stator slot group is five, including large stator slots and small stator slots, and the number and arrangement of the large stator slots and the small stator slots are one or more of the following forms:
(i) the five stator slots per pole and phase in each stator slot group include one large stator slot and four small stator slots, the one large stator slot is arranged in the middle of the stator slot group, and the two sides of the large stator slot are respectively symmetrically arranged with two small stator slots, the two small stator slots on one side of the large stator slot and the two small stator slots on the other side of the large stator slot are symmetrically arranged with respect to the large stator slot in the middle position;
(ii) the five stator slots per pole and phase in each stator slot group include three large stator slot and two small stator slots, the three large stator slot are arranged in the middle of the stator slot group, and the two sides of the three large stator slots are respectively symmetrically arranged with one small stator slot, the one small stator slot on one side of the three large stator slots and the one small stator slot on the other side of the three large stator slots are symmetrically arranged with respect to the large stator slot in the middle position.

Preferably, in the IE5 three-phase asynchronous motor based on cast aluminum rotor and stator lamination with unequal slots of the invention, the number of stator slots per pole and phase in each stator slot group is six, including large stator slots and small stator slots, and the number and arrangement of the large stator slots and the small stator slots are one or more of the following forms:
(i) the six stator slots per pole and phase in each stator slot group include two large stator slots and four small stator slots, the two large stator slots are arranged in the middle of the stator slot group, and the two sides of the two large stator slots are respectively symmetrically arranged with two small stator slots, the two small stator slots on one side of the two large stator slots and the two small stator slots on the other side of the two large stator slots are symmetrically arranged with respect to the center line of the two large stator slots along the circumference direction of the second substrate;
(ii) the six stator slots per pole and phase in each stator slot group include four large stator slots and two small stator slots, the four large stator slots are arranged in the middle of the stator slot group, and the two sides of the four large stator slots are respectively symmetrically arranged with one small stator slot, the one small stator slot on one side of the four large stator slots and the one small stator slot on the other side of the four large stator slots are symmetrically arranged with respect to the center line of the four large stator slots along the circumference direction of the second substrate.

Preferably, in the IE5 three-phase asynchronous motor based on cast aluminum rotor and stator lamination with unequal slots of the invention, the number of stator slots per pole and phase in each stator slot group is seven, including large stator slots and small stator slots, and the number and arrangement of the large stator slots and the small stator slots are one or more of the following forms:
(i) the seven stator slots per pole and phase in each stator slot group include one large stator slot and six small stator slots, the one large stator slot is arranged in the middle of the stator slot group, and the two sides of the large stator slot are respectively symmetrically arranged with three small stator slots, the three small stator slots on one side of the large stator slot and the three small stator slots on the other side of the large stator slot are symmetrically arranged with respect to the large stator slot in the middle position;
(ii) the seven stator slots per pole and phase in each stator slot group include three large stator slots and four small stator slots, the three large stator slots are arranged in the middle of the stator slot group, and the two sides of the three large stator slots are respectively symmetrically arranged with two small stator slots, the two small stator slots on one side of the three large stator slots and the two small stator slots on the other side of the three large stator slots are symmetrically arranged with respect to the large stator slot in the middle position;
(iii) the seven stator slots per pole and phase in each stator slot group include five large stator slots and two small stator slots, the five large stator slots are arranged in the middle of the stator slot group, and the two sides of the five large stator slots are respectively symmetrically arranged with one small stator slot, the one small stator slot on one side of the five large stator slots and the one small stator slot on the other side of the five large stator slots are symmetrically arranged with respect to the large stator slot in the middle position.

Preferably, in the IE5 three-phase asynchronous motor based on cast aluminum rotor and stator lamination with unequal slots of the invention, the number of stator slots per pole and phase in each stator slot group is eight, including large stator slots and small stator slots, and the number and arrangement of the large stator slots and the small stator slots are one or more of the following forms:
(i) the eight stator slots per pole and phase in each stator slot group include two large stator slots and six small stator slots, the two large stator slots are arranged in the middle of the stator slot group, and the two sides of the two large stator slots are respectively symmetrically arranged with three small stator slots, the three small stator slots on one side of the two large stator slots and the three small stator slots on the other side of the two large stator slots are symmetrically arranged with respect to the center line of the two large stator slots along the circumference direction of the second substrate;
(ii) the eight stator slots per pole and phase in each stator slot group include four large stator slots and four small stator slots, the four large stator slots are arranged in the middle of the stator slot group, and the two sides of the four large stator slots are respectively symmetrically arranged with two small stator slots, the two small stator slots on one side of the four large stator slots and the two small stator slots on the other side of the four large stator slots are symmetrically arranged with respect to the center line of the four large stator slots along the circumference direction of the second substrate;
(iii) the eight stator slots per pole and phase in each stator slot group include six large stator slots and two small stator slots, the six large stator slots are arranged in the middle of the stator slot group, and the two sides of the six large stator slots are respectively symmetrically arranged with one small stator slot, the one small stator slot on one side of the six large stator slots and the one small stator slot on the other side of the six large stator slots are symmetrically arranged with respect to the center line of the six large stator slots along the circumference direction of the second substrate.

Preferably, in the IE5 three-phase asynchronous motor based on cast aluminum rotor and stator lamination with unequal slots of the invention, the number of stator slots per pole and phase in each stator slot group is nine, including large stator slots and small stator slots, and the number and arrangement of the large stator slots and the small stator slots are one or more of the following forms:
(i) the nine stator slots per pole and phase in each stator slot group include one large stator slot and eight small stator slots, the one large stator slot is arranged in the middle of the stator slot group, and the two sides of the large stator slot are respectively symmetrically arranged with four small stator slots, the four small stator slots on one side of the large stator slot and the four small stator slots on the other side of the large stator slot are symmetrically arranged with respect to the large stator slot in the middle position;
(ii) the nine stator slots per pole and phase in each stator slot group include three large stator slots and six small stator slots, the three large stator slots are arranged in the middle of the stator slot group, and the two sides of the three large stator slots are respectively symmetrically arranged with three small stator slots, the three small stator slots on one side of the three large stator slots and the three small stator slots on the other side of the three large stator slots are symmetrically arranged with respect to the large stator slot in the middle position;
(iii) the nine stator slots per pole and phase in each stator slot group include five large stator slots and four small stator slots, the five large stator slots are arranged in the middle of the stator slot group, and the two sides of the five large stator slots are respectively symmetrically arranged with two small stator slots, the two small stator slots on one side of the five large stator slots and the two small stator slots on the other side of the five large stator slots are symmetrically arranged with respect to the large stator slot in the middle position;
(iv) the nine stator slots per pole and phase in each stator slot group include seven large stator slots and two small stator slots, the seven large stator slots are arranged in the middle of the stator slot group, and the two sides of the seven large stator slots are respectively symmetrically arranged with one small stator slot, the one small stator slot on one side of the seven large stator slots and the one small stator slot on the other side of the seven large stator slots are symmetrically arranged with respect to the large stator slot in the middle position.

Preferably, in the IE5 three-phase asynchronous motor based on cast aluminum rotor and stator lamination with unequal slots of the invention, the number of stator slots per pole and phase in each stator slot group is five, including one large stator slot, two middle stator slots and two small stator slots, the one large stator slot is arranged in the middle of the stator slot group, the two sides of the large stator slot are respectively arranged with one small stator slot, and between the large stator slot and the small stator slot are respectively arranged with one middle stator slot, the one small stator slot on one side of the large stator slot and the one small stator slot on the other side of the large stator slot are symmetrically arranged with respect to the large stator slot in the middle position, and the one middle stator slot on one side of the large stator slot and the one middle stator slot on the other side of the large stator slot are symmetrically arranged with respect to the large stator slot in the middle position.

Preferably, in the IE5 three-phase asynchronous motor based on cast aluminum rotor and stator lamination with unequal slots of the invention, the number of stator slots per pole and phase in each stator slot group is six, including two large stator slots, two middle stator slots and two small stator slots, the two large stator slots are arranged in the middle of the stator slot group, the two sides of the two large stator slots are respectively arranged with one small stator slot, and between the large stator slot and the small stator slot are respectively arranged with one middle stator slot, the one small stator slot on one side of the two large stator slots and the one small stator slot on the other side of the two large stator slots are symmetrically arranged with respect to the center line of the two large stator slots along the circumference direction of the second substrate, and the one middle stator slot on one side of the two large stator slots and the one middle stator slot on the other side of the two large stator slots are symmetrically arranged with respect to the center line of the two large stator slots along the circumference direction of the second substrate.

Preferably, in the IE5 three-phase asynchronous motor based on cast aluminum rotor and stator lamination with unequal slots of the invention, the number of stator slots per pole and phase in each stator slot group is seven, including large stator slots, middle stator slots and small stator slots, and the number and arrangement of the large stator slots, the middle stator slot and the small stator slots are one or more of the following forms:
(i) the seven stator slots per pole and phase in each stator slot group include one large stator slot, two middle stator slots and four small stator slots, the one large stator slot is arranged in the middle of the stator slot group, the two sides of the large stator slot are respectively arranged with two small stator slots, and between the large stator slot and the small stator slot are respectively arranged with one middle stator slot, the two small stator slots on one side of the large stator slot and the two small stator slots on the other side of the large stator slot are symmetrically arranged with respect to the large stator slot in the middle position, and the one middle stator slot on one side of the large stator slot and the one middle stator slot on the other side of the large stator slot are symmetrically arranged with respect to the large stator slot in the middle position;
(ii) the seven stator slots per pole and phase in each stator slot group include three large stator slots, two middle stator slots and two small stator slots, the three large stator slots are arranged in the middle of the stator slot group, the two sides of the three large stator slots are respectively arranged with one small stator slot, and between the large stator slot and the small stator slot are respectively arranged with one middle stator slot, the one small stator slot on one side of the three large stator slots and the one small stator slot on the other side of the three large stator slots are symmetrically arranged with respect to the large stator slot in the middle position, and the one middle stator slot on one side of the three large stator slots and the one middle stator slot on the other side of the three large stator slots are symmetrically arranged with respect to the large stator slot in the middle position;
(iii) the seven stator slots per pole and phase in each stator slot group include one large stator slot, four middle stator slots and two small stator slots, the one large stator slot is arranged in the middle of the stator slot group, the two sides of the large stator slot are respectively arranged with one small stator slot, and between the large stator slot and the small stator slot are respectively arranged with two middle stator slots, the one small stator slot on one side of the large stator slot and the one small stator slot on the other side of the large stator slot are symmetrically arranged with respect to the large stator slot in the middle position, and the two middle stator slots on one side of the large stator slot and the two middle stator slots on the other side of the large stator slot are symmetrically arranged with respect to the large stator slot in the middle position.

Preferably, in the IE5 three-phase asynchronous motor based on cast aluminum rotor and stator lamination with unequal slots of the invention, the number of stator slots per pole and phase in each stator slot group is eight, including large stator slots, middle stator slots and small stator slots, and the number and arrangement of the large stator slots, the middle stator slot and the small stator slots are one or more of the following forms:
(i) the eight stator slots per pole and phase in each stator slot group include four large stator slots, two middle stator slots and two small stator slots, the four large stator slots are arranged in the middle of the stator slot group, the two sides of the four large stator slots are respectively arranged with one small stator slot, and between the large stator slot and the small stator slot are respectively arranged with one middle stator slot, the one small stator slot on one side of the four large stator slots and the one small stator slot on the other side of the four large stator slots are symmetrically arranged with respect to the center line of the four large stator slots along the circumference direction of the second substrate, and the one middle stator slot on one side of the four large stator slots and the one middle stator slot on the other side of the four large stator slots are symmetrically arranged with respect to the center line of the four large stator slots along the circumference direction of the second substrate;
(ii) the eight stator slots per pole and phase in each stator slot group include two large stator slots, four middle stator slots and two small stator slots, the two large stator slots are arranged in the middle of the stator slot group, the two sides of the two large stator slots are respectively arranged with one small stator slot, and between the large stator slot and the small stator slot are respectively arranged with two middle stator slots, the one small stator slot on one side of the two large stator slots and the one small stator slot on the other side of the two large stator slots are symmetrically arranged with respect to the center line of the two large stator slots along the circumference direction of the second substrate, and the two middle stator slots on one side of the two large stator slots and the two middle stator slots on the other side of the two large stator slots are symmetrically arranged with respect to the center line of the two large stator slots along the circumference direction of the second substrate.

Preferably, in the IE5 three-phase asynchronous motor based on cast aluminum rotor and stator lamination with unequal slots of the invention, the number of stator slots per pole and phase in each stator slot group is nine, including large stator slots, middle stator slots and small stator slots, and the number and arrangement of the large stator slots, the middle stator slot and the small stator slots are one or more of the following forms:
(i) the nine stator slots per pole and phase in each stator slot group include one large stator slot, two middle stator slots and six small stator slots, the one large stator slot is arranged in the middle of the stator slot group, the two sides of the large stator slot are respectively arranged with three small stator slots, and between the large stator slot and the small stator slot are respectively arranged with one middle stator slot, the three small stator slots on one side of the large stator slot and the three small stator slots on the other side of the large stator slot are symmetrically arranged with respect to the large stator slot in the middle position, and the one middle stator slot on one side of the large stator slot and the one middle stator slot on the other side of the large stator slot are symmetrically arranged with respect to the large stator slot in the middle position;
(ii) the nine stator slots per pole and phase in each stator slot group include three large stator slots, two middle stator slots and four small stator slots, the three large stator slots are arranged in the middle of the stator slot group, the two sides of the three large stator slots are respectively arranged with two small stator slots, and between the large stator slot and the small stator slot are respectively arranged with one middle stator slot, the two small stator slots on one side of the three large stator slots and the two small stator slots on the other side of the three large stator slots are symmetrically arranged with respect to the large stator slot in the middle position, and the one middle stator slot on one side of the three large stator slots and the one middle stator slot on the other side of the three large stator slots are symmetrically arranged with respect to the large stator slot in the middle position;
(iii) the nine stator slots per pole and phase in each stator slot group include five large stator slots, two middle stator slots and two small stator slots, the five large stator slots are arranged in the middle of the stator slot group, the two sides of the five large stator slots are respectively arranged with one small stator slot, and between the large stator slot and the small stator slot are respectively arranged with one middle stator slot, the one small stator slot on one side of the five large stator slots and the one small stator slot on the other side of the five large stator slots are symmetrically arranged with respect to the large stator slot in the middle position, and the one middle stator slot on one side of the five large stator slots and the one middle stator slot on the other side of the five large stator slots are symmetrically arranged with respect to the large stator slot in the middle position;
(iv) the nine stator slots per pole and phase in each stator slot group include one large stator slot, four middle stator slots and four small stator slots, the one large stator slot is arranged in the middle of the stator slot group, the two sides of the large stator slot are respectively arranged with two small stator slots, and between the large stator slot and the small stator slot are respectively arranged with two middle stator slots, the two small stator slots on one side of the large stator slot and the two small stator slots on the other side of the large stator slot are symmetrically arranged with respect to the large stator slot in the middle position, and the two middle stator slots on one side of the large stator slot and the two middle stator slots on the other side of the large stator slot are symmetrically arranged with respect to the large stator slot in the middle position;
(v) the nine stator slots per pole and phase in each stator slot group include three large stator slots, four middle stator slots and two small stator slots, the three large stator slots are arranged in the middle of the stator slot group, the two sides of the three large stator slots are respectively arranged with one small stator slot, and between the large stator slot and the small stator slot are respectively arranged with two middle stator slots, the one small stator slot on one side of the three large stator slots and the one small stator slot on the other side of the three large stator slots are symmetrically arranged with respect to the large stator slot in the middle position, and the two middle stator slots on one side of the three large stator slots and the two middle stator slots on the other side of the three large stator slots are symmetrically arranged with respect to the large stator slot in the middle position;
(vi) the nine stator slots per pole and phase in each stator slot group include one large stator slot, six middle stator slots and two small stator slots, the one large stator slot is arranged in the middle of the stator slot group, the two sides of the large stator slot are respectively arranged with one small stator slot, and between the large stator slot and the small stator slot are respectively arranged with three middle stator slots, the one small stator slot on one side of the large stator slot and the one small stator slot on the other side of the large stator slot are symmetrically arranged with respect to the large stator slot in the middle position, and the three middle stator slots on one side of the large stator slot and the three middle stator slots on the other side of the large stator slot are symmetrically arranged with respect to the large stator slot in the middle position.

Preferably, in the IE5 three-phase asynchronous motor based on cast aluminum rotor and stator lamination with unequal slots of the invention, 8-16 buckle grooves are uniformly arranged on the outer ring surface of the second substrate along the circumference direction of the second substrate to install the buckle, the lower base of the buckle groove is set as a straight line, the upper base of the buckle groove is naturally opened along the circumference direction of the second substrate, the width of the buckle groove is 14-25mm, the height of the buckle groove is 3-5mm, the angle between the hypotenuse and the base of the buckle groove is 15°-25°, and a processing groove is set at the bottom of any one of the buckle groove.

Compared with the prior art, the beneficial effects of the invention include:
1. In the IE5 three-phase asynchronous motor based on cast aluminum rotor and stator lamination with unequal slots of the invention, the number of stator slots per pole and phase in each stator slot group can be three, four, five, six, seven, eight and nine. These stator slots include large stator slot, middle stator slot and small stator slot with different surface area, this can greatly improve the embedding process and quality of the unequal turns winding and therefore the invention can greatly improve the utilization rate of stator slot, improve the distribution mechanism of yoke magnetic density of stator lamination, reduce the core loss and the stray loss of motor, improve the starting performance of motor, reduce the temperature rise of motor, improve the efficiency of motor, and save the overall cost of motor;
2. In the IE5 three-phase asynchronous motor based on cast aluminum rotor and stator lamination with unequal slots of the invention, the rotor winding trunking formed by all the closed slots of the plurality of rotor laminations which are laminated to form the rotor core is cast therein with aluminum guide strips through low-voltage aluminum casting process, and the aluminum guide strips form the rotor winding of the rotor. The use of the cast aluminum rotor made by low-voltage aluminum casting process, the copper loss of the rotor can be reduced by at least 15% and the average stray loss can be reduced by more than 25%, compared with the conventional aluminum casting process;
3. In the IE5 three-phase asynchronous motor based on cast aluminum rotor and stator lamination with unequal slots of the invention, concave slot wedge or convex slot wedge is used to block the slot of stator. For concave slot wedge, since there is a hollow recess between the concave slot wedge and the rotor, the axial ventilation effect between the stator and the rotor can be improved and therefore the temperature rise of the motor is significantly reduced while the electrical reliability and heat transfer capacity of the motor are improved. In addition, when the concave slot wedge is used, the slot fullness is high and the winding integrity is good. For convex slot wedge, due to the provision of the bump, the slot width is reduced which weakens the cogging effect, therefore the surface loss and pulsation loss of the rotor core on the stator are reduced and the efficiency of the motor is significantly improved.

According to the test data of the IE5 three-phase asynchronous motor based on cast aluminum rotor and stator lamination with unequal slots of the present invention, the copper saving is measured to be 0.1-0.25kg/kW, and the efficiency of the motor reaches the efficiency value of IE5 standard as specified in IEC60034-30-1 "energy efficiency classification of single speed and three-phase cage induction motor" issued by IEC (International Electro Technical Commission) in 2014.

### BRIEF DESCRIPTION OF THE DRAWINGS

In order to explain the embodiments of the invention or the technical solutions in the prior art more clearly, the following will give a brief introduction to the drawings needed in the embodiments or the prior art description. It is obvious that the drawings in the following description are only some embodiments of the invention, and for those skilled in the art, they can also give other drawings based on the drawings without creative works. In the drawings:
Fig. 1 is a schematic diagram of overall structure of the IE5 three-phase asynchronous motor based on cast aluminum rotor and stator lamination with unequal slots of the invention.
Fig. 2 is a structural diagram of the cast aluminum rotor in the IE5 three-phase asynchronous motor based on cast aluminum rotor and stator lamination with unequal slots of the invention.
Fig. 3 is a structural diagram of the rotor lamination used in the IE5 three-phase asynchronous motor based on cast aluminum rotor and stator lamination with unequal slots of the invention.
Fig. 4 is a structural diagram of the stator in the IE5 three-phase asynchronous motor based on cast aluminum rotor and stator lamination with unequal slots of the invention.
Fig. 5 is a structural diagram of the stator lamination with unequal slots used in the IE5 three-phase asynchronous motor based on cast aluminum rotor and stator lamination with unequal slots in embodiment 1 of the invention.
Fig. 6 is a schematic diagram of the slot shape comparison after partial amplification and superposition of part I and part II in Fig. 5, in which the double dot line is the slot shape contour line of small stator slot and the solid line is the slot shape contour line of large stator slot.
Fig. 7 is a partial enlarged structural diagram of Part III in Fig. 5, showing the buckle groove and the processing groove.
Fig. 8 is a schematic diagram of concave slot wedge used in the IE5 three-phase asynchronous motor based on cast aluminum rotor and stator lamination with unequal slots of the invention, showing the installation status of the concave slot wedge in the stator slot.
Fig. 9 is a structural diagram of the concave slot wedge in Fig. 8.
Fig. 10 is a schematic diagram of convex slot wedge used in the IE5 three-phase asynchronous motor based on cast aluminum rotor and stator lamination with unequal slots of the invention, showing the installation status of the convex slot wedge in the stator slot.
Fig. 11 is a structural diagram of the convex slot wedge in Fig. 10.
Fig. 12 is a structural diagram of the stator lamination with unequal slots used in the IE5 three-phase asynchronous motor based on cast aluminum rotor and stator lamination with unequal slots in embodiment 2 of the invention.
Fig. 13 is a structural diagram of the stator lamination with unequal slots used in the IE5 three-phase asynchronous motor based on cast aluminum rotor and stator lamination with unequal slots in embodiment 3 of the invention.
Fig. 14 is a structural diagram of the stator lamination with unequal slots used in the IE5 three-phase asynchronous motor based on cast aluminum rotor and stator lamination with unequal slots in embodiment 4 of the invention.
Fig. 15 is a structural diagram of the stator lamination with unequal slots used in the IE5 three-phase asynchronous motor based on cast aluminum rotor and stator lamination with unequal slots in embodiment 5 of the invention.
Fig. 16 is a schematic diagram of the slot shape comparison after partial amplification and superposition of part I, part II and Part III in Fig. 15, in which the double dot line is the slot shape contour line of small stator slot, the dotted line is the slot shape contour line of middle stator slot, and the solid line is the slot shape contour line of large stator slot.
Fig. 17 is a structural diagram of the stator lamination with unequal slots used in the IE5 three-phase asynchronous motor based on cast aluminum rotor and stator lamination with unequal slots in embodiment 6 of the invention.
Fig. 18 is a structural diagram of the stator lamination with unequal slots used in the IE5 three-phase asynchronous motor based on cast aluminum rotor and stator lamination with unequal slots in embodiment 7 of the invention.
Fig. 19 is a structural diagram of the stator lamination with unequal slots used in the IE5 three-phase asynchronous motor based on cast aluminum rotor and stator lamination with unequal slots in embodiment 8 of the invention.
Fig. 20 is a structural diagram of the stator lamination with unequal slots used in the IE5 three-phase asynchronous motor based on cast aluminum rotor and stator lamination with unequal slots in embodiment 9 of the invention.
Fig. 21 is a structural diagram of the stator lamination with unequal slots used in the IE5 three-phase asynchronous motor based on cast aluminum rotor and stator lamination with unequal slots in embodiment 10 of the invention.
Fig. 22 is a structural diagram of the stator lamination with unequal slots used in the IE5 three-phase asynchronous motor based on cast aluminum rotor and stator lamination with unequal slots in embodiment 11 of the invention.
Fig. 23 is a structural diagram of the stator lamination with unequal slots used in the IE5 three-phase asynchronous motor based on cast aluminum rotor and stator lamination with unequal slots in embodiment 12 of the invention.
Fig. 24 is a structural diagram of the stator lamination with unequal slots used in the IE5 three-phase asynchronous motor based on cast aluminum rotor and stator lamination with unequal slots in embodiment 13 of the invention.
Fig. 25 is a structural diagram of the stator lamination with unequal slots used in the IE5 three-phase asynchronous motor based on cast aluminum rotor and stator lamination with unequal slots in embodiment 14 of the invention.
Fig. 26 is a structural diagram of the stator lamination with unequal slots used in the IE5 three-phase asynchronous motor based on cast aluminum rotor and stator lamination with unequal slots in embodiment 15 of the invention.
Fig. 27 is a structural diagram of the stator lamination with unequal slots used in the IE5 three-phase asynchronous motor based on cast aluminum rotor and stator lamination with unequal slots in embodiment 16 of the invention.
Fig. 28 is a structural diagram of the stator lamination with unequal slots used in the IE5 three-phase asynchronous motor based on cast aluminum rotor and stator lamination with unequal slots in embodiment 17 of the invention.
Fig. 29 is a structural diagram of the stator lamination with unequal slots used in the IE5 three-phase asynchronous motor based on cast aluminum rotor and stator lamination with unequal slots in embodiment 18 of the invention.
Fig. 30 is a structural diagram of the stator lamination with unequal slots used in the IE5 three-phase asynchronous motor based on cast aluminum rotor and stator lamination with unequal slots in embodiment 19 of the invention.
Fig. 31 is a structural diagram of the stator lamination with unequal slots used in the IE5 three-phase asynchronous motor based on cast aluminum rotor and stator lamination with unequal slots in embodiment 20 of the invention.
Fig. 32 is a structural diagram of the stator lamination with unequal slots used in the IE5 three-phase asynchronous motor based on cast aluminum rotor and stator lamination with unequal slots in embodiment 21 of the invention.
Fig. 33 is a structural diagram of the stator lamination with unequal slots used in the IE5 three-phase asynchronous motor based on cast aluminum rotor and stator lamination with unequal slots in embodiment 22 of the invention.
Fig. 34 is a structural diagram of the stator lamination with unequal slots used in the IE5 three-phase asynchronous motor based on cast aluminum rotor and stator lamination with unequal slots in embodiment 23 of the invention.
Fig. 35 is a structural diagram of the stator lamination with unequal slots used in the IE5 three-phase asynchronous motor based on cast aluminum rotor and stator lamination with unequal slots in embodiment 24 of the invention.
Fig. 36 is a structural diagram of the stator lamination with unequal slots used in the IE5 three-phase asynchronous motor based on cast aluminum rotor and stator lamination with unequal slots in embodiment 25 of the invention.
Fig. 37 is a structural diagram of the stator lamination with unequal slots used in the IE5 three-phase asynchronous motor based on cast aluminum rotor and stator lamination with unequal slots in embodiment 26 of the invention.
Fig. 38 is a structural diagram of the stator lamination with unequal slots used in the IE5 three-phase asynchronous motor based on cast aluminum rotor and stator lamination with unequal slots in embodiment 27 of the invention.
Fig. 39 is a structural diagram of the stator lamination with unequal slots used in the IE5 three-phase asynchronous motor based on cast aluminum rotor and stator lamination with unequal slots in embodiment 28 of the invention.
Fig. 40 is a structural diagram of the stator lamination with unequal slots used in the IE5 three-phase asynchronous motor based on cast aluminum rotor and stator lamination with unequal slots in embodiment 29 of the invention.

Description of Symbols in the drawings:
100-shaft, 101-front end cap, 102-bearing, 103junction box, 104-stator, 105-rotor, 106-motor frame, 107-rear end cap, 108-fan, 109- fan cover;
1051-rotor core, 1052-rotor winding, 11-first substrate, 12-closed slot, 13-aluminum guide strip;
1041-stator winding, 1042-stator core, 1-second substrate, 2-stator slot group, 21-rectangular slot, 22-first isosceles trapezoidal slot, 23-second isosceles trapezoidal slot, 24-semicircle slot, 25-small stator slot, 26-large stator slot, 27-middle stator slot, 3-buckle groove, 4-processing groove, 30-concave slot wedge, 301-rectangular main part, 302-recess, 303-oblique part, 40-convex slot wedge, 401-rectangular main part, 402- isosceles trapezoidal part, 403-bump.

### DETAILED DESCRIPTION OF THE EMBODIMENTS

In order to make the object, technical solution and advantages of the invention clearer, the technical solution of the invention will be described completely in combination with the embodiments of the invention and the corresponding drawings. Obviously, the described embodiments are only part of the embodiments of the invention, not all of them. Based on the embodiments of the invention, all other embodiments obtained by those skilled in the art without creative works belong to the protection scope of the invention.

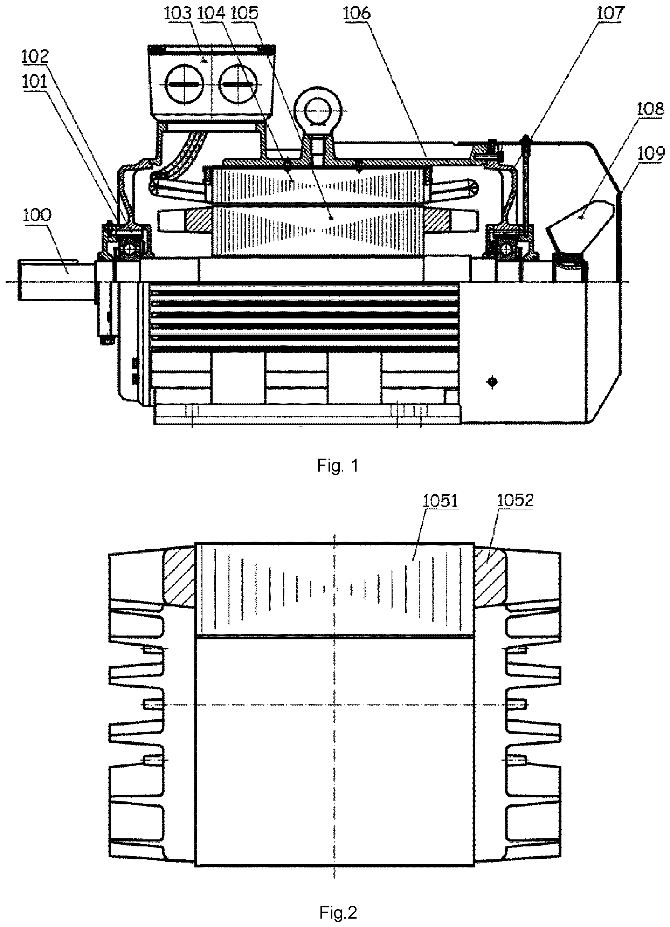

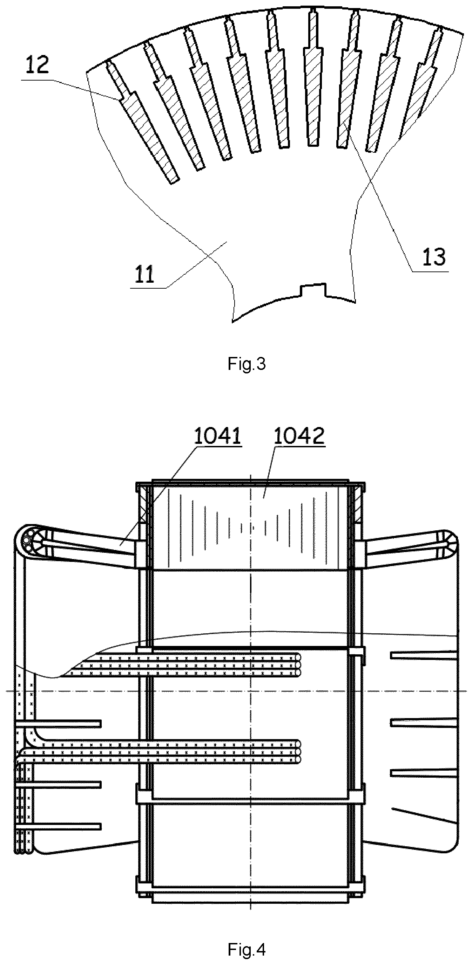

As shown in Fig. 1, Fig. 2, Fig. 3 and Fig. 4, the IE5 three-phase asynchronous motor based on cast aluminum rotor and stator lamination with unequal slots of the invention comprises a shaft 100, a front end cap 101, a bearing 102, a junction box 103, a stator 104, a rotor 105, a motor frame 106, a rear end cap 107, a fan 108 and a fan cover 109. Both the stator 104 and the rotor 105 are cylindrical in shape. The rotor 105 is installed in the inner cavity of the stator 104. The center of the rotor 105 is provided with a shaft hole. The shaft 100 is installed in the shaft hole of the rotor 105. The bearing 102 installed on the shaft 100 supports the rotor 105 on the front end cap 101 and the rear end cap 107.

The rotor 105 is mainly composed of a rotor core 1051 and a rotor winding 1052. The rotor core 1051 is made by laminating a plurality of rotor laminations. The rotor lamination includes a ring-shaped first substrate 11. A plurality of closed slots 12, such as 38-82 closed slots 12, are radially uniformly arranged on the outer ring surface of the first substrate 11 along the circumference direction of the first substrate 11. All the closed slots 12 of the plurality of rotor laminations together form the rotor winding trunking. Aluminum guide strips 13 are cast in the rotor winding trunking through low-voltage aluminum casting process. The aluminum guide strips 13 form the rotor winding 1052 of the rotor 105. The aluminum guide strip 13 produced by low-voltage aluminum casting process has high compactness.

The stator 104 is mainly composed of stator winding 1041 and stator core 1042. The stator core 1042 is made by laminating a plurality of stator laminations with unequal slots, and the stator winding 1041 made of copper wire is embedded in the stator slot of the stator lamination with unequal slots.

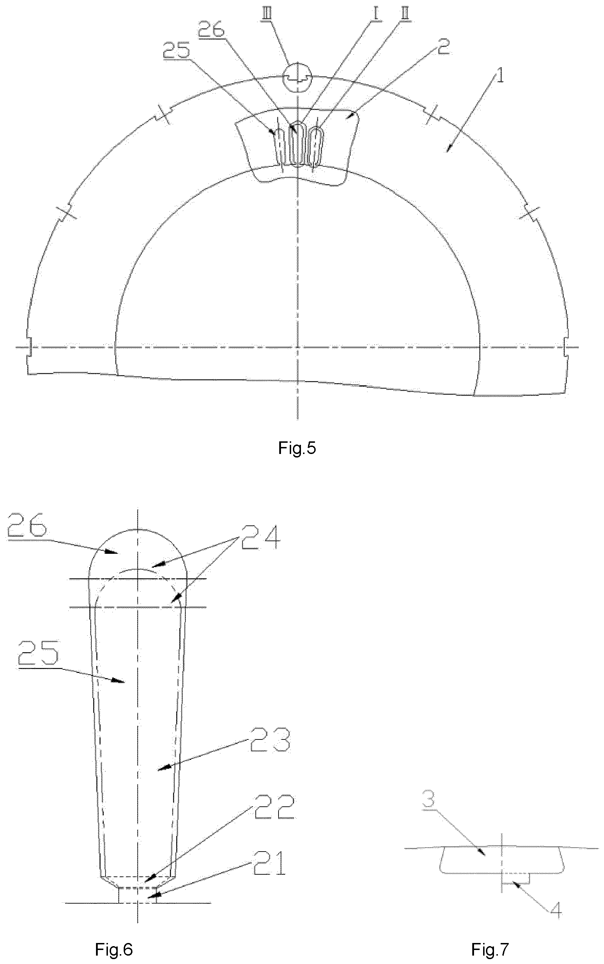

As shown in Fig. 5 to Fig. 40, the stator lamination with unequal slots used in the IE5 three-phase asynchronous motor based on cast aluminum rotor and stator lamination with unequal slots of the invention has two main modes of implementation under the same concept of invention:
(1) Each stator slot group on the stator lamination with unequal slots includes a plurality of large stator slots and small stator slots. Specifically, the stator lamination with unequal slots includes a ring-shaped second substrate 1, and at least six stator slot groups 2 for placing copper wire are radially and uniformly arranged on the inner ring surface of the second substrate 1 along the circumference direction of the second substrate 1. The number of stator slots per pole and phase in each stator slot group 2 is three to nine, including at least one large stator slot 26 and at least two small stator slots 25. The area of the small stator slot 25 is 80% - 95% of that of the large stator slot 26 and the center angles between the adjacent stator slots are equal. The arrangement of the large stator slot 26 and the small stator slot 25 in each stator slot group 2 is as follows: the at least one large stator slot 26 is arranged in the middle of the stator slot group 2, and the two sides of the large stator slot 26 are respectively symmetrically arranged with one or more small stator slots 25, the one or more small stator slots 25 on one side of the large stator slot 26 and the one or more small stator slots 25 on the other side of the large stator slot 26 are symmetrically arranged with respect to the large stator slot 26. The large stator slot 26 and the small stator slot 25 are semi closed slots composed of a rectangular slot 21, a first isosceles trapezoidal slot 22, a second isosceles trapezoidal slot 23 and a semicircle slot 24, wherein, one end of the large stator slot 26 and the small stator slot 25 close to the inner ring surface of the second substrate 1 is set as the rectangular slot 21, the width of the rectangular slot 21 defining the slot width of the stator lamination is 2.5-4.2mm, the height of the rectangular slot 21 defining the slot height of the stator lamination is 0.9-2.0mm, the second isosceles trapezoidal slot 23 is arranged at the end of the first isosceles trapezoidal slot 22 far from the center of the second substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 defining the slot shoulder width of the stator lamination is 5-10mm, the angle between the hypotenuse and the lower base of the first isosceles trapezoidal slot 22 defining the slot angle of the stator lamination is 20°-30°, the width of the lower base of the second isosceles trapezoidal slot 23 is 8-15mm, and the height of the second isosceles trapezoidal slot 23 is 12-40mm, the semicircle slot 24 is arranged at the lower base of the second isosceles trapezoidal slot 23, and the diameter of the semicircle slot 24 is equal to the width of the lower base of the second isosceles trapezoidal slot 23.
(2) Each stator slot group on the stator lamination with unequal slots includes a plurality of large stator slots, middle stator slots and small stator slots. Specifically, the stator lamination with unequal slots includes a ring-shaped second substrate 1, and at least six stator slot groups 2 for placing copper wire are radially and uniformly arranged on the inner ring surface of the second substrate 1 along the circumference direction of the second substrate 1. The number of stator slots per pole and phase in each stator slot group 2 is five to nine, including at least one large stator slot 26, at least two middle stator slots 27 and at least two small stator slots 25, The area of the small stator slot 25 is 80% - 95% of that of the large stator slot 26, the area of the middle stator slot 27 is between that of the small stator slot 25 and the large stator slot 26, and the center angles between the adjacent stator slots are equal. The arrangement of the large stator slot 26, the middle stator slot 27 and the small stator slot 25 in each stator slot group 2 is as follows: the at least one large stator slot 26 is arranged in the middle of the stator slot group 2, the two sides of the large stator slot 26 are respectively symmetrically arranged with one or more small stator slots 25, and between the large stator slot 26 and the small stator slot 25 are respectively symmetrically arranged with one or more middle stator slots 27, the one or more small stator slots 25 on one side of the large stator slot 26 and the one or more small stator slots 25 on the other side of the large stator slot 26 are respectively symmetrically arranged with respect to the large stator slot 26, the one or more middle stator slots 27 on one side of the large stator slot 26 and the one or more middle stator slots 27 on the other side of the large stator slot 26 are respectively symmetrically arranged with respect to the large stator slot 26. The large stator slot 26, the middle stator slot 27 and the small stator slot 25 are semi closed slots composed of a rectangular slot 21, a first isosceles trapezoidal slot 22, a second isosceles trapezoidal slot 23 and a semicircle slot 24, wherein, one end of the large stator slot 26, the middle stator slot 27 and the small stator slot 25 close to the inner ring surface of the second substrate 1 is set as the rectangular slot 21, the width of the rectangular slot 21 defining the slot width of the stator lamination is 2.5-4.2mm, the height of the rectangular slot 21 defining the slot height of the stator lamination is 0.9-2.0mm, the second isosceles trapezoidal slot 23 is arranged at the end of the first isosceles trapezoidal slot 22 far from the center of the second substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 defining the slot shoulder width of the stator lamination is 5-10mm, the angle between the hypotenuse and the lower base of the first isosceles trapezoidal slot 22 defining the slot angle of the stator lamination is 20°-30°, the width of the lower base of the second isosceles trapezoidal slot 23 is 8-15mm, and the height of the second isosceles trapezoidal slot 23 is 12-40mm, the semicircle slot 24 is arranged at the lower base of the second isosceles trapezoidal slot 23, and the diameter of the semicircle slot 24 is equal to the width of the lower base of the second isosceles trapezoidal slot 23.

In the context of this application, the two parallel sides of the isosceles trapezoid are called "base", among which the longer base is called "lower base" and the shorter base is called "upper base".

The IE5 three-phase asynchronous motor based on cast aluminum rotor and stator lamination with unequal slots of the invention is described thereafter in detail in combination with the embodiments. The description of each embodiment only focuses on the differences of the IE5 three-phase asynchronous motor based on cast aluminum rotor and stator lamination with unequal slots, and other similar structures will not be described in detail.

### Embodiment 1

As shown in Fig. 5, the stator lamination with unequal slots used in the IE5 three-phase asynchronous motor based on cast aluminum rotor and stator lamination with unequal slots of embodiment 1 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is three, including one large stator slot 26 and two small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with one small stator slot 25. That is, the one small stator slot 25 on one side of the large stator slot 26 and the one small stator slot 25 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 1, the large stator slot 26 and the small stator slot 25 in each stator slot group 2 are arranged in the form of "small - large - small".

In the same one stator lamination with unequal slots, all large stator slots 26 have the same slot shape and area, and all small stator slots 25 have the same slot shape and area. The area of small stator slot 25 is 80% - 95% of that of large stator slot 26. The center angles between the adjacent stator slots are equal, that is, the distance between the adjacent large stator slot 26 and small stator slot 25 along the circumference direction of the second substrate 1 is equal.

As shown in Figure 6, the basic slot shape of the large stator slot 26 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26 and the small stator slot 25 close to the inner ring surface of the second substrate 1 is set as the rectangular slot 21, the width of the rectangular slot 21 defining the slot width of the stator lamination is 2.5-4.2mm, the height of the rectangular slot 21 defining the slot height of the stator lamination is 0.9-2.0mm; the second isosceles trapezoidal slot 23 is arranged at the end of the first isosceles trapezoidal slot 22 far from the center of the second substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 defining the slot shoulder width of the stator lamination is 5-10 mm, the angle between the hypotenuse and the lower base of the first isosceles trapezoidal slot 22 defining the slot angle of the stator lamination is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, as shown in Fig. 5 and Fig. 7, 8-16 buckle grooves 3 are uniformly arranged on the outer ring surface of the second substrate 1 along the circumference direction of the second substrate 1 to install the buckle, which plays the role of fixing the core. The buckle groove 3 is similar to the isosceles trapezoid, the lower base of the buckle groove 3 is set as a straight line, the upper base of the buckle groove 3 is naturally opened along the circumference direction of the second substrate 1, the width of the buckle groove 3 is 14-25mm, the height of the buckle groove 3 is 3-5mm, and the angle between the hypotenuse and the base of the buckle groove 3 is 15°-25°. Processing groove 4 is set at the bottom of any one of the buckle groove 3. The shape of the processing groove 4 is rectangle or trapezoid. The processing groove 4 is used for laminating stator core to ensure the same direction of punching. The width of upper base of the processing groove 4 is 3-4nun and the height the processing groove 4 is 1.5-4mm.

Further, all the large stator slots 26 and the small stator slots 25 of the plurality of stator laminations with unequal slots which form the stator core by laminating respectively form a large slot of stator winding and a small slot of stator winding. The stator winding coil made of copper wire is embedded in the large slot of stator winding and the small slot of stator winding so as to form the stator winding. Concave slot wedge 30 or convex slot wedge 40 are respectively blocked in the large slot of stator winding and the small slot of stator winding embedded with the stator winding.

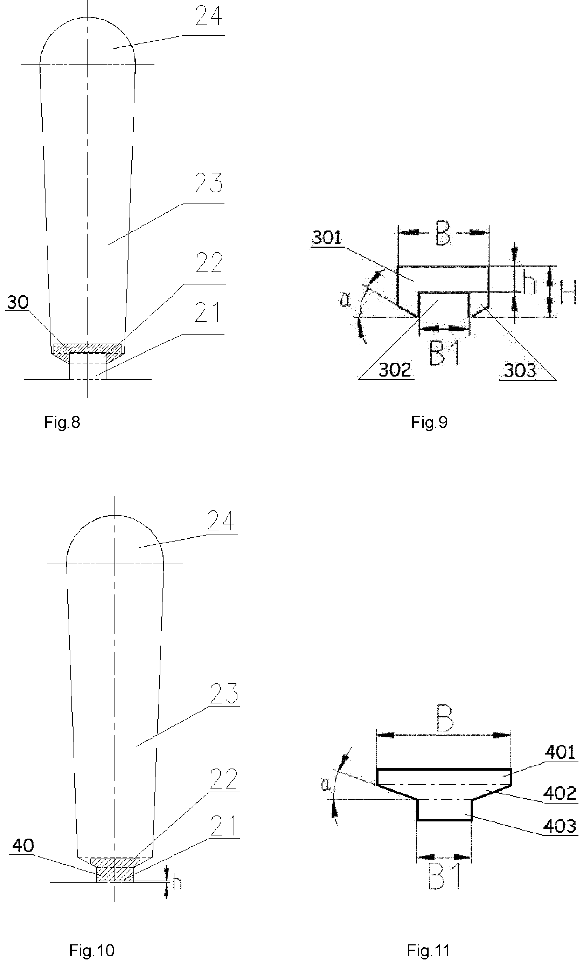

As shown in Fig. 8 and Fig. 9, the cross section of the concave slot wedge 30 is concave, including a rectangular main part 301, a recess 302 provided on the bottom surface of the rectangular main part 301, and an oblique part 303 provided on both sides of the recess 302. The width B of the rectangular main part 301 is 0.7mm smaller than the slot shoulder width of the stator lamination (i.e., the width of the lower base of the first isosceles trapezoidal slot 22), the angle α between the hypotenuse of the oblique part 303 and the bottom surface of the rectangular main part 301 is equal to the slot angle of the stator lamination (i.e., the angle between the hypotenuse and the lower base of the first isosceles trapezoidal slot 22), the width B 1 of the recess 302 is the same as the slot width of the stator lamination (i.e., the width of the rectangular slot 21), and the height h of the rectangular main part 301 is 1.5-2mm. "H" in Fig. 9 is the total height of the concave slot wedge 30, which is determined according to the limit of the slot fullness.

By blocking the slot of stator winding with the concave slot wedge 30, since there is a hollow recess between the concave slot wedge 30 and the rotor, the axial ventilation effect between the stator and the rotor can be improved and therefore the temperature rise of the motor is significantly reduced while the electrical reliability and heat transfer capacity of the motor are improved. In addition, when the concave slot wedge 30 is used, the slot fullness is high and the winding integrity is good. Moreover, the manufacturing cost of concave groove wedge 30 is low and it is easy to realize by drawing process.

As shown in Fig. 10 and Fig. 11, the convex slot wedge 40 includes a rectangular main part 401, an isosceles trapezoidal part 402 provided on the bottom surface of the rectangular main part 401, and a bump 403 protruding from the isosceles trapezoidal part 402. The width B of the rectangular main part 401 is 1-3mm smaller than the slot shoulder width of the stator lamination (i.e., the width of the lower base of the first isosceles trapezoidal slot 22), the width B1 of the bump 403 is 0.1mm smaller than the slot width of the stator lamination (i.e., the width of the rectangular slot 21), the height of the bump 403 is smaller than the slot height of the stator lamination (i.e., the height of the rectangular slot 21) and the height difference therebetween h=0.3mm, the angle α between the hypotenuse of the isosceles trapezoidal part 402 and the bottom surface of the rectangular main part 401 is equal to the slot angle of the stator lamination (i.e., the angle between the hypotenuse and the lower base of the first isosceles trapezoidal slot 22). The total height of the convex slot wedge 40 is determined according to the limit of the slot fullness.

By blocking the slot of stator winding with the convex slot wedge 40, due to the provision of the bump 403, the slot width is reduced which weakens the cogging effect, therefore the surface loss and pulsation loss of the rotor core on the stator are reduced and the efficiency of the motor is significantly improved. In addition, the convex slot wedge 40 has the advantages of effectively blocking the slot, simple process, strong versatility, high mechanical strength, accurate geometric size, and good technical performance of installing slot wedge when embedding wire. In particular, the convex slot wedge 40 can effectively block the slot, which has the following beneficial effects on the motor: (1) the effective air gap of the motor is shortened which reduces the no-load current; (2) the distribution of the magnetic flux in the air gap tends to be uniform which can reduce the noise and vibration of motor; (3) the wind friction loss can be reduced, especially the mechanical loss, iron loss and stray loss of large and medium-sized motors can be reduced, and the efficiency of motor can be effectively improved; (4) the temperature rise of the motor is reduced synchronously while the loss is reduced, which can prolong the service life of the motor. Therefore, the convex slot wedge 40 is especially suitable for high speed and high efficiency motors.

For the stator lamination with unequal slots used in the IE5 three-phase asynchronous motor based on cast aluminum rotor and stator lamination with unequal slots of embodiment 1, the total number of large stator slots 26 and small stator slots 25 in each stator slot group 2 is 9 × n, that is, 3 (phase) × 3 (number of slots per pole and phase) × n, where n is the number of poles of the motor.

According to the test data of the IE5 three-phase asynchronous motor based on cast aluminum rotor and stator lamination with unequal slots of embodiment 1, the copper saving is measured to be 0.1-0.25kg/kW, and the efficiency of the motor reaches the efficiency value of IE5 standard.

### Embodiment 2

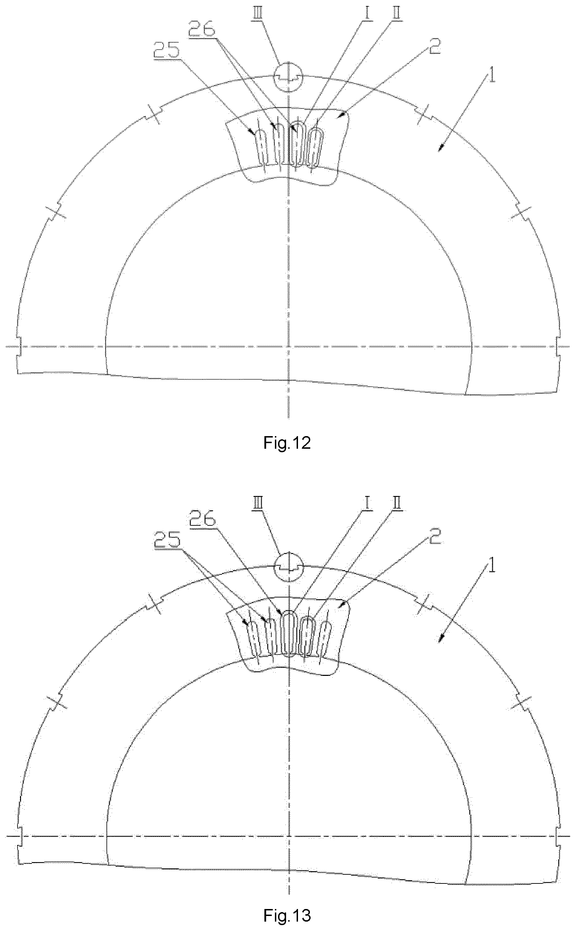

As shown in Fig. 12, the stator lamination with unequal slots used in the IE5 three-phase asynchronous motor based on cast aluminum rotor and stator lamination with unequal slots of embodiment 2 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is four, including two large stator slots 26 and two small stator slots 25. The arrangement of the large stator slot 26 and the small stator slot 25 in the stator slot group 2 is as follows: the two large stator slots 26 are arranged in the middle of the stator slot group 2, and the two sides of the two large stator slots 26 are respectively symmetrically arranged with one small stator slot 25. That is, the one small stator slot 25 on one side of the two large stator slots 26 and the one small stator slot 25 on the other side of the two large stator slots 26 are symmetrically arranged with respect to the center line of the two large stator slots 26 along the circumference direction of the second substrate 1. Therefore, in the stator lamination with unequal slots used in the IE5 three-phase asynchronous motor based on cast aluminum rotor and stator lamination with unequal slots of embodiment 2, the large stator slot 26 and the small stator slot 25 in each stator slot group 2 are arranged in the form of "small - large - large - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 2, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 2, the total number of large stator slots 26 and small stator slots 25 in each stator slot group 2 is 12 × n, that is, 3 (phase) × 4 (number of slots per pole and phase) × n, where n is the number of poles of the motor.

According to the test data of the IE5 three-phase asynchronous motor based on cast aluminum rotor and stator lamination with unequal slots of embodiment 2, the copper saving is measured to be 0.1-0.25kg/kW, and the efficiency of the motor reaches the efficiency value of IE5 standard.

### Embodiment 3

As shown in Fig. 13, the stator lamination with unequal slots used in the IE5 three-phase asynchronous motor based on cast aluminum rotor and stator lamination with unequal slots of embodiment 3 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is five, including one large stator slot 26 and four small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with two small stator slots 25. That is, the two small stator slots 25 on one side of the large stator slot 26 and the two small stator slots 25 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 3, the large stator slot 26 and the small stator slot 25 in each stator slot group 2 are arranged in the form of "small - small - large - small - small". The center angles between the adjacent stator slots are equal, that is, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 3, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 3, the total number of large stator slots 26 and small stator slots 25 in each stator slot group 2 is 15 × n, that is, 3 (phase) × 5 (number of slots per pole and phase) × n, where n is the number of poles of the motor.

According to the test data of the IE5 three-phase asynchronous motor based on cast aluminum rotor and stator lamination with unequal slots of embodiment 3, the copper saving is measured to be 0.1-0.25kg/kW, and the efficiency of the motor reaches the efficiency value of IE5 standard.

### Embodiment 4

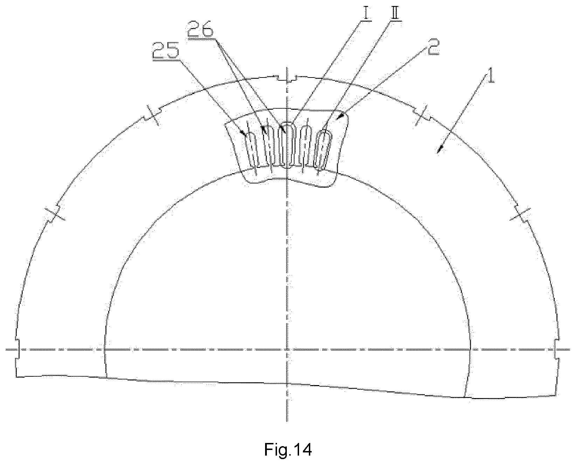

As shown in Fig. 14, the stator lamination with unequal slots used in the IE5 three-phase asynchronous motor based on cast aluminum rotor and stator lamination with unequal slots of embodiment 4 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is five, including three large stator slots 26 and two small stator slots 25. The arrangement of the large stator slot 26 and the small stator slot 25 in the stator slot group 2 is as follows: the three large stator slots 26 are arranged in the middle of the stator slot group 2, and the two sides of the three large stator slots 26 are respectively symmetrically arranged with one small stator slot 25. That is, the one small stator slot 25 on one side of the three large stator slots 26 and the one small stator slot 25 on the other side of the three large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 4, the large stator slot 26 and the small stator slot 25 in each stator slot group 2 are arranged in the form of "small - large - large - large - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 4, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 4, the total number of large stator slots 26 and small stator slots 25 in each stator slot group 2 is 15 × n, that is, 3 (phase) × 5 (number of slots per pole and phase) × n, where n is the number of poles of the motor.

According to the test data of the IE5 three-phase asynchronous motor based on cast aluminum rotor and stator lamination with unequal slots of embodiment 4, the copper saving is measured to be 0.1-0.25kg/kW, and the efficiency of the motor reaches the efficiency value of IE5 standard.

### Embodiment 5

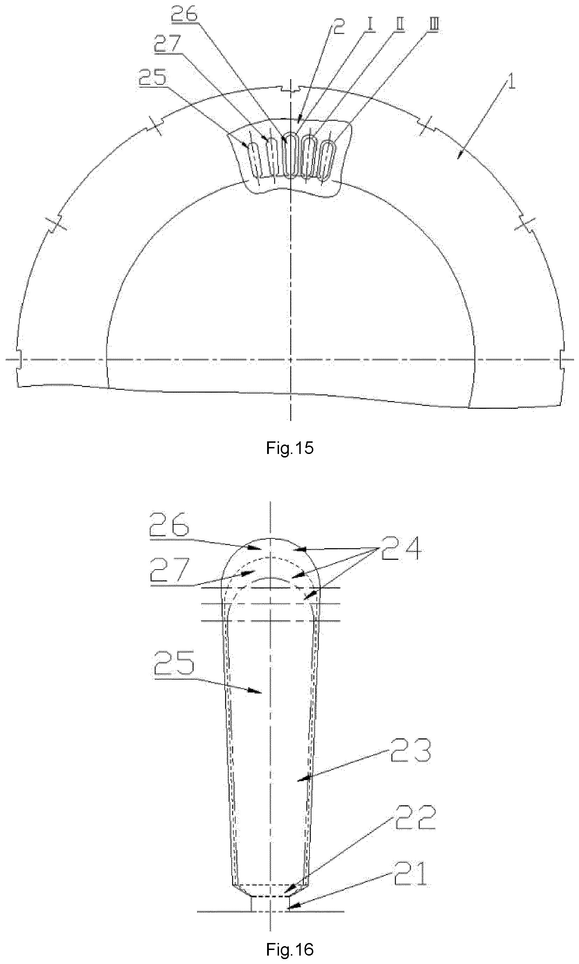

As shown in Fig. 15, the stator lamination with unequal slots used in the IE5 three-phase asynchronous motor based on cast aluminum rotor and stator lamination with unequal slots of embodiment 5 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is five, including one large stator slot 26, two middle stator slots 27 and two small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with one small stator slot 25, and between the large stator slot 26 and the small stator slot 25 are respectively symmetrically arranged with one middle stator slot 27. That is, the one small stator slot 25 on one side of the large stator slot 26 and the one small stator slot 25 on the other side of the large stator slot 26 are symmetrically arranged with respect to the large stator slot 26 in the middle position, and the one middle stator slot 27 on one side of the large stator slot 26 and the one middle stator slot 27 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 5, the large stator slot 26, the middle stator slot 27 and the small stator slot 25 in each stator slot group 2 are arranged in the form of "small - middle - large - middle - small".

In the same one stator lamination with unequal slots, all large stator slots 26 have the same slot shape and area, all middle stator slots 27 have the same slot shape and area, and all small stator slots 25 have the same slot shape and area. The area of small stator slot 25 is 80% - 95% of that of large stator slot 26, and the area of middle stator slot 27 is between that of small stator slot 25 and large stator slot 26. The center angles between the adjacent stator slots are equal, that is, the distance between the adjacent large stator slot 26 and middle stator slot 27, and the distance between the adjacent middle stator slot 27 and small stator slot 25, along the circumference direction of the second substrate 1 is equal.

As shown in Figure 16, the basic slot shape of the large stator slot 26, the middle stator slot 27 and the small stator slot 25 are semi closed pear shaped slots, which are convenient for copper wire placement, including the rectangular slot 21, the first isosceles trapezoidal slot 22, the second isosceles trapezoidal slot 23 and the semicircle slot 24. One end of the large stator slot 26, the middle stator slot 27 and the small stator slot 25 close to the inner ring surface of the second substrate 1 is set as the rectangular slot 21, the width of the rectangular slot 21 defining the slot width of the stator lamination is 2.5-4.2mm, the height of the rectangular slot 21 defining the slot height of the stator lamination is 0.9-2.0mm; the second isosceles trapezoidal slot 23 is arranged at the end of the first isosceles trapezoidal slot 22 far from the center of the second substrate 1, the upper base of the first isosceles trapezoidal slot 22 is collinear with the long side of the rectangular slot 21, the lower base of the first isosceles trapezoidal slot 22 is collinear with the upper base of the second isosceles trapezoidal slot 23, the width of the lower base of the first isosceles trapezoidal slot 22 defining the slot shoulder width of the stator lamination is 5-10 mm, the angle between the hypotenuse and the lower base of the first isosceles trapezoidal slot 22 defining the slot angle of the stator lamination is 20°-30°, the width of the lower base of the second isosceles trapezoidal slot 23 is 8-15mm, and the height of the second isosceles trapezoidal slot 23 is 12-40mm; the semicircle slot 24 is arranged at the lower base of the second isosceles trapezoidal slot 23, and the diameter of the semicircle slot 24 is equal to the width of the lower base of the second isosceles trapezoidal slot 23.

Further, all the large stator slots 26, the middle stator slot 27 and the small stator slots 25 of the plurality of stator laminations with unequal slots which form the stator core by laminating respectively form a large slot of stator winding, a middle slot of stator winding and a small slot of stator winding. The stator winding coil made of copper wire is embedded in the large slot of stator winding, the middle slot of stator winding and the small slot of stator winding so as to form the stator winding. Concave slot wedge 30 or convex slot wedge 40 are respectively blocked in the large slot of stator winding, the middle slot of stator winding and the small slot of stator winding embedded with the stator winding.

In the stator lamination with unequal slots used in the IE5 three-phase asynchronous motor based on cast aluminum rotor and stator lamination with unequal slots of embodiment 5, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 5, the total number of large stator slots 26, middle stator slot 27 and small stator slots 25 in each stator slot group 2 is 15 × n, that is, 3 (phase) × 5 (number of slots per pole and phase) × n, where n is the number of poles of the motor.

According to the test data of the IE5 three-phase asynchronous motor based on cast aluminum rotor and stator lamination with unequal slots of embodiment 5, the copper saving is measured to be 0.1-0.25kg/kW, and the efficiency of the motor reaches the efficiency value of IE5 standard.

### Embodiment 6

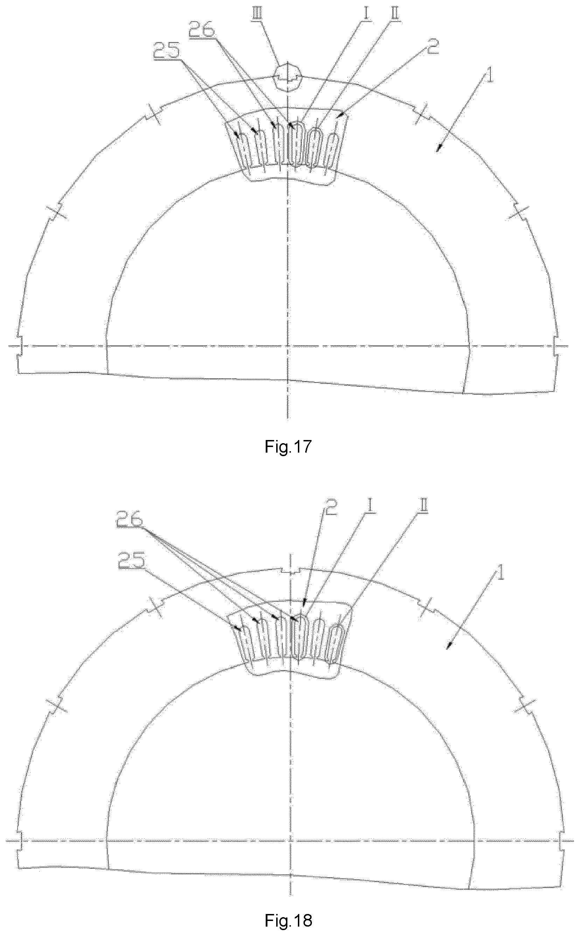

As shown in Fig. 17, the stator lamination with unequal slots used in the IE5 three-phase asynchronous motor based on cast aluminum rotor and stator lamination with unequal slots of embodiment 6 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is six, including two large stator slot 26 and four small stator slots 25. The arrangement of the large stator slot 26 and the small stator slot 25 in the stator slot group 2 is as follows: the two large stator slots 26 are arranged in the middle of the stator slot group 2, and the two sides of the two large stator slots 26 are respectively symmetrically arranged with two small stator slots 25. That is, the two small stator slots 25 on one side of the two large stator slots 26 and the two small stator slots 25 on the other side of the two large stator slots 26 are symmetrically arranged with respect to the center line of the two large stator slots 26 along the circumference direction of the second substrate 1. Therefore, in the stator lamination with unequal slots used in the IE5 three-phase asynchronous motor based on cast aluminum rotor and stator lamination with unequal slots of embodiment 6, the large stator slot 26 and the small stator slot 25 in each stator slot group 2 are arranged in the form of "small - small - large - large - small - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 6, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 6, the total number of large stator slots 26 and small stator slots 25 in each stator slot group 2 is 18 × n, that is, 3 (phase) × 6 (number of slots per pole and phase) × n, where n is the number of poles of the motor.

According to the test data of the IE5 three-phase asynchronous motor based on cast aluminum rotor and stator lamination with unequal slots of embodiment 6, the copper saving is measured to be 0.1-0.25kg/kW, and the efficiency of the motor reaches the efficiency value of IE5 standard.

### Embodiment 7

As shown in Fig. 18, the stator lamination with unequal slots used in the IE5 three-phase asynchronous motor based on cast aluminum rotor and stator lamination with unequal slots of embodiment 7 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is six, including four large stator slot 26 and two small stator slots 25. The arrangement of the large stator slot 26 and the small stator slot 25 in the stator slot group 2 is as follows: the four large stator slots 26 are arranged in the middle of the stator slot group 2, and the two sides of the four large stator slots 26 are respectively symmetrically arranged with one small stator slot 25. That is, the one small stator slot 25 on one side of the four large stator slots 26 and the one small stator slots 25 on the other side of the four large stator slots 26 are symmetrically arranged with respect to the center line of the four large stator slots 26 along the circumference direction of the second substrate 1. Therefore, in the stator lamination with unequal slots used in the IE5 three-phase asynchronous motor based on cast aluminum rotor and stator lamination with unequal slots of embodiment 7, the large stator slot 26 and the small stator slot 25 in each stator slot group 2 are arranged in the form of "small - large - large - large - large - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 7, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 7, the total number of large stator slots 26 and small stator slots 25 in each stator slot group 2 is 18 × n, that is, 3 (phase) × 6 (number of slots per pole and phase) × n, where n is the number of poles of the motor.

According to the test data of the IE5 three-phase asynchronous motor based on cast aluminum rotor and stator lamination with unequal slots of embodiment 7, the copper saving is measured to be 0.1-0.25kg/kW, and the efficiency of the motor reaches the efficiency value of IE5 standard.

### Embodiment 8

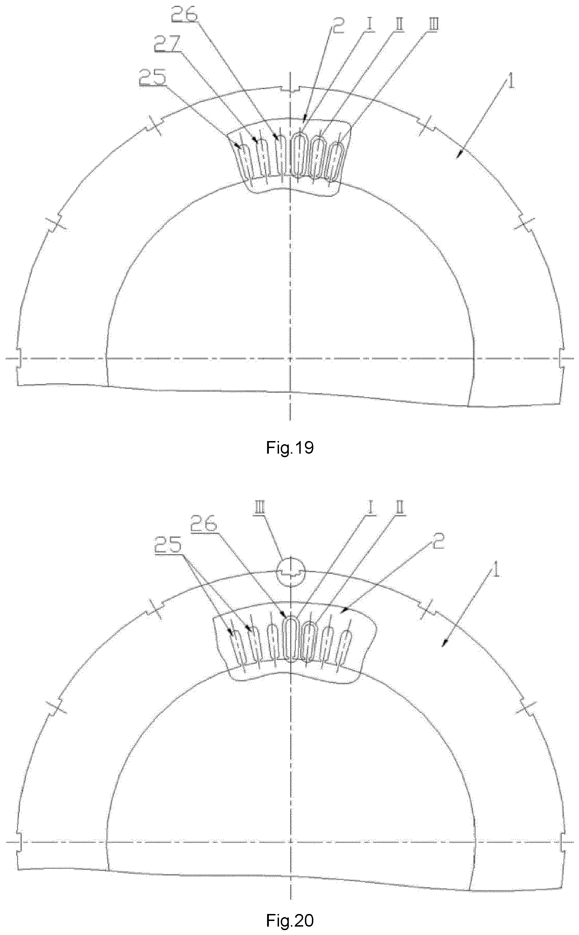

As shown in Fig. 19, the stator lamination with unequal slots used in the IE5 three-phase asynchronous motor based on cast aluminum rotor and stator lamination with unequal slots of embodiment 8 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is six, including two large stator slots 26, two middle stator slots 27 and two small stator slots 25. The arrangement of the large stator slot 26, the middle stator slot 27 and the small stator slot 25 in the stator slot group 2 is as follows: the two large stator slots 26 are arranged in the middle of the stator slot group 2, the two sides of the two large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the two large stator slots 26 and the one small stator slot 25 on the other side of the two large stator slots 26 are symmetrically arranged with respect to the center line of the two large stator slots 26 along the circumference direction of the second substrate 1, and the one middle stator slot 27 on one side of the two large stator slots 26 and the one middle stator slot 27 on the other side of the two large stator slots 26 are symmetrically arranged with respect to the center line of the two large stator slots 26 along the circumference direction of the second substrate 1. Therefore, in the stator lamination with unequal slots used in the IE5 three-phase asynchronous motor based on cast aluminum rotor and stator lamination with unequal slots of embodiment 8, the large stator slot 26, the middle stator slot 27 and the small stator slot 25 in each stator slot group 2 are arranged in the form of "small - middle - large - large - middle - small". The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 8, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 8, the total number of large stator slots 26, middle stator slots 27 and small stator slots 25 in each stator slot group 2 is 18 × n, that is, 3 (phase) × 6 (number of slots per pole and phase) × n, where n is the number of poles of the motor.

According to the test data of the IE5 three-phase asynchronous motor based on cast aluminum rotor and stator lamination with unequal slots of embodiment 8, the copper saving is measured to be 0.1-0.25kg/kW, and the efficiency of the motor reaches the efficiency value of IE5 standard.

### Embodiment 9

As shown in Fig. 20, the stator lamination with unequal slots used in the IE5 three-phase asynchronous motor based on cast aluminum rotor and stator lamination with unequal slots of embodiment 9 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is seven, including one large stator slot 26 and six small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with three small stator slots 25. That is, the three small stator slots 25 on one side of the large stator slot 26 and the three small stator slots 25 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 9, the large stator slot 26 and the small stator slot 25 in each stator slot group 2 are arranged in the form of "small - small - small - large - small - small - small". The center angles between the adjacent stator slots are equal, that is, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 9, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 9, the total number of large stator slots 26 and small stator slots 25 in each stator slot group 2 is 21 × n, that is, 3 (phase) × 7 (number of slots per pole and phase) × n, where n is the number of poles of the motor.

According to the test data of the IE5 three-phase asynchronous motor based on cast aluminum rotor and stator lamination with unequal slots of embodiment 9, the copper saving is measured to be 0.1-0.25kg/kW, and the efficiency of the motor reaches the efficiency value of IE5 standard.

### Embodiment 10

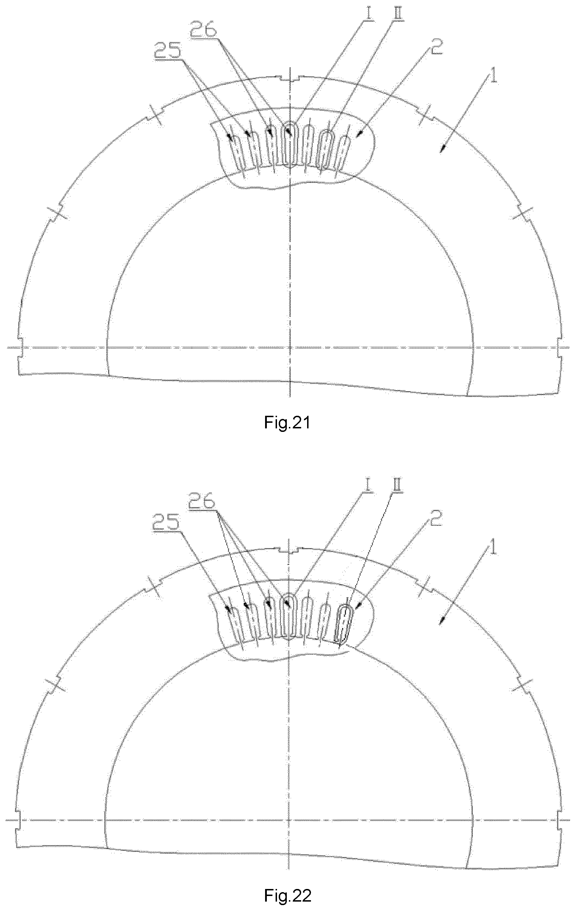

As shown in Fig. 21, the stator lamination with unequal slots used in the IE5 three-phase asynchronous motor based on cast aluminum rotor and stator lamination with unequal slots of embodiment 10 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is seven, including three large stator slots 26 and four small stator slots 25. The arrangement of the large stator slot 26 and the small stator slot 25 in the stator slot group 2 is as follows: the three large stator slots 26 are arranged in the middle of the stator slot group 2, and the two sides of the three large stator slots 26 are respectively symmetrically arranged with two small stator slots 25. That is, the two small stator slots 25 on one side of the three large stator slots 26 and the two small stator slots 25 on the other side of the three large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 10, the large stator slot 26 and the small stator slot 25 in each stator slot group 2 are arranged in the form of "small - small - large - large - large - small - small". The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 10, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 10, the total number of large stator slots 26 and small stator slots 25 in each stator slot group 2 is 21 × n, that is, 3 (phase) × 7 (number of slots per pole and phase) × n, where n is the number of poles of the motor.

According to the test data of the IE5 three-phase asynchronous motor based on cast aluminum rotor and stator lamination with unequal slots of embodiment 10, the copper saving is measured to be 0.1-0.25kg/kW, and the efficiency of the motor reaches the efficiency value of IE5 standard.

### Embodiment 11

As shown in Fig. 22, the stator lamination with unequal slots used in the IE5 three-phase asynchronous motor based on cast aluminum rotor and stator lamination with unequal slots of embodiment 11 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is seven, including five large stator slots 26 and two small stator slots 25. The arrangement of the large stator slot 26 and the small stator slot 25 in the stator slot group 2 is as follows: the five large stator slots 26 are arranged in the middle of the stator slot group 2, and the two sides of the five large stator slots 26 are respectively symmetrically arranged with one small stator slot 25. That is, the one small stator slot 25 on one side of the five large stator slots 26 and the one small stator slot 25 on the other side of the five large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 11, the large stator slot 26 and the small stator slot 25 in each stator slot group 2 are arranged in the form of "small - large - large - large - large - large - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 11, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 11, the total number of large stator slots 26 and small stator slots 25 in each stator slot group 2 is 21 × n, that is, 3 (phase) × 7 (number of slots per pole and phase) × n, where n is the number of poles of the motor.

According to the test data of the IE5 three-phase asynchronous motor based on cast aluminum rotor and stator lamination with unequal slots of embodiment 11, the copper saving is measured to be 0.1-0.25kg/kW, and the efficiency of the motor reaches the efficiency value of IE5 standard.

### Embodiment 12

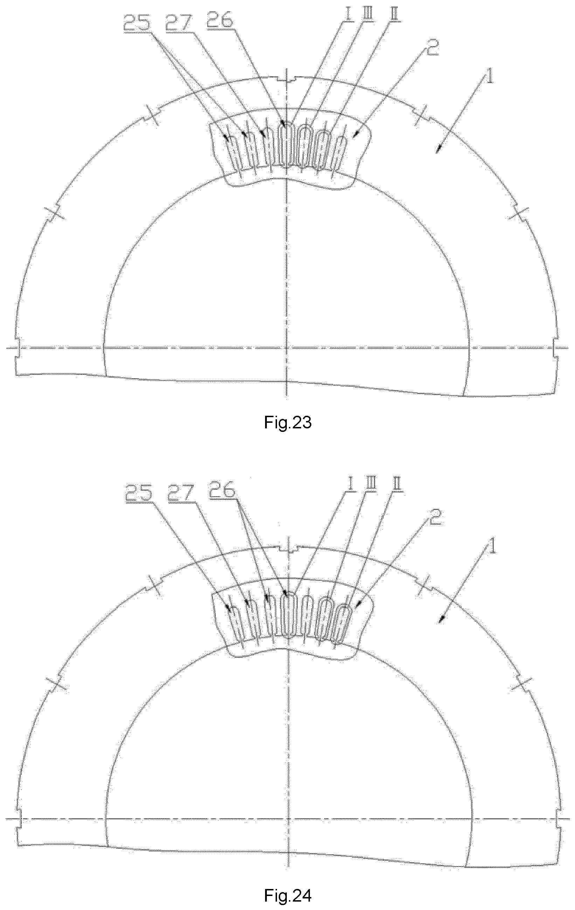

As shown in Fig. 23, the stator lamination with unequal slots used in the IE5 three-phase asynchronous motor based on cast aluminum rotor and stator lamination with unequal slots of embodiment 12 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is seven, including one large stator slot 26, two middle stator slots 27 and four small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with two small stator slot 25, and between the large stator slot 26 and the small stator slot 25 are respectively symmetrically arranged with one middle stator slot 27. That is, the two small stator slots 25 on one side of the large stator slot 26 and the two small stator slots 25 on the other side of the large stator slot 26 are symmetrically arranged with respect to the large stator slot 26 in the middle position, and the one middle stator slot 27 on one side of the large stator slot 26 and the one middle stator slot 27 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 12, the large stator slot 26, the middle stator slot 27 and the small stator slot 25 in each stator slot group 2 are arranged in the form of "small - small - middle - large - middle - small - small". The center angles between the adjacent stator slots are equal, that is, the distance between the adjacent small stator slots 25, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 12, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 12, the total number of large stator slots 26, middle stator slots 27 and small stator slots 25 in each stator slot group 2 is 21 × n, that is, 3 (phase) × 7 (number of slots per pole and phase) × n, where n is the number of poles of the motor.

According to the test data of the IE5 three-phase asynchronous motor based on cast aluminum rotor and stator lamination with unequal slots of embodiment 12, the copper saving is measured to be 0.1-0.25kg/kW, and the efficiency of the motor reaches the efficiency value of IE5 standard.

### Embodiment 13

As shown in Fig. 24, the stator lamination with unequal slots used in the IE5 three-phase asynchronous motor based on cast aluminum rotor and stator lamination with unequal slots of embodiment 13 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is seven, including three large stator slots 26, two middle stator slots 27 and two small stator slots 25. The arrangement of the large stator slot 26, the middle stator slot 27 and the small stator slot 25 in the stator slot group 2 is as follows: the three large stator slots 26 are arranged in the middle of the stator slot group 2, the two sides of the three large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the three large stator slots 26 and the one small stator slot 25 on the other side of the three large stator slots 26 are symmetrically arranged with respect to the large stator slot 26 in the middle position, and the one middle stator slot 27 on one side of the three large stator slots 26 and the one middle stator slot 27 on the other side of the three large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 13, the large stator slot 26, the middle stator slot 27 and the small stator slot 25 in each stator slot group 2 are arranged in the form of "small - middle - large - large - large - middle - small". The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 13, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 13, the total number of large stator slots 26, middle stator slots 27 and small stator slots 25 in each stator slot group 2 is 21 × n, that is, 3 (phase) × 7 (number of slots per pole and phase) × n, where n is the number of poles of the motor.

According to the test data of the IE5 three-phase asynchronous motor based on cast aluminum rotor and stator lamination with unequal slots of embodiment 13, the copper saving is measured to be 0.1-0.25kg/kW, and the efficiency of the motor reaches the efficiency value of IE5 standard.

### Embodiment 14

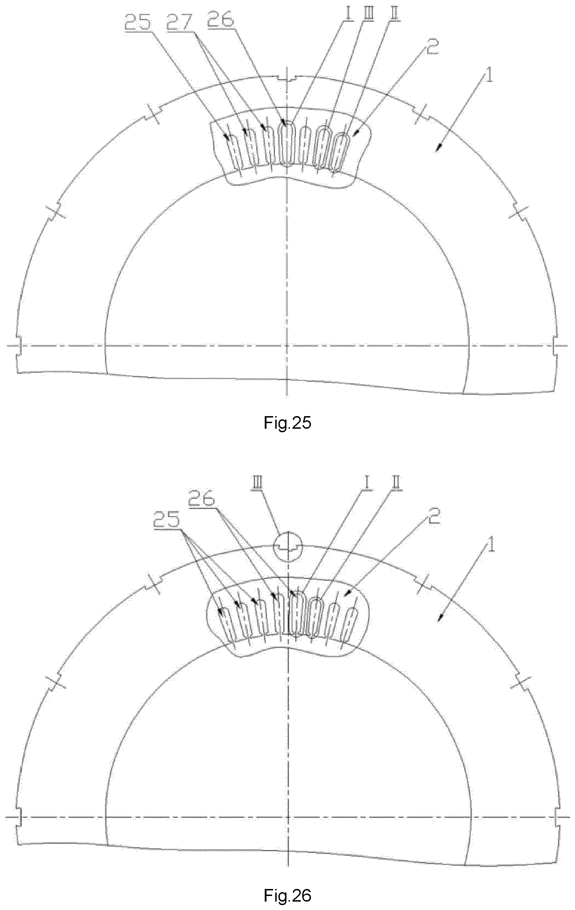

As shown in Fig. 25, the stator lamination with unequal slots used in the IE5 three-phase asynchronous motor based on cast aluminum rotor and stator lamination with unequal slots of embodiment 14 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is seven, including one large stator slot 26, four middle stator slots 27 and two small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with one small stator slot 25, and between the large stator slot 26 and the small stator slot 25 are respectively symmetrically arranged with two middle stator slots 27. That is, the one small stator slot 25 on one side of the large stator slot 26 and the one small stator slot 25 on the other side of the large stator slot 26 are symmetrically arranged with respect to the large stator slot 26 in the middle position, and the two middle stator slots 27 on one side of the large stator slot 26 and the two middle stator slots 27 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 14, the large stator slot 26, the middle stator slot 27 and the small stator slot 25 in each stator slot group 2 are arranged in the form of "small - middle - middle - large - middle - middle - small". The center angles between the adjacent stator slots are equal, that is, the distance between the adjacent middle stator slots 27, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 14, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 14, the total number of large stator slots 26, middle stator slots 27 and small stator slots 25 in each stator slot group 2 is 21 × n, that is, 3 (phase) × 7 (number of slots per pole and phase) × n, where n is the number of poles of the motor.

According to the test data of the IE5 three-phase asynchronous motor based on cast aluminum rotor and stator lamination with unequal slots of embodiment 14, the copper saving is measured to be 0.1-0.25kg/kW, and the efficiency of the motor reaches the efficiency value of IE5 standard.

### Embodiment 15

As shown in Fig. 26, the stator lamination with unequal slots used in the IE5 three-phase asynchronous motor based on cast aluminum rotor and stator lamination with unequal slots of embodiment 15 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is eight, including two large stator slot 26 and six small stator slots 25. The arrangement of the large stator slot 26 and the small stator slot 25 in the stator slot group 2 is as follows: the two large stator slots 26 are arranged in the middle of the stator slot group 2, and the two sides of the two large stator slots 26 are respectively symmetrically arranged with three small stator slots 25. That is, the three small stator slots 25 on one side of the two large stator slots 26 and the three small stator slots 25 on the other side of the two large stator slots 26 are symmetrically arranged with respect to the center line of the two large stator slots 26 along the circumference direction of the second substrate 1. Therefore, in the stator lamination with unequal slots used in the IE5 three-phase asynchronous motor based on cast aluminum rotor and stator lamination with unequal slots of embodiment 15, the large stator slot 26 and the small stator slot 25 in each stator slot group 2 are arranged in the form of "small - small - small - large - large - small - small - small". The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 15, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 15, the total number of large stator slots 26 and small stator slots 25 in each stator slot group 2 is 24 × n, that is, 3 (phase) × 8 (number of slots per pole and phase) × n, where n is the number of poles of the motor.

According to the test data of the IE5 three-phase asynchronous motor based on cast aluminum rotor and stator lamination with unequal slots of embodiment 15, the copper saving is measured to be 0.1-0.25kg/kW, and the efficiency of the motor reaches the efficiency value of IE5 standard.

### Embodiment 16

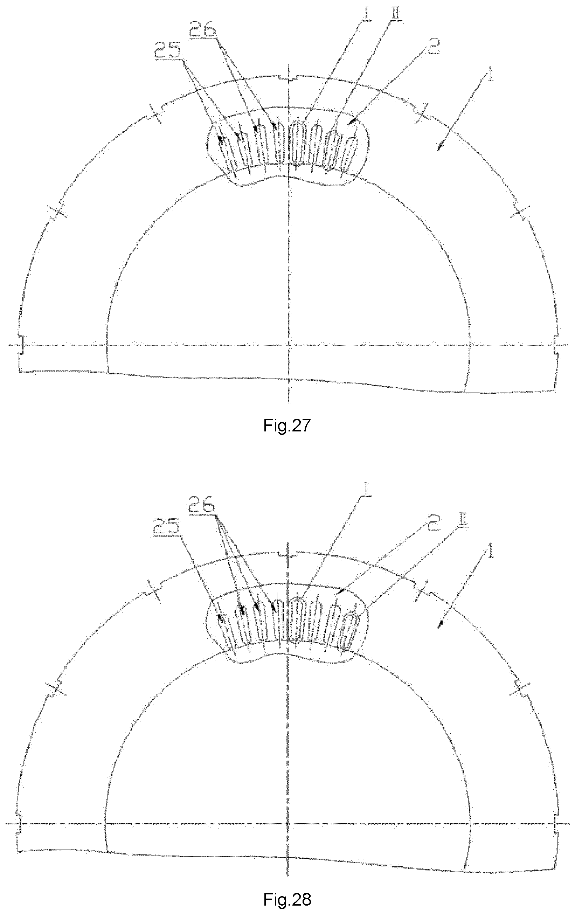

As shown in Fig. 27, the stator lamination with unequal slots used in the IE5 three-phase asynchronous motor based on cast aluminum rotor and stator lamination with unequal slots of embodiment 16 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is eight, including four large stator slots 26 and four small stator slots 25. The arrangement of the large stator slot 26 and the small stator slot 25 in the stator slot group 2 is as follows: the four large stator slots 26 are arranged in the middle of the stator slot group 2, and the two sides of the four large stator slots 26 are respectively symmetrically arranged with two small stator slots 25. That is, the two small stator slots 25 on one side of the four large stator slots 26 and the two small stator slots 25 on the other side of the four large stator slots 26 are symmetrically arranged with respect to the center line of the four large stator slots 26 along the circumference direction of the second substrate 1. Therefore, in the stator lamination with unequal slots used in the IE5 three-phase asynchronous motor based on cast aluminum rotor and stator lamination with unequal slots of embodiment 16, the large stator slot 26 and the small stator slot 25 in each stator slot group 2 are arranged in the form of "small - small - large - large - large - large - small - small". The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 16, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 16, the total number of large stator slots 26 and small stator slots 25 in each stator slot group 2 is 24 × n, that is, 3 (phase) × 8 (number of slots per pole and phase) × n, where n is the number of poles of the motor.

According to the test data of the IE5 three-phase asynchronous motor based on cast aluminum rotor and stator lamination with unequal slots of embodiment 16, the copper saving is measured to be 0.1-0.25kg/kW, and the efficiency of the motor reaches the efficiency value of IE5 standard.

### Embodiment 17

As shown in Fig. 28, the stator lamination with unequal slots used in the IE5 three-phase asynchronous motor based on cast aluminum rotor and stator lamination with unequal slots of embodiment 17 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is eight, including six large stator slot 26 and two small stator slots 25. The arrangement of the large stator slot 26 and the small stator slot 25 in the stator slot group 2 is as follows: the six large stator slots 26 are arranged in the middle of the stator slot group 2, and the two sides of the six large stator slots 26 are respectively symmetrically arranged with one small stator slot 25. That is, the one small stator slot 25 on one side of the six large stator slots 26 and the one small stator slot 25 on the other side of the six large stator slots 26 are symmetrically arranged with respect to the center line of the six large stator slots 26 along the circumference direction of the second substrate 1. Therefore, in the stator lamination with unequal slots used in the IE5 three-phase asynchronous motor based on cast aluminum rotor and stator lamination with unequal slots of embodiment 17, the large stator slot 26 and the small stator slot 25 in each stator slot group 2 are arranged in the form of "small - large - large - large - large - large - large - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 17, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 17, the total number of large stator slots 26 and small stator slots 25 in each stator slot group 2 is 24 × n, that is, 3 (phase) × 8 (number of slots per pole and phase) × n, where n is the number of poles of the motor.

According to the test data of the IE5 three-phase asynchronous motor based on cast aluminum rotor and stator lamination with unequal slots of embodiment 17, the copper saving is measured to be 0.1-0.25kg/kW, and the efficiency of the motor reaches the efficiency value of IE5 standard.

### Embodiment 18

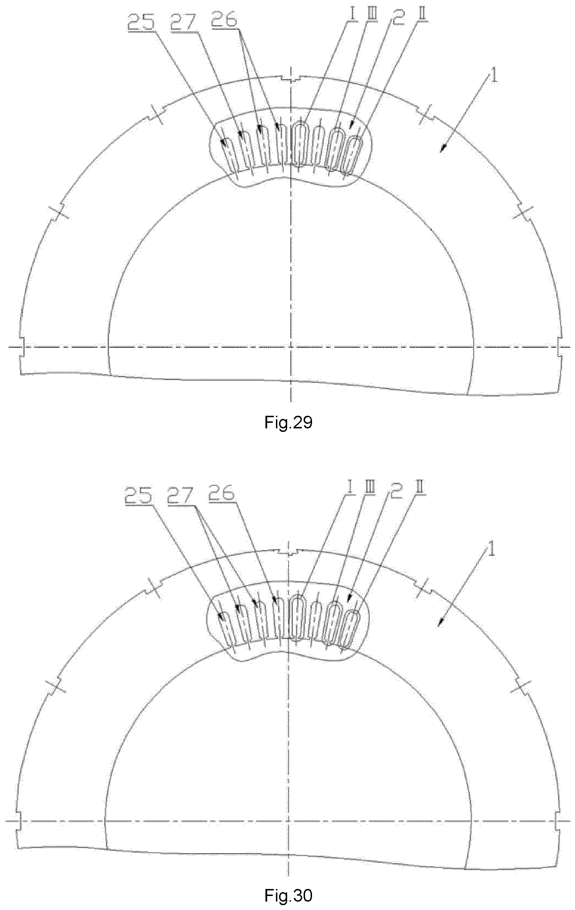

As shown in Fig. 29, the stator lamination with unequal slots used in the IE5 three-phase asynchronous motor based on cast aluminum rotor and stator lamination with unequal slots of embodiment 18 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is eight, including four large stator slots 26, two middle stator slots 27 and two small stator slots 25. The arrangement of the large stator slot 26, the middle stator slot 27 and the small stator slot 25 in the stator slot group 2 is as follows: the four large stator slots 26 are arranged in the middle of the stator slot group 2, the two sides of the four large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the four large stator slots 26 and the one small stator slot 25 on the other side of the four large stator slots 26 are symmetrically arranged with respect to the center line of the four large stator slots 26 along the circumference direction of the second substrate 1, and the one middle stator slot 27 on one side of the four large stator slots 26 and the one middle stator slot 27 on the other side of the four large stator slots 26 are symmetrically arranged with respect to the center line of the four large stator slots 26 along the circumference direction of the second substrate 1. Therefore, in the stator lamination with unequal slots used in the IE5 three-phase asynchronous motor based on cast aluminum rotor and stator lamination with unequal slots of embodiment 18, the large stator slot 26, the middle stator slot 27 and the small stator slot 25 in each stator slot group 2 are arranged in the form of "small - middle - large - large - large - large - middle - small". The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 18, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 18, the total number of large stator slots 26, middle stator slots 27 and small stator slots 25 in each stator slot group 2 is 24 × n, that is, 3 (phase) × 8 (number of slots per pole and phase) × n, where n is the number of poles of the motor.

According to the test data of the IE5 three-phase asynchronous motor based on cast aluminum rotor and stator lamination with unequal slots of embodiment 18, the copper saving is measured to be 0.1-0.25kg/kW, and the efficiency of the motor reaches the efficiency value of IE5 standard.

### Embodiment 19

As shown in Fig. 30, the stator lamination with unequal slots used in the IE5 three-phase asynchronous motor based on cast aluminum rotor and stator lamination with unequal slots of embodiment 19 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is eight, including two large stator slots 26, four middle stator slots 27 and two small stator slots 25. The arrangement of the large stator slot 26, the middle stator slot 27 and the small stator slot 25 in the stator slot group 2 is as follows: the two large stator slots 26 are arranged in the middle of the stator slot group 2, the two sides of the two large stator slots 26 are respectively symmetrically arranged with one small stator slot 25, and between the large stator slot 26 and the small stator slot 25 are respectively symmetrically arranged with two middle stator slots 27. That is, the one small stator slot 25 on one side of the two large stator slots 26 and the one small stator slot 25 on the other side of the two large stator slots 26 are symmetrically arranged with respect to the center line of the two large stator slots 26 along the circumference direction of the second substrate 1, and the two middle stator slots 27 on one side of the two large stator slots 26 and the two middle stator slots 27 on the other side of the two large stator slots 26 are symmetrically arranged with respect to the center line of the two large stator slots 26 along the circumference direction of the second substrate 1. Therefore, in the stator lamination with unequal slots used in the IE5 three-phase asynchronous motor based on cast aluminum rotor and stator lamination with unequal slots of embodiment 19, the large stator slot 26, the middle stator slot 27 and the small stator slot 25 in each stator slot group 2 are arranged in the form of "small - middle - middle - large - large - middle - middle - small". The center angles between the adjacent stator slots are equal, that is, the distance between the adjacent large stator slots 26, the distance between the adjacent middle stator slots 27, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 19, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 19, the total number of large stator slots 26, middle stator slots 27 and small stator slots 25 in each stator slot group 2 is 24 × n, that is, 3 (phase) × 8 (number of slots per pole and phase) × n, where n is the number of poles of the motor.

According to the test data of the IE5 three-phase asynchronous motor based on cast aluminum rotor and stator lamination with unequal slots of embodiment 19, the copper saving is measured to be 0.1-0.25kg/kW, and the efficiency of the motor reaches the efficiency value of IE5 standard.

### Embodiment 20

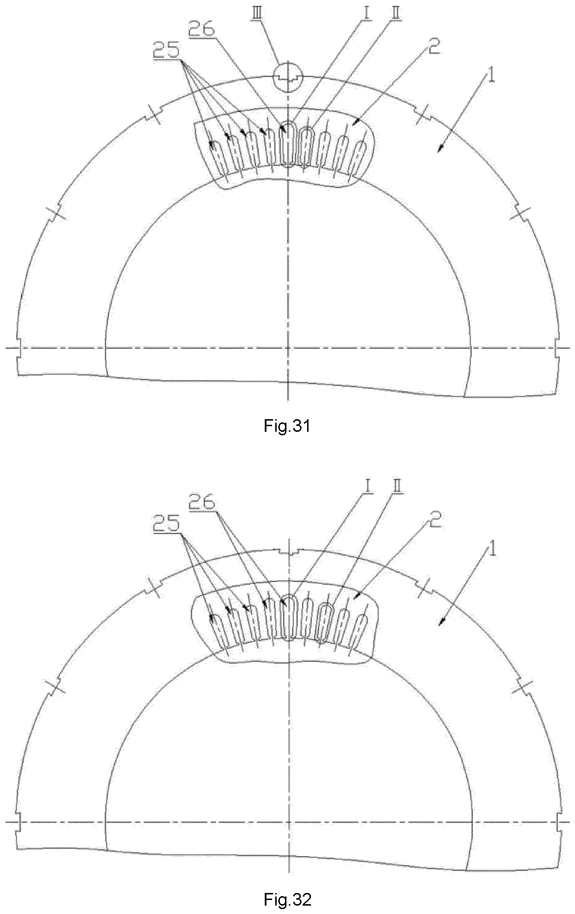

As shown in Fig. 31, the stator lamination with unequal slots used in the IE5 three-phase asynchronous motor based on cast aluminum rotor and stator lamination with unequal slots of embodiment 20 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including one large stator slot 26 and eight small stator slots 25. The arrangement of the large stator slot 26 and the small stator slot 25 in the stator slot group 2 is as follows: the one large stator slot 26 is arranged in the middle of the stator slot group 2, and the two sides of the large stator slot 26 are respectively symmetrically arranged with four small stator slots 25. That is, the four small stator slots 25 on one side of the large stator slot 26 and the four small stator slots 25 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 20, the large stator slot 26 and the small stator slot 25 in each stator slot group 2 are arranged in the form of "small - small - small - small - large - small - small - small - small". The center angles between the adjacent stator slots are equal, that is, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 20, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 20, the total number of large stator slots 26 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 20, the copper saving is measured to be 0.1-0.25kg/kW, and the efficiency of the motor reaches the efficiency value of IE5 standard.

### Embodiment 21

As shown in Fig. 32, the stator lamination with unequal slots used in the IE5 three-phase asynchronous motor based on cast aluminum rotor and stator lamination with unequal slots of embodiment 21 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including three large stator slots 26 and six small stator slots 25. The arrangement of the large stator slot 26 and the small stator slot 25 in the stator slot group 2 is as follows: the three large stator slots 26 are arranged in the middle of the stator slot group 2, and the two sides of the three large stator slots 26 are respectively symmetrically arranged with three small stator slots 25. That is, the three small stator slots 25 on one side of the three large stator slots 26 and the three small stator slots 25 on the other side of the three large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 21, the large stator slot 26 and the small stator slot 25 in each stator slot group 2 are arranged in the form of "small - small - small - large - large - large - small - small - small". The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 21, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 21, the total number of large stator slots 26 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 21, the copper saving is measured to be 0.1-0.25kg/kW, and the efficiency of the motor reaches the efficiency value of IE5 standard.

### Embodiment 22

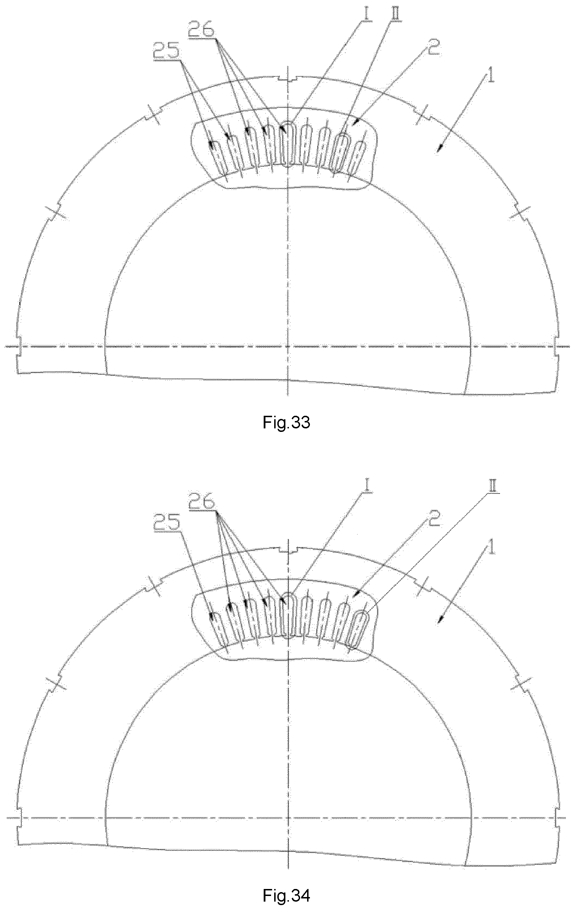

As shown in Fig. 33, the stator lamination with unequal slots used in the IE5 three-phase asynchronous motor based on cast aluminum rotor and stator lamination with unequal slots of embodiment 22 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including five large stator slots 26 and four small stator slots 25. The arrangement of the large stator slot 26 and the small stator slot 25 in the stator slot group 2 is as follows: the five large stator slots 26 are arranged in the middle of the stator slot group 2, and the two sides of the five large stator slots 26 are respectively symmetrically arranged with two small stator slots 25. That is, the two small stator slots 25 on one side of the five large stator slots 26 and the two small stator slots 25 on the other side of the five large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 22, the large stator slot 26 and the small stator slot 25 in each stator slot group 2 are arranged in the form of "small - small - large - large - large - large - large - small - small". The center angles between the adjacent stator slots are equal, that is, the distance between the adjacent large stator slots 26, the distance between the adjacent small stator slots 25, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 22, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 22, the total number of large stator slots 26 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 22, the copper saving is measured to be 0.1-0.25kg/kW, and the efficiency of the motor reaches the efficiency value of IE5 standard.

### Embodiment 23

As shown in Fig. 34, the stator lamination with unequal slots used in the IE5 three-phase asynchronous motor based on cast aluminum rotor and stator lamination with unequal slots of embodiment 23 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including seven large stator slots 26 and two small stator slots 25. The arrangement of the large stator slot 26 and the small stator slot 25 in the stator slot group 2 is as follows: the seven large stator slots 26 are arranged in the middle of the stator slot group 2, and the two sides of the seven large stator slots 26 are respectively symmetrically arranged with one small stator slot 25. That is, the one small stator slot 25 on one side of the seven large stator slots 26 and the one small stator slot 25 on the other side of the seven large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 23, the large stator slot 26 and the small stator slot 25 in each stator slot group 2 are arranged in the form of "small - large - large - large - large - large - large - large - small". The center angles between the adjacent stator slots are equal, that is, the distance between the adjacent large stator slots 26, and the distance between the adjacent large stator slot 26 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 23, the basic slot shape of large stator slot 26 and small stator slot 25, the setting of buckle groove 3 and processing groove 4, and the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 23, the total number of large stator slots 26 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 23, the copper saving is measured to be 0.1-0.25kg/kW, and the efficiency of the motor reaches the efficiency value of IE5 standard.

### Embodiment 24

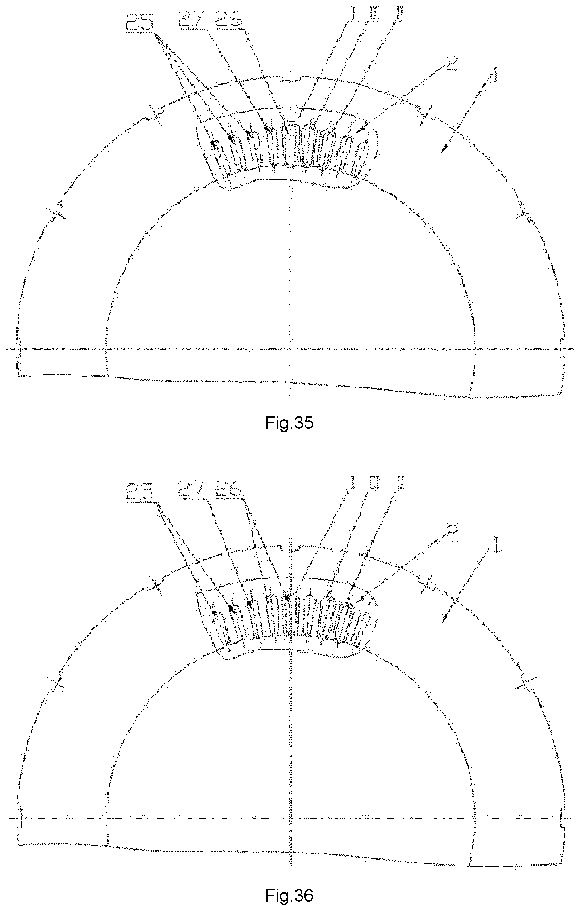

As shown in Fig. 35, the stator lamination with unequal slots used in the IE5 three-phase asynchronous motor based on cast aluminum rotor and stator lamination with unequal slots of embodiment 24 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including one large stator slot 26, two middle stator slots 27 and six small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the large stator slot 26 are respectively symmetrically arranged with three small stator slots 25, and between the large stator slot 26 and the small stator slot 25 are respectively symmetrically arranged with one middle stator slot 27. That is, the three small stator slots 25 on one side of the large stator slot 26 and the three small stator slots 25 on the other side of the large stator slot 26 are symmetrically arranged with respect to the large stator slot 26 in the middle position, and the one middle stator slot 27 on one side of the large stator slot 26 and the one middle stator slot 27 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 24, the large stator slot 26, the middle stator slot 27 and the small stator slot 25 in each stator slot group 2 are arranged in the form of "small - small - small - middle - large - middle - small - small - small". The center angles between the adjacent stator slots are equal, that is, the distance between the adjacent small stator slots 25, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 24, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 24, the total number of large stator slots 26, middle stator slots 27 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 24, the copper saving is measured to be 0.1-0.25kg/kW, and the efficiency of the motor reaches the efficiency value of IE5 standard.

### Embodiment 25

As shown in Fig. 36, the stator lamination with unequal slots used in the IE5 three-phase asynchronous motor based on cast aluminum rotor and stator lamination with unequal slots of embodiment 25 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including three large stator slots 26, two middle stator slots 27 and four small stator slots 25. The arrangement of the large stator slot 26, the middle stator slot 27 and the small stator slot 25 in the stator slot group 2 is as follows: the three large stator slots 26 are arranged in the middle of the stator slot group 2, the two sides of the three large stator slots 26 are respectively symmetrically arranged with two small stator slots 25, and between the large stator slot 26 and the small stator slot 25 are respectively symmetrically arranged with one middle stator slot 27. That is, the two small stator slots 25 on one side of the three large stator slots 26 and the two small stator slots 25 on the other side of the three large stator slots 26 are symmetrically arranged with respect to the large stator slot 26 in the middle position, and the one middle stator slot 27 on one side of the three large stator slots 26 and the one middle stator slot 27 on the other side of the three large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 25, the large stator slot 26, the middle stator slot 27 and the small stator slot 25 in each stator slot group 2 are arranged in the form of "small - small - middle - large - large - large - middle - small - small". The center angles between the adjacent stator slots are equal, that is, the distance between the adjacent large stator slots 26, the distance between the adjacent small stator slots 25, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 25, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 25, the total number of large stator slots 26, middle stator slots 27 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 25, the copper saving is measured to be 0.1-0.25kg/kW, and the efficiency of the motor reaches the efficiency value of IE5 standard.

### Embodiment 26

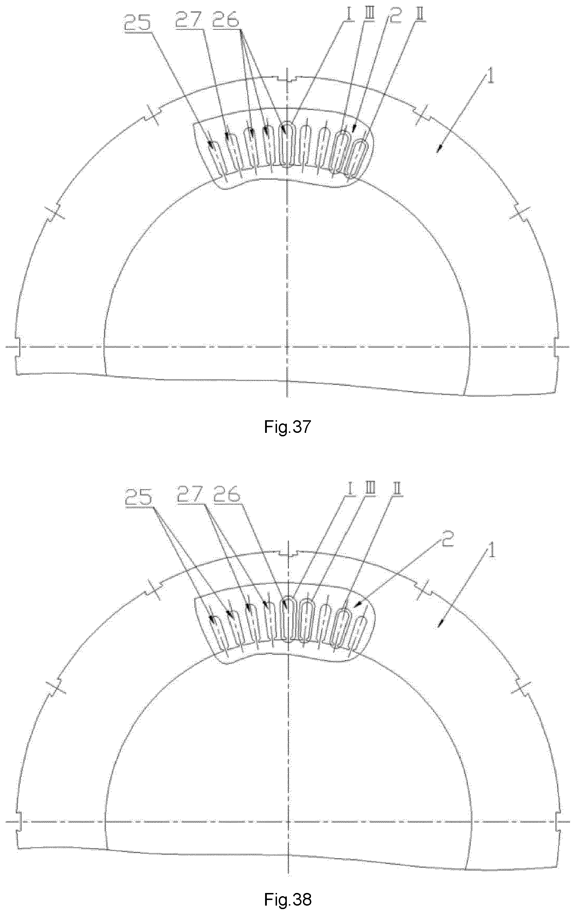

As shown in Fig. 37, the stator lamination with unequal slots used in the IE5 three-phase asynchronous motor based on cast aluminum rotor and stator lamination with unequal slots of embodiment 26 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including five large stator slots 26, two middle stator slots 27 and two small stator slots 25. The arrangement of the large stator slot 26, the middle stator slot 27 and the small stator slot 25 in the stator slot group 2 is as follows: the five large stator slots 26 are arranged in the middle of the stator slot group 2, the two sides of the five large stator slots 26 are respectively symmetrically arranged with one small stator slot 25, and between the large stator slot 26 and the small stator slot 25 are respectively symmetrically arranged with one middle stator slot 27. That is, the one small stator slot 25 on one side of the five large stator slots 26 and the one small stator slot 25 on the other side of the five large stator slots 26 are symmetrically arranged with respect to the large stator slot 26 in the middle position, and the one middle stator slot 27 on one side of the five large stator slots 26 and the one middle stator slot 27 on the other side of the five large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 26, the large stator slot 26, the middle stator slot 27 and the small stator slot 25 in each stator slot group 2 are arranged in the form of "small - middle - large - large - large - large - large - middle - small". The center angles between the adjacent stator slots are equal, that is, the distance between the adjacent large stator slots 26, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 26, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of

### embodiment 1.

For the stator lamination with unequal slots used in the IE5 three-phase asynchronous motor based on cast aluminum rotor and stator lamination with unequal slots of embodiment 26, the total number of large stator slots 26, middle stator slots 27 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 26, the copper saving is measured to be 0.1-0.25kg/kW, and the efficiency of the motor reaches the efficiency value of IE5 standard.

### Embodiment 27

As shown in Fig. 38, the stator lamination with unequal slots used in the IE5 three-phase asynchronous motor based on cast aluminum rotor and stator lamination with unequal slots of embodiment 27 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including one large stator slot 26, four middle stator slots 27 and four small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the one large stator slot 26 are respectively symmetrically arranged with two small stator slots 25, and between the large stator slot 26 and the small stator slot 25 are respectively symmetrically arranged with two middle stator slots 27. That is, the two small stator slots 25 on one side of the large stator slot 26 and the two small stator slots 25 on the other side of the large stator slot 26 are symmetrically arranged with respect to the large stator slot 26 in the middle position, and the two middle stator slots 27 on one side of the large stator slot 26 and the two middle stator slots 27 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 27, the large stator slot 26, the middle stator slot 27 and the small stator slot 25 in each stator slot group 2 are arranged in the form of "small - small - middle - middle - large - middle - middle - small - small". The center angles between the adjacent stator slots are equal, that is, the distance between the adjacent middle stator slots 27, the distance between the adjacent small stator slots 25, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 27, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 27, the total number of large stator slots 26, middle stator slots 27 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 27, the copper saving is measured to be 0.1-0.25kg/kW, and the efficiency of the motor reaches the efficiency value of IE5 standard.

### Embodiment 28

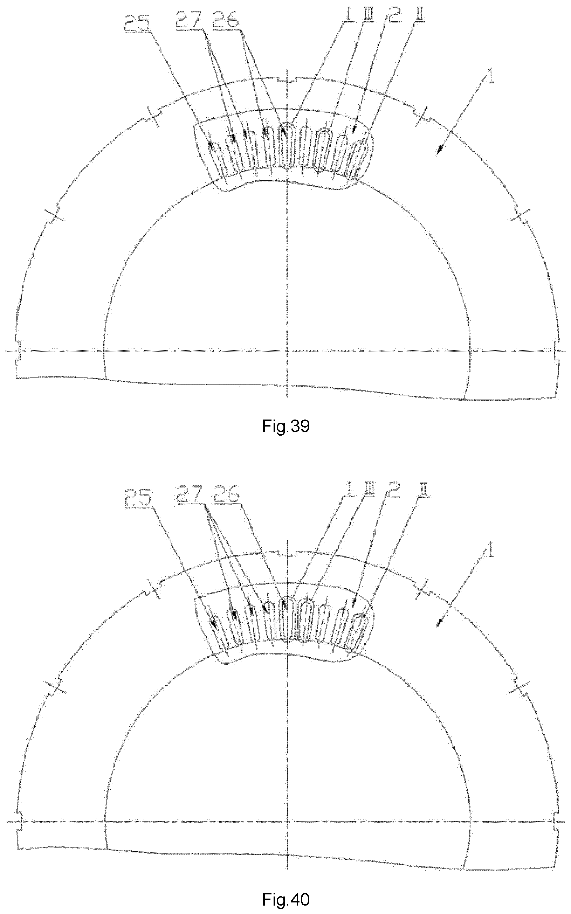

As shown in Fig. 39, the stator lamination with unequal slots used in the IE5 three-phase asynchronous motor based on cast aluminum rotor and stator lamination with unequal slots of embodiment 28 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including three large stator slots 26, four middle stator slots 27 and two small stator slots 25. The arrangement of the large stator slot 26, the middle stator slot 27 and the small stator slot 25 in the stator slot group 2 is as follows: the three large stator slots 26 are arranged in the middle of the stator slot group 2, the two sides of the three large stator slots 26 are respectively symmetrically arranged with one small stator slot 25, and between the large stator slot 26 and the small stator slot 25 are respectively symmetrically arranged with two middle stator slots 27. That is, the one small stator slot 25 on one side of the three large stator slots 26 and the one small stator slot 25 on the other side of the three large stator slots 26 are symmetrically arranged with respect to the large stator slot 26 in the middle position, and the two middle stator slots 27 on one side of the three large stator slots 26 and the two middle stator slots 27 on the other side of the three large stator slots 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 28, the large stator slot 26, the middle stator slot 27 and the small stator slot 25 in each stator slot group 2 are arranged in the form of "small - middle - middle - large - large - large - middle - middle - small". The center angles between the adjacent stator slots are equal, that is, the distance between the adjacent large stator slots 26, the distance between the adjacent middle stator slots 27, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 28, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 28, the total number of large stator slots 26, middle stator slots 27 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 28, the copper saving is measured to be 0.1-0.25kg/kW, and the efficiency of the motor reaches the efficiency value of IE5 standard.

### Embodiment 29

As shown in Fig. 40, the stator lamination with unequal slots used in the IE5 three-phase asynchronous motor based on cast aluminum rotor and stator lamination with unequal slots of embodiment 29 includes a ring-shaped second substrate 1, and at least six stator slot groups 2 for placing copper wire which are radially uniformly arranged on the inner ring surface of the second substrate 1 along the circumference direction of the second substrate 1. The number of stator slots per pole and phase in each stator slot group 2 is nine, including one large stator slot 26, six middle stator slots 27 and two small stator slots 25. The arrangement of the large stator slot 26, the middle stator slot 27 and the small stator slot 25 in the stator slot group 2 is as follows: the one large stator slot 26 is arranged in the middle of the stator slot group 2, the two sides of the one large stator slot 26 are respectively symmetrically arranged with one small stator slot 25, and between the large stator slot 26 and the small stator slot 25 are respectively symmetrically arranged with three middle stator slots 27. That is, the one small stator slot 25 on one side of the large stator slot 26 and the one small stator slot 25 on the other side of the large stator slot 26 are symmetrically arranged with respect to the large stator slot 26 in the middle position, and the three middle stator slots 27 on one side of the large stator slot 26 and the three middle stator slots 27 on the other side of the large stator slot 26 are symmetrically arranged with respect to the large stator slot 26 in the middle position. Therefore, in the stator lamination with unequal slots used in the IE5 three-phase asynchronous motor based on cast aluminum rotor and stator lamination with unequal slots of embodiment 29, the large stator slot 26, the middle stator slot 27 and the small stator slot 25 in each stator slot group 2 are arranged in the form of "small - middle - middle - middle - large - middle - middle - middle - small". The center angles between the adjacent stator slots are equal, that is, the distance between the adjacent middle stator slots 27, the distance between the adjacent large stator slot 26 and middle stator slot 27, and the distance between the adjacent middle stator slot 27 and small stator slot 25, along the circumference direction of the second substrate 1 is equal.

In the stator lamination with unequal slots used in the IE5 three-phase asynchronous motor based on cast aluminum rotor and stator lamination with unequal slots of embodiment 29, the basic slot shape of large stator slot 26, middle stator slot 27 and small stator slot 25, will not be described in detail here because they are the same as those of embodiment 5, and the setting of buckle groove 3 and processing groove 4, the structure of concave slot wedge 30 and convex slot wedge 40, will not be described in detail here because they are the same as those of embodiment 1.

For the stator lamination with unequal slots used in the IE5 three-phase asynchronous motor based on cast aluminum rotor and stator lamination with unequal slots of embodiment 29, the total number of large stator slots 26, middle stator slots 27 and small stator slots 25 in each stator slot group 2 is 27 × n, that is, 3 (phase) × 9 (number of slots per pole and phase) × n, where n is the number of poles of the motor.

According to the test data of the IE5 three-phase asynchronous motor based on cast aluminum rotor and stator lamination with unequal slots of embodiment 29, the copper saving is measured to be 0.1-0.25kg/kW, and the efficiency of the motor reaches the efficiency value of IE5 standard.

It should be noted that in the context of this application, the terms such as "first" and "second" are only used to distinguish one component or operation from another, and do not necessarily require or imply any such actual relationship or order between these components or operations. Moreover, the terms "include", "comprise" or any other variation thereof are intended to cover non-exclusive inclusion, so that a process, method, article or device including a series of elements includes not only those elements, but also other elements not explicitly listed, or elements inherent in such process, method, article or device. In addition, unless otherwise specified, "front", "back", "left", "right", "up", "down", "inside" and "outside" in the context of this application are all referred to the placement state shown in the figure.

It is to be understood that the foregoing description relates to exemplary embodiments of the present invention and that modifications may be made without departing from the scope of the present application as set forth in the claims.

## Claims

1. An IE5 three-phase asynchronous motor based on cast aluminum rotor and stator lamination with unequal slots, comprising a shaft (100), a front end cap (101), a bearing (102), a junction box (103), a stator (104), a rotor (105), a motor frame (106), a rear end cap (107), a fan (108) and a fan cover (109), wherein the rotor (105) is installed in the inner cavity of the stator (104), the center of the rotor (105) is provided with a shaft hole in which the shaft (100) is installed, the bearing (102) installed on the shaft (100) supports the rotor (105) on the front end cap (101) and the rear end cap (107), wherein
the rotor (105) is composed of a rotor core (1051) and a rotor winding (1052), the rotor core (1051) is made by laminating a plurality of rotor laminations, the rotor lamination includes a ring-shaped first substrate (11), a plurality of closed slots (12) are radially uniformly arranged on the outer ring surface of the first substrate (11) along the circumference direction of the first substrate (11), all the closed slots (12) of the plurality of rotor laminations together form the rotor winding trunking, aluminum guide strips (13) are cast in the rotor winding trunking and form the rotor winding(1052);
the stator (104) is composed of stator winding (1041) and stator core (1042), the stator core (1042) is made by laminating a plurality of stator laminations with unequal slots, wherein
the stator lamination with unequal slots includes a ring-shaped second substrate (1), at least six stator slot groups (2) for placing copper wire are radially and uniformly arranged on the inner ring surface of the second substrate (1) along the circumference direction of the second substrate (1), the number of stator slots per pole and phase in each stator slot group (2) is at least three, the number and arrangement of the stator slots are one of the following forms: (i) the stator slots per pole and phase in each stator slot group (2) include at least one large stator slot (26) and at least two small stator slots (25), the large stator slot (26) is arranged in the middle of the stator slot group (2), the two sides of the large stator slot (26) are respectively arranged with one or more small stator slots (25), the one or more small stator slots (25) on one side of the large stator slot (26) and the one or more small stator slots (25) on the other side of the large stator slot (26) are symmetrically arranged with respect to the large stator slot (26); or (ii) the stator slots per pole and phase in each stator slot group (2) include at least one large stator slot (26), at least two middle stator slots (27) and at least two small stator slots (25), the large stator slot (26) is arranged in the middle of the stator slot group (2), the two sides of the large stator slot (26) are respectively arranged with one or more small stator slots (25), and between the large stator slot (26) and the small stator slot (25) are respectively arranged with one or more middle stator slots (27), the one or more small stator slots (25) on one side of the large stator slot (26) and the one or more small stator slots (25) on the other side of the large stator slot (26) are respectively symmetrically arranged with respect to the large stator slot (26), the one or more middle stator slots (27) on one side of the large stator slot (26) and the one or more middle stator slots (27) on the other side of the large stator slot (26) are respectively symmetrically arranged with respect to the large stator slot (26);
the area of the small stator slot (25) is 80% - 95% of that of the large stator slot (26), the area of the middle stator slot (27) is between that of the small stator slot (25) and the large stator slot (26), and the center angles between the adjacent stator slots are equal;
the large stator slot (26), the middle stator slot (27) and the small stator slot (25) are semi closed shaped slots composed of a rectangular slot (21), a first isosceles trapezoidal slot (22), a second isosceles trapezoidal slot (23) and a semicircle slot (24), one end of the stator slot close to the inner ring surface of the second substrate (1) is set as the rectangular slot (21), the width of the rectangular slot (21) defining the slot width of the stator lamination is 2.5-4.2mm, the height of the rectangular slot (21) defining the slot height of the stator lamination is 0.9-2.0mm, the second isosceles trapezoidal slot (23) is arranged at the end of the first isosceles trapezoidal slot (22) far from the center of the second substrate (1), the upper base of the first isosceles trapezoidal slot (22) is collinear with the long side of the rectangular slot (21), the lower base of the first isosceles trapezoidal slot (22) is collinear with the upper base of the second isosceles trapezoidal slot (23), the width of the lower base of the first isosceles trapezoidal slot (22) defining the slot shoulder width of the stator lamination is 5-10mm, the angle between the hypotenuse and the lower base of the first isosceles trapezoidal slot (22) defining the slot angle of the stator lamination is 20°-30°, the width of the lower base of the second isosceles trapezoidal slot (23) is 8-15mm, and the height of the second isosceles trapezoidal slot (23) is 12-40mm, the semicircle slot (24) is arranged at the lower base of the second isosceles trapezoidal slot (23), and the diameter of the semicircle slot (24) is equal to the width of the lower base of the second isosceles trapezoidal slot (23);
all the large stator slots (26), the middle stator slot (27) and the small stator slots (25) of the plurality of stator laminations with unequal slots which form the stator core (1042) by laminating respectively form a large slot of stator winding, a middle slot of stator winding and a small slot of stator winding, the stator winding coil (1041) made of copper wire is embedded in the large slot of stator winding, the middle slot of stator winding and the small slot of stator winding so as to form the stator winding, concave slot wedge (30) or convex slot wedge (40) are respectively blocked in the large slot of stator winding, the middle slot of stator winding and the small slot of stator winding embedded with the stator winding;
the concave slot wedge (30) includes a rectangular main part (301), a recess (302) provided on the bottom surface of the rectangular main part (301), and an oblique part (303) provided on both sides of the recess (302), the width of the rectangular main part (301) is 0.7mm smaller than the slot shoulder width of the stator lamination, the angle between the hypotenuse of the oblique part (303) and the bottom surface of the rectangular main part (301) is equal to the slot angle of the stator lamination, the width of the recess (302) is the same as the slot width of the stator lamination, and the height of the rectangular main part (301) is 1.5-2mm;
the convex slot wedge (40) includes a rectangular main part (401), an isosceles trapezoidal part (402) provided on the bottom surface of the rectangular main part (401), and a bump (403) protruding from the isosceles trapezoidal part (402), the width of the rectangular main part (401) is 1-3 mm smaller than the slot shoulder width of the stator lamination, the width of the bump (403) is 0.1mm smaller than the slot width of the stator lamination, the height of the bump (403) is 0.3mm smaller than the slot height of the stator lamination, the angle between the hypotenuse of the isosceles trapezoidal part (402) and the bottom surface of the rectangular main part (401) is equal to the slot angle of the stator lamination.

2. The IE5 three-phase asynchronous motor based on cast aluminum rotor and stator lamination with unequal slots according to claim 1, **characterized in that** the number of stator slots per pole and phase in each stator slot group (2) is three, including one large stator slot (26) and two small stator slots (25), the one large stator slot (26) is arranged in the middle of the stator slot group (2), and the two sides of the one large stator slot (26) are respectively symmetrically arranged with one small stator slot (25), the one small stator slot (25) on one side of the large stator slot (26) and the one small stator slot (25) on the other side of the large stator slot (26) are symmetrically arranged with respect to the large stator slot (26) in the middle position.

3. The IE5 three-phase asynchronous motor based on cast aluminum rotor and stator lamination with unequal slots according to claim 1, **characterized in that** the number of stator slots per pole and phase in each stator slot group (2) is four, including two large stator slots (26) and two small stator slots (25), the two large stator slots (26) are arranged in the middle of the stator slot group (2), and the two sides of the two large stator slots (26) are respectively symmetrically arranged with one small stator slot (25), the one small stator slot (25) on one side of the two large stator slots (26) and the one small stator slot (25) on the other side of the two large stator slots (26) are symmetrically arranged with respect to the center line of the two large stator slots (26) along the circumference direction of the second substrate (1).

4. The IE5 three-phase asynchronous motor based on cast aluminum rotor and stator lamination with unequal slots according to claim 1, **characterized in that** the number of stator slots per pole and phase in each stator slot group (2) is five, including large stator slots (26) and small stator slots (25), and the number and arrangement of the large stator slots (26) and the small stator slots (25) are one or more of the following forms:
(i) the five stator slots per pole and phase in each stator slot group (2) include one large stator slot (26) and four small stator slots (25), the one large stator slot (26) is arranged in the middle of the stator slot group (2), and the two sides of the large stator slot (26) are respectively symmetrically arranged with two small stator slots (25), the two small stator slots (25) on one side of the large stator slot (26) and the two small stator slots (25) on the other side of the large stator slot (26) are symmetrically arranged with respect to the large stator slot (26) in the middle position;
(ii) the five stator slots per pole and phase in each stator slot group (2) include three large stator slot (26) and two small stator slots (25), the three large stator slot (26) are arranged in the middle of the stator slot group (2), and the two sides of the three large stator slots (26) are respectively symmetrically arranged with one small stator slot (25), the one small stator slot (25) on one side of the three large stator slots (26) and the one small stator slot (25) on the other side of the three large stator slots (26) are symmetrically arranged with respect to the large stator slot (26) in the middle position.

5. The IE5 three-phase asynchronous motor based on cast aluminum rotor and stator lamination with unequal slots according to claim 1, **characterized in that** the number of stator slots per pole and phase in each stator slot group (2) is six, including large stator slots (26) and small stator slots (25), and the number and arrangement of the large stator slots (26) and the small stator slots (25) are one or more of the following forms:
(i) the six stator slots per pole and phase in each stator slot group (2) include two large stator slots (26) and four small stator slots (25), the two large stator slots (26) are arranged in the middle of the stator slot group (2), and the two sides of the two large stator slots (26) are respectively symmetrically arranged with two small stator slots (25), the two small stator slots (25) on one side of the two large stator slots (26) and the two small stator slots (25) on the other side of the two large stator slots (26) are symmetrically arranged with respect to the center line of the two large stator slots (26) along the circumference direction of the second substrate (1);
(ii) the six stator slots per pole and phase in each stator slot group (2) include four large stator slots (26) and two small stator slots (25), the four large stator slots (26) are arranged in the middle of the stator slot group (2), and the two sides of the four large stator slots (26) are respectively symmetrically arranged with one small stator slot (25), the one small stator slot (25) on one side of the four large stator slots (26) and the one small stator slot (25) on the other side of the four large stator slots (26) are symmetrically arranged with respect to the center line of the four large stator slots (26) along the circumference direction of the second substrate (1).

6. The IE5 three-phase asynchronous motor based on cast aluminum rotor and stator lamination with unequal slots according to claim 1, **characterized in that** the number of stator slots per pole and phase in each stator slot group (2) is seven, including large stator slots (26) and small stator slots (25), and the number and arrangement of the large stator slots (26) and the small stator slots (25) are one or more of the following forms:
(i) the seven stator slots per pole and phase in each stator slot group (2) include one large stator slot (26) and six small stator slots (25), the one large stator slot (26) is arranged in the middle of the stator slot group (2), and the two sides of the large stator slot (26) are respectively symmetrically arranged with three small stator slots (25), the three small stator slots (25) on one side of the large stator slot (26) and the three small stator slots (25) on the other side of the large stator slot (26) are symmetrically arranged with respect to the large stator slot (26) in the middle position;
(ii) the seven stator slots per pole and phase in each stator slot group (2) include three large stator slots (26) and four small stator slots (25), the three large stator slots (26) are arranged in the middle of the stator slot group (2), and the two sides of the three large stator slots (26) are respectively symmetrically arranged with two small stator slots (25), the two small stator slots (25) on one side of the three large stator slots (26) and the two small stator slots (25) on the other side of the three large stator slots (26) are symmetrically arranged with respect to the large stator slot (26) in the middle position;
(iii) the seven stator slots per pole and phase in each stator slot group (2) include five large stator slots (26) and two small stator slots (25), the five large stator slots (26) are arranged in the middle of the stator slot group (2), and the two sides of the five large stator slots (26) are respectively symmetrically arranged with one small stator slot (25), the one small stator slot (25) on one side of the five large stator slots (26) and the one small stator slot (25) on the other side of the five large stator slots (26) are symmetrically arranged with respect to the large stator slot (26) in the middle position.

7. The IE5 three-phase asynchronous motor based on cast aluminum rotor and stator lamination with unequal slots according to claim 1, **characterized in that** the number of stator slots per pole and phase in each stator slot group (2) is eight, including large stator slots (26) and small stator slots (25), and the number and arrangement of the large stator slots (26) and the small stator slots (25) are one or more of the following forms:
(i) the eight stator slots per pole and phase in each stator slot group (2) include two large stator slots (26) and six small stator slots (25), the two large stator slots (26) are arranged in the middle of the stator slot group (2), and the two sides of the two large stator slots (26) are respectively symmetrically arranged with three small stator slots (25), the three small stator slots (25) on one side of the two large stator slots (26) and the three small stator slots (25) on the other side of the two large stator slots (26) are symmetrically arranged with respect to the center line of the two large stator slots (26) along the circumference direction of the second substrate (1);
(ii) the eight stator slots per pole and phase in each stator slot group (2) include four large stator slots (26) and four small stator slots (25), the four large stator slots (26) are arranged in the middle of the stator slot group (2), and the two sides of the four large stator slots (26) are respectively symmetrically arranged with two small stator slots (25), the two small stator slots (25) on one side of the four large stator slots (26) and the two small stator slots (25) on the other side of the four large stator slots (26) are symmetrically arranged with respect to the center line of the four large stator slots (26) along the circumference direction of the second substrate (1);
(iii) the eight stator slots per pole and phase in each stator slot group (2) include six large stator slots (26) and two small stator slots (25), the six large stator slots (26) are arranged in the middle of the stator slot group (2), and the two sides of the six large stator slots (26) are respectively symmetrically arranged with one small stator slot (25), the one small stator slot (25) on one side of the six large stator slots (26) and the one small stator slot (25) on the other side of the six large stator slots (26) are symmetrically arranged with respect to the center line of the six large stator slots (26) along the circumference direction of the second substrate (1).

8. The IE5 three-phase asynchronous motor based on cast aluminum rotor and stator lamination with unequal slots according to claim 1, **characterized in that** the number of stator slots per pole and phase in each stator slot group (2) is nine, including large stator slots (26) and small stator slots (25), and the number and arrangement of the large stator slots (26) and the small stator slots (25) are one or more of the following forms:
(i) the nine stator slots per pole and phase in each stator slot group (2) include one large stator slot (26) and eight small stator slots (25), the one large stator slot (26) is arranged in the middle of the stator slot group (2), and the two sides of the large stator slot (26) are respectively symmetrically arranged with four small stator slots (25), the four small stator slots (25) on one side of the large stator slot (26) and the four small stator slots (25) on the other side of the large stator slot (26) are symmetrically arranged with respect to the large stator slot (26) in the middle position;
(ii) the nine stator slots per pole and phase in each stator slot group (2) include three large stator slots (26) and six small stator slots (25), the three large stator slots (26) are arranged in the middle of the stator slot group (2), and the two sides of the three large stator slots (26) are respectively symmetrically arranged with three small stator slots (25), the three small stator slots (25) on one side of the three large stator slots (26) and the three small stator slots (25) on the other side of the three large stator slots (26) are symmetrically arranged with respect to the large stator slot (26) in the middle position;
(iii) the nine stator slots per pole and phase in each stator slot group (2) include five large stator slots (26) and four small stator slots (25), the five large stator slots (26) are arranged in the middle of the stator slot group (2), and the two sides of the five large stator slots (26) are respectively symmetrically arranged with two small stator slots (25), the two small stator slots (25) on one side of the five large stator slots (26) and the two small stator slots (25) on the other side of the five large stator slots (26) are symmetrically arranged with respect to the large stator slot (26) in the middle position;
(iv) the nine stator slots per pole and phase in each stator slot group (2) include seven large stator slots (26) and two small stator slots (25), the seven large stator slots (26) are arranged in the middle of the stator slot group (2), and the two sides of the seven large stator slots (26) are respectively symmetrically arranged with one small stator slot (25), the one small stator slot (25) on one side of the seven large stator slots (26) and the one small stator slot (25) on the other side of the seven large stator slots (26) are symmetrically arranged with respect to the large stator slot (26) in the middle position.

9. The IE5 three-phase asynchronous motor based on cast aluminum rotor and stator lamination with unequal slots according to claim 1, **characterized in that** the number of stator slots per pole and phase in each stator slot group (2) is five, including one large stator slot (26), two middle stator slots (27) and two small stator slots (25), the one large stator slot (26) is arranged in the middle of the stator slot group (2), the two sides of the large stator slot (26) are respectively arranged with one small stator slot (25), and between the large stator slot (26) and the small stator slot (25) are respectively arranged with one middle stator slot (27), the one small stator slot (25) on one side of the large stator slot (26) and the one small stator slot (25) on the other side of the large stator slot (26) are symmetrically arranged with respect to the large stator slot (26) in the middle position, and the one middle stator slot (27) on one side of the large stator slot (26) and the one middle stator slot (27) on the other side of the large stator slot (26) are symmetrically arranged with respect to the large stator slot (26) in the middle position.

10. The IE5 three-phase asynchronous motor based on cast aluminum rotor and stator lamination with unequal slots according to claim 1, **characterized in that** the number of stator slots per pole and phase in each stator slot group (2) is six, including two large stator slots (26), two middle stator slots (27) and two small stator slots (25), the two large stator slots (26) are arranged in the middle of the stator slot group (2), the two sides of the two large stator slots (26) are respectively arranged with one small stator slot (25), and between the large stator slot (26) and the small stator slot (25) are respectively arranged with one middle stator slot (27), the one small stator slot (25) on one side of the two large stator slots (26) and the one small stator slot (25) on the other side of the two large stator slots (26) are symmetrically arranged with respect to the center line of the two large stator slots (26) along the circumference direction of the second substrate (1), and the one middle stator slot (27) on one side of the two large stator slots (26) and the one middle stator slot (27) on the other side of the two large stator slots (26) are symmetrically arranged with respect to the center line of the two large stator slots (26) along the circumference direction of the second substrate (1).

11. The IE5 three-phase asynchronous motor based on cast aluminum rotor and stator lamination with unequal slots according to claim 1, **characterized in that** the number of stator slots per pole and phase in each stator slot group (2) is seven, including large stator slots (26), middle stator slots (27) and small stator slots (25), and the number and arrangement of the large stator slots (26), the middle stator slot (27) and the small stator slots (25) are one or more of the following forms:
(i) the seven stator slots per pole and phase in each stator slot group (2) include one large stator slot (26), two middle stator slots (27) and four small stator slots (25), the one large stator slot (26) is arranged in the middle of the stator slot group (2), the two sides of the large stator slot (26) are respectively arranged with two small stator slots (25), and between the large stator slot (26) and the small stator slot (25) are respectively arranged with one middle stator slot (27), the two small stator slots (25) on one side of the large stator slot (26) and the two small stator slots (25) on the other side of the large stator slot (26) are symmetrically arranged with respect to the large stator slot (26) in the middle position, and the one middle stator slot (27) on one side of the large stator slot (26) and the one middle stator slot (27) on the other side of the large stator slot (26) are symmetrically arranged with respect to the large stator slot (26) in the middle position;
(ii) the seven stator slots per pole and phase in each stator slot group (2) include three large stator slots (26), two middle stator slots (27) and two small stator slots (25), the three large stator slots (26) are arranged in the middle of the stator slot group (2), the two sides of the three large stator slots (26) are respectively arranged with one small stator slot (25), and between the large stator slot (26) and the small stator slot (25) are respectively arranged with one middle stator slot (27), the one small stator slot (25) on one side of the three large stator slots (26) and the one small stator slot (25) on the other side of the three large stator slots (26) are symmetrically arranged with respect to the large stator slot (26) in the middle position, and the one middle stator slot (27) on one side of the three large stator slots (26) and the one middle stator slot (27) on the other side of the three large stator slots (26) are symmetrically arranged with respect to the large stator slot (26) in the middle position;
(iii) the seven stator slots per pole and phase in each stator slot group (2) include one large stator slot (26), four middle stator slots (27) and two small stator slots (25), the one large stator slot (26) is arranged in the middle of the stator slot group (2), the two sides of the large stator slot (26) are respectively arranged with one small stator slot (25), and between the large stator slot (26) and the small stator slot (25) are respectively arranged with two middle stator slots (27), the one small stator slot (25) on one side of the large stator slot (26) and the one small stator slot (25) on the other side of the large stator slot (26) are symmetrically arranged with respect to the large stator slot (26) in the middle position, and the two middle stator slots (27) on one side of the large stator slot (26) and the two middle stator slots (27) on the other side of the large stator slot (26) are symmetrically arranged with respect to the large stator slot (26) in the middle position.

12. The IE5 three-phase asynchronous motor based on cast aluminum rotor and stator lamination with unequal slots according to claim 1, **characterized in that** the number of stator slots per pole and phase in each stator slot group (2) is eight, including large stator slots (26), middle stator slots (27) and small stator slots (25), and the number and arrangement of the large stator slots (26), the middle stator slot (27) and the small stator slots (25) are one or more of the following forms:
(i) the eight stator slots per pole and phase in each stator slot group (2) include four large stator slots (26), two middle stator slots (27) and two small stator slots (25), the four large stator slots (26) are arranged in the middle of the stator slot group (2), the two sides of the four large stator slots (26) are respectively arranged with one small stator slot (25), and between the large stator slot (26) and the small stator slot (25) are respectively arranged with one middle stator slot (27), the one small stator slot (25) on one side of the four large stator slots (26) and the one small stator slot (25) on the other side of the four large stator slots (26) are symmetrically arranged with respect to the center line of the four large stator slots (26) along the circumference direction of the second substrate (1), and the one middle stator slot (27) on one side of the four large stator slots (26) and the one middle stator slot (27) on the other side of the four large stator slots (26) are symmetrically arranged with respect to the center line of the four large stator slots (26) along the circumference direction of the second substrate (1);
(ii) the eight stator slots per pole and phase in each stator slot group (2) include two large stator slots (26), four middle stator slots (27) and two small stator slots (25), the two large stator slots (26) are arranged in the middle of the stator slot group (2), the two sides of the two large stator slots (26) are respectively arranged with one small stator slot (25), and between the large stator slot (26) and the small stator slot (25) are respectively arranged with two middle stator slots (27), the one small stator slot (25) on one side of the two large stator slots (26) and the one small stator slot (25) on the other side of the two large stator slots (26) are symmetrically arranged with respect to the center line of the two large stator slots (26) along the circumference direction of the second substrate (1), and the two middle stator slots (27) on one side of the two large stator slots (26) and the two middle stator slots (27) on the other side of the two large stator slots (26) are symmetrically arranged with respect to the center line of the two large stator slots (26) along the circumference direction of the second substrate (1).

13. The IE5 three-phase asynchronous motor based on cast aluminum rotor and stator lamination with unequal slots according to claim 1, **characterized in that** the number of stator slots per pole and phase in each stator slot group (2) is nine, including large stator slots (26), middle stator slots (27) and small stator slots (25), and the number and arrangement of the large stator slots (26), the middle stator slot (27) and the small stator slots (25) are one or more of the following forms:
(i) the nine stator slots per pole and phase in each stator slot group (2) include one large stator slot (26), two middle stator slots (27) and six small stator slots (25), the one large stator slot (26) is arranged in the middle of the stator slot group (2), the two sides of the large stator slot (26) are respectively arranged with three small stator slots (25), and between the large stator slot (26) and the small stator slot (25) are respectively arranged with one middle stator slot (27), the three small stator slots (25) on one side of the large stator slot (26) and the three small stator slots (25) on the other side of the large stator slot (26) are symmetrically arranged with respect to the large stator slot (26) in the middle position, and the one middle stator slot (27) on one side of the large stator slot (26) and the one middle stator slot (27) on the other side of the large stator slot (26) are symmetrically arranged with respect to the large stator slot (26) in the middle position;
(ii) the nine stator slots per pole and phase in each stator slot group (2) include three large stator slots (26), two middle stator slots (27) and four small stator slots (25), the three large stator slots (26) are arranged in the middle of the stator slot group (2), the two sides of the three large stator slots (26) are respectively arranged with two small stator slots (25), and between the large stator slot (26) and the small stator slot (25) are respectively arranged with one middle stator slot (27), the two small stator slots (25) on one side of the three large stator slots (26) and the two small stator slots (25) on the other side of the three large stator slots (26) are symmetrically arranged with respect to the large stator slot (26) in the middle position, and the one middle stator slot (27) on one side of the three large stator slots (26) and the one middle stator slot (27) on the other side of the three large stator slots (26) are symmetrically arranged with respect to the large stator slot (26) in the middle position;
(iii) the nine stator slots per pole and phase in each stator slot group (2) include five large stator slots (26), two middle stator slots (27) and two small stator slots (25), the five large stator slots (26) are arranged in the middle of the stator slot group (2), the two sides of the five large stator slots (26) are respectively arranged with one small stator slot (25), and between the large stator slot (26) and the small stator slot (25) are respectively arranged with one middle stator slot (27), the one small stator slot (25) on one side of the five large stator slots (26) and the one small stator slot (25) on the other side of the five large stator slots (26) are symmetrically arranged with respect to the large stator slot (26) in the middle position, and the one middle stator slot (27) on one side of the five large stator slots (26) and the one middle stator slot (27) on the other side of the five large stator slots (26) are symmetrically arranged with respect to the large stator slot (26) in the middle position;
(iv) the nine stator slots per pole and phase in each stator slot group (2) include one large stator slot (26), four middle stator slots (27) and four small stator slots (25), the one large stator slot (26) is arranged in the middle of the stator slot group (2), the two sides of the large stator slot (26) are respectively arranged with two small stator slots (25), and between the large stator slot (26) and the small stator slot (25) are respectively arranged with two middle stator slots (27), the two small stator slots (25) on one side of the large stator slot (26) and the two small stator slots (25) on the other side of the large stator slot (26) are symmetrically arranged with respect to the large stator slot (26) in the middle position, and the two middle stator slots (27) on one side of the large stator slot (26) and the two middle stator slots (27) on the other side of the large stator slot (26) are symmetrically arranged with respect to the large stator slot (26) in the middle position;
(v) the nine stator slots per pole and phase in each stator slot group (2) include three large stator slots (26), four middle stator slots (27) and two small stator slots (25), the three large stator slots (26) are arranged in the middle of the stator slot group (2), the two sides of the three large stator slots (26) are respectively arranged with one small stator slot (25), and between the large stator slot (26) and the small stator slot (25) are respectively arranged with two middle stator slots (27), the one small stator slot (25) on one side of the three large stator slots (26) and the one small stator slot (25) on the other side of the three large stator slots (26) are symmetrically arranged with respect to the large stator slot (26) in the middle position, and the two middle stator slots (27) on one side of the three large stator slots (26) and the two middle stator slots (27) on the other side of the three large stator slots (26) are symmetrically arranged with respect to the large stator slot (26) in the middle position;
(vi) the nine stator slots per pole and phase in each stator slot group (2) include one large stator slot (26), six middle stator slots (27) and two small stator slots (25), the one large stator slot (26) is arranged in the middle of the stator slot group (2), the two sides of the large stator slot (26) are respectively arranged with one small stator slot (25), and between the large stator slot (26) and the small stator slot (25) are respectively arranged with three middle stator slots (27), the one small stator slot (25) on one side of the large stator slot (26) and the one small stator slot (25) on the other side of the large stator slot (26) are symmetrically arranged with respect to the large stator slot (26) in the middle position, and the three middle stator slots (27) on one side of the large stator slot (26) and the three middle stator slots (27) on the other side of the large stator slot (26) are symmetrically arranged with respect to the large stator slot (26) in the middle position.

14. The IE5 three-phase asynchronous motor based on cast aluminum rotor and stator lamination with unequal slots according to any one of claims 1 to 13, **characterized in that** 8-16 buckle grooves (3) are uniformly arranged on the outer ring surface of the second substrate (1) along the circumference direction of the second substrate (1) to install the buckle, the lower base of the buckle groove (3) is set as a straight line, the upper base of the buckle groove (3) is naturally opened along the circumference direction of the second substrate (1), the width of the buckle groove (3) is 14-25mm, the height of the buckle groove (3) is 3-5mm, the angle between the hypotenuse and the base of the buckle groove (3) is 15°-25°, and a processing groove (4) is set at the bottom of any one of the buckle groove (3).

## Patentansprüche

1. IE5-Drehstrom-Asynchronmotor auf der Basis von Aluminiumguss-Rotor- und -Statorblechen mit ungleichen Nuten, mit einer Welle (100), einer vorderen Endkappe (101), einem Lager (102), einem Anschlusskasten (103), einem Stator (104), einem Rotor (105), einem Motorrahmen (106), einer hinteren Endkappe (107), einem Lüfter (108) und einer Lüfterabdeckung (109), wobei der Rotor (105) in dem inneren Hohlraum des Stators (104) installiert ist, die Mitte des Rotors (105) mit einem Wellenloch versehen ist, in dem die Welle (100) installiert ist, das auf der Welle (100) installierte Lager (102) den Rotor (105) auf der vorderen Endkappe (101) und der hinteren Endkappe (107) trägt, wobei
der Rotor (105) aus einem Rotorkern (1051) und einer Rotorwicklung (1052) besteht, der Rotorkern (1051) durch Laminieren einer Vielzahl von Rotorlaminaten hergestellt ist, das Rotorlaminat ein ringförmiges erstes Substrat (11) enthält, eine Vielzahl von geschlossenen Nuten (12) sind radial gleichmäßig auf der äußeren Ringfläche des ersten Substrats (11) entlang der Umfangsrichtung des ersten Substrats (11) angeordnet, alle geschlossenen Nuten (12) der Vielzahl von Rotorblechen bilden zusammen den Rotorwicklungskanal, Aluminiumführungsstreifen (13) sind in den Rotorwicklungskanal eingegossen und bilden die Rotorwicklung (1052);
der Stator (104) aus einer Statorwicklung (1041) und einem Statorkern (1042) besteht, wobei der Statorkern (1042) durch Laminieren einer Vielzahl von Statorblechen mit ungleichen Nuten hergestellt ist, wobei
das Statorblech mit ungleichen Nuten ein ringförmiges zweites Substrat (1) umfasst, mindestens sechs Statornutgruppen (2) zum Anbringen von Kupferdraht radial und gleichmäßig auf der inneren Ringfläche des zweiten Substrats (1) entlang der Umfangsrichtung des zweiten Substrats (1) angeordnet sind, die Anzahl der Statornuten pro Pol und Phase in jeder Statornutgruppe (2) mindestens drei beträgt, die Anzahl und Anordnung der Statornuten eine der folgenden Formen ist: (i) die Statornuten pro Pol und Phase in jeder Statornutgruppe (2) umfassen mindestens eine große Statornut (26) und mindestens zwei kleine Statornuten (25), die große Statornut (26) ist in der Mitte der Statornutgruppe (2) angeordnet, die beiden Seiten der großen Statornut (26) sind jeweils mit einer oder mehreren kleinen Statornuten (25) angeordnet, die eine oder mehreren kleinen Statornuten (25) auf einer Seite der großen Statornut (26) und die eine oder mehreren kleinen Statornuten (25) auf der anderen Seite der großen Statornut (26) symmetrisch in Bezug auf die große Statornut (26) angeordnet sind, oder (ii) die Statornuten pro Pol und Phase in jeder Statornutgruppe (2) mindestens eine große Statornut (26), mindestens zwei mittlere Statornuten (27) und mindestens zwei kleine Statornuten (25) umfassen, wobei die große Statornut (26) in der Mitte der Statornutgruppe (2) angeordnet ist, die beiden Seiten der großen Statornut (26) jeweils mit einem oder mehreren kleinen Statornuten (25) angeordnet sind, und zwischen der großen Statornut (26) und der kleinen Statornut (25) jeweils ein oder mehrere mittlere Statornuten (27) angeordnet sind, die eine oder die mehreren kleinen Statornuten (25) auf einer Seite der großen Statornut (26) und die eine oder die mehreren kleinen Statornuten (25) auf der anderen Seite der großen Statornut (26) jeweils symmetrisch in Bezug auf die großen Statornut (26) angeordnet sind, die eine oder die mehreren mittleren Statornuten (27) auf einer Seite der großen Statornut (26) und die eine oder die mehreren mittleren Statornuten (27) auf der anderen Seite der großen Statornut (26) jeweils symmetrisch in Bezug auf den großen Statornut (26) angeordnet sind,
die Fläche der kleinen Statornut (25) 80% - 95% der Fläche der großen Statornut (26) beträgt, die Fläche des mittleren Statornut (27) zwischen der Fläche des kleinen Statornut (25) und der Fläche der großen Statornut (26) liegt und die Mittenwinkel zwischen den benachbarten Statornuten gleich sind,
die große Statornut (26), die mittlere Statornut (27) und die kleine Statornut (25) halbgeschlossene Nuten sind, die aus einer rechteckigen Nut (21), einer ersten gleichschenkligen trapezförmigen Nut (22), einer zweiten gleichschenkligen trapezförmigen Nut (23) und einer halbkreisförmigen Nut (24) bestehen, ein Ende der Statornut nahe der inneren Ringfläche des zweiten Substrats (1) als die rechteckige Nut (21) festgelegt ist, die Breite der rechteckigen Nut (21), die die Nutbreite des Statorblechs definiert, 2.5-4,2 mm beträgt, die Höhe der rechteckigen Nut (21), die die Nuthöhe des Statorblechs definiert, 0,9-2.0mm beträgt, die zweite gleichschenklige trapezförmige Nut (23) ist am Ende der ersten gleichschenkligen trapezförmigen Nut (22) weit von der Mitte des zweiten Substrats (1) angeordnet, die obere Basis der ersten gleichschenkligen trapezförmigen Nut (22) ist kollinear mit der langen Seite der rechteckigen Nut (21), die untere Basis der ersten gleichschenkligen trapezförmigen Nut (22) ist kollinear mit der oberen Basis der zweiten gleichschenkligen trapezförmigen Nut (23), die Breite der unteren Basis der ersten gleichschenkligen trapezförmigen Nut (22), die die Nutschulterbreite des Statorblechs definiert, beträgt 5-10 mm, der Winkel zwischen der Hypotenuse und der unteren Basis der ersten gleichschenkligen trapezförmigen Nut (22), der den Nutwinkel des Statorblechs definiert, beträgt 20°-30°, die Breite der unteren Basis des zweiten gleichschenkligen trapezförmigen Nut (23) 8-15 mm beträgt, und die Höhe der zweiten gleichschenkligen trapezförmigen Nut (23) beträgt 12-40 mm, die halbkreisförmige Nut (24) an der unteren Basis der zweiten gleichschenkligen trapezförmigen Nut (23) angeordnet ist, und der Durchmesser der halbkreisförmigen Nut (24) gleich der Breite der unteren Basis der zweiten gleichschenkligen trapezförmigen Nut (23) ist;
alle großen Statornuten (26), die mittlere Statornut (27) und die kleinen Statornuten (25) der Mehrzahl von Statorblechen mit ungleichen Nuten, die den Statorkern (1042) durch Laminieren bilden, bilden jeweils eine große Statorwicklungsnut, eine mittlere Statorwicklungsnut und eine kleine Statorwicklungsnut, die Statorwicklungsspule (1041) aus Kupferdraht ist in der großen Statorwicklungsnut eingebettet, die mittlere Nut der Statorwicklung und die kleine Nut der Statorwicklung bilden die Statorwicklung, ein konkaver Nutkeil (30) oder ein konvexer Nutkeil (40) sind jeweils in der großen Nut der Statorwicklung, der mittleren Nut der Statorwicklung und der kleinen Nut der Statorwicklung, die in die Statorwicklung eingebettet sind, blockiert;
der konkave Nutkeil (30) umfasst einen rechteckigen Hauptteil (301), eine Aussparung (302), die auf der Bodenfläche des rechteckigen Hauptteils (301) vorgesehen ist, und einen schrägen Teil (303), der auf beiden Seiten der Aussparung (302) vorgesehen ist, die Breite des rechteckigen Hauptteils (301) ist 0.7 mm kleiner als die Nutschulterbreite des Statorblechs, der Winkel zwischen der Hypotenuse des schrägen Teils (303) und der Bodenfläche des rechteckigen Hauptteils (301) ist gleich dem Nutwinkel des Statorblechs, die Breite der Aussparung (302) ist die gleiche wie die Nutbreite des Statorblechs und die Höhe des rechteckigen Hauptteils (301) beträgt 1,5-2 mm;
der konvexe Schlitzkeil (40) umfasst einen rechteckigen Hauptteil (401), einen gleichschenkligen trapezförmigen Teil (402), der auf der Bodenfläche des rechteckigen Hauptteils (401) vorgesehen ist, und einen Höcker (403), der von dem gleichschenkligen trapezförmigen Teil (402) vorsteht, die Breite des rechteckigen Hauptteils (401) ist 1-3 mm kleiner als die Nutschulterbreite des Statorblechs, die Breite des Höckers (403) ist 0. 1 mm kleiner als die Nutbreite des Statorblechs, die Höhe des Höckers (403) ist 0,3 mm kleiner als die Nuthöhe des Statorblechs, der Winkel zwischen der Hypotenuse des gleichschenkligen trapezförmigen Teils (402) und der Bodenfläche des rechteckigen Hauptteils (401) ist gleich dem Nutwinkel des Statorblechs.

2. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) drei beträgt, einschließlich einer großen Statornut (26) und zwei kleinen Statornuten (25), wobei die eine große Statornut (26) in der Mitte der Statornutgruppe (2) angeordnet ist, und die beiden Seiten dereinen großen Statornut (26) jeweils symmetrisch mit einer kleinen Statornut (25) angeordnet sind, wobei die eine kleine Statornut (25) auf einer Seite der großen Statornut (26) und die eine kleine Statornut (25) auf der anderen Seite der großen Statornut (26) symmetrisch in Bezug auf den großen Statornut (26) in der mittleren Position angeordnet sind.

3. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) vier beträgt, einschließlich zweier großer Statornuten (26) und zweier kleiner Statornuten (25), wobei die beiden großen Statornuten (26) in der Mitte der Statornutgruppe (2) angeordnet sind, und die beiden Seiten der beiden großen Statornuten (26) jeweils symmetrisch mit einer kleinen Statornut (25) angeordnet sind, wobei die eine kleine Statornut (25) auf einer Seite der beiden großen Statornuten (26) und die eine kleine Statornut (25) auf der anderen Seite der beiden großen Statornuten (26) symmetrisch in Bezug auf die Mittellinie der beiden großen Statornuten (26) entlang der Umfangsrichtung des zweiten Substrats (1) angeordnet sind.

4. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) fünf beträgt, einschließlich großer Statornuten (26) und kleiner Statornuten (25), und die Anzahl und Anordnung der großen Statornuten (26) und der kleinen Statornuten (25) eine oder mehrere der folgenden Formen sind:
(i) die fünf Statornuten pro Pol und Phase in jeder Statornutgruppe (2) eine großen Statornut (26) und vier kleine Statornuten (25) umfassen, die eine große Statornut (26) in der Mitte der Statornutgruppe (2) angeordnet ist, und die beiden Seiten der großen Statornut (26) jeweils symmetrisch mit zwei kleinen Statornuten (25) angeordnet sind, die beiden kleinen Statornuten (25) auf einer Seite der großen Statornut (26) und die beiden kleinen Statornuten (25) auf der anderen Seite der großen Statornut (26) symmetrisch in Bezug auf die große Statornut (26) in der mittleren Position angeordnet sind,
(ii) die fünf Statornuten pro Pol und Phase in jeder Statornutgruppe (2) drei große Statornuten (26) und zwei kleine Statornuten (25) umfassen, die drei großen Statornuten (26) in der Mitte der Statornutgruppe (2) angeordnet sind und die beiden Seiten der drei großen Statornuten (26) jeweils symmetrisch mit einer kleinen Statornut (25) angeordnet sind, die eine kleine Statornut (25) auf einer Seite der drei großen Statornuten (26) und die eine kleine Statornut (25) auf der anderen Seite der drei großen Statornuten (26) symmetrisch in Bezug auf die große Statornut (26) in der mittleren Position angeordnet sind.

5. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) sechs beträgt, einschließlich großer Statornuten (26) und kleiner Statornuten (25), und die Anzahl und Anordnung der großen Statornuten (26) und der kleinen Statornuten (25) eine oder mehrere der folgenden Formen sind:
(i) die sechs Statornuten pro Pol und Phase in jeder Statornutgruppe (2) zwei große Statornuten (26) und vier kleine Statornuten (25) umfassen, die beiden großen Statornuten (26) in der Mitte der Statornutgruppe (2) angeordnet sind und die beiden Seiten der beiden großen Statornuten (26) jeweils symmetrisch mit zwei kleinen Statornuten (25) angeordnet sind, die zwei kleinen Statornuten (25) auf einer Seite der zwei großen Statornuten (26) und die zwei kleinen Statornuten (25) auf der anderen Seite der zwei großen Statornuten (26) symmetrisch in Bezug auf die Mittellinie der zwei großen Statornuten (26) entlang der Umfangsrichtung des zweiten Substrats (1) angeordnet sind,
(ii) die sechs Statornuten pro Pol und Phase in jeder Statornutgruppe (2) vier große Statornuten (26) und zwei kleine Statornuten (25) umfassen, die vier großen Statornuten (26) in der Mitte der Statornutgruppe (2) angeordnet sind, und die beiden Seiten der vier großen Statornuten (26) jeweils symmetrisch mit einer kleinen Statornut (25) angeordnet sind, die eine kleine Statornut (25) auf einer Seite der vier großen Statornuten (26) und die eine kleine Statornut (25) auf der anderen Seite der vier großen Statornuten (26) symmetrisch in Bezug auf die Mittellinie der vier großen Statornuten (26) entlang der Umfangsrichtung des zweiten Substrats (1) angeordnet sind.

6. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) sieben beträgt, einschließlich großer Statornuten (26) und kleiner Statornuten (25), und dass die Anzahl und Anordnung der großen Statornuten (26) und der kleinen Statornuten (25) eine oder mehrere der folgenden Formen sind:
(i) die sieben Statornuten pro Pol und Phase in jeder Statornutgruppe (2) eine große Statornut (26) und sechs kleine Statornuten (25) umfassen, die eine große Statornut (26) in der Mitte der Statornutgruppe (2) angeordnet ist, und die beiden Seiten der großen Statornut (26) jeweils symmetrisch mit drei kleinen Statornuten (25) angeordnet sind, die drei kleinen Statornuten (25) auf einer Seite der großen Statornut (26) und die drei kleinen Statornuten (25) auf der anderen Seite der großen Statornut (26) symmetrisch in Bezug auf die großen Statornut (26) in der mittleren Position angeordnet sind,
(ii) die sieben Statornuten pro Pol und Phase in jeder Statornutgruppe (2) drei große Statornuten (26) und vier kleine Statornuten (25) umfassen, die drei großen Statornuten (26) in der Mitte der Statornutgruppe (2) angeordnet sind, und die beiden Seiten der drei großen Statornuten (26) jeweils symmetrisch mit zwei kleinen Statornuten (25) angeordnet sind, die zwei kleinen Statornuten (25) auf einer Seite der drei großen Statornuten (26) und die zwei kleinen Statornuten (25) auf der anderen Seite der drei großen Statornuten (26) symmetrisch in Bezug auf die großen Statornut (26) in der mittleren Position angeordnet sind,
(iii) die sieben Statornuten pro Pol und Phase in jeder Statornutgruppe (2) fünf große Statornuten (26) und zwei kleine Statornuten (25) umfassen, die fünf großen Statornuten (26) in der Mitte der Statornutgruppe (2) angeordnet sind, und die beiden Seiten der fünf großen Statornuten (26) jeweils symmetrisch mit einer kleinen Statornut (25) angeordnet sind, die eine kleine Statornut (25) auf einer Seite der fünf großen Statornuten (26) und die eine kleine Statornut (25) auf der anderen Seite der fünf großen Statornuten (26) symmetrisch in Bezug auf die große Statornut (26) in der mittleren Position angeordnet sind.

7. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) acht beträgt, einschließlich großer Statornuten (26) und kleiner Statornuten (25), und dass die Anzahl und Anordnung der großen Statornuten (26) und der kleinen Statornuten (25) eine oder mehrere der folgenden Formen sind:
(i) die acht Statornuten pro Pol und Phase in jeder Statornutgruppe (2) zwei große Statornuten (26) und sechs kleine Statornuten (25) umfassen, die beiden großen Statornuten (26) in der Mitte der Statornutgruppe (2) angeordnet sind und die beiden Seiten der beiden großen Statornuten (26) jeweils symmetrisch mit drei kleinen Statornuten (25) angeordnet sind, die drei kleinen Statornuten (25) auf einer Seite der zwei großen Statornuten (26) und die drei kleinen Statornuten (25) auf der anderen Seite der zwei großen Statornuten (26) symmetrisch in Bezug auf die Mittellinie der zwei großen Statornuten (26) entlang der Umfangsrichtung des zweiten Substrats (1) angeordnet sind,
(ii) die acht Statornuten pro Pol und Phase in jeder Statornutgruppe (2) vier große Statornuten (26) und vier kleine Statornuten (25) umfassen, die vier großen Statornuten (26) in der Mitte der Statornutgruppe (2) angeordnet sind und die beiden Seiten der vier großen Statornuten (26) jeweils symmetrisch mit zwei kleinen Statornuten (25) angeordnet sind, die zwei kleinen Statornuten (25) auf einer Seite der vier großen Statornuten (26) und die zwei kleinen Statornuten (25) auf der anderen Seite der vier großen Statornuten (26) symmetrisch in Bezug auf die Mittellinie der vier großen Statornuten (26) entlang der Umfangsrichtung des zweiten Substrats (1) angeordnet sind,
(iii) die acht Statornuten pro Pol und Phase in jeder Statornutgruppe (2) sechs große Statornuten (26) und zwei kleine Statornuten (25) umfassen, die sechs großen Statornuten (26) in der Mitte der Statornutgruppe (2) angeordnet sind, und die beiden Seiten der sechs großen Statornuten (26) jeweils symmetrisch mit einer kleinen Statornut (25) angeordnet sind, die eine kleine Statornut (25) auf einer Seite der sechs großen Statornuten (26) und die eine kleine Statornut (25) auf der anderen Seite der sechs großen Statornuten (26) symmetrisch in Bezug auf die Mittellinie der sechs großen Statornuten (26) entlang der Umfangsrichtung des zweiten Substrats (1) angeordnet sind.

8. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) neun beträgt, einschließlich großer Statornuten (26) und kleiner Statornuten (25), und die Anzahl und Anordnung der großen Statornuten (26) und der kleinen Statornuten (25) eine oder mehrere der folgenden Formen sind:
(i) die neun Statornuten pro Pol und Phase in jeder Statornutgruppe (2) eine große Statornut (26) und acht kleine Statornuten (25) umfassen, die eine große Statornut (26) in der Mitte der Statornutgruppe (2) angeordnet ist, und die beiden Seiten der großen Statornut (26) jeweils symmetrisch mit vier kleinen Statornuten (25) angeordnet sind, die vier kleinen Statornuten (25) auf einer Seite der großen Statornut (26) und die vier kleinen Statornuten (25) auf der anderen Seite der großen Statornut (26) symmetrisch in Bezug auf den großen Statornut (26) in der mittleren Position angeordnet sind,
(ii) die neun Statornuten pro Pol und Phase in jeder Statornutgruppe (2) drei große Statornuten (26) und sechs kleine Statornuten (25) umfassen, die drei großen Statornuten (26) in der Mitte der Statornutgruppe (2) angeordnet sind und die beiden Seiten der drei großen Statornuten (26) jeweils symmetrisch mit drei kleinen Statornuten (25) angeordnet sind, die drei kleinen Statornuten (25) auf einer Seite der drei großen Statornuten (26) und die drei kleinen Statornuten (25) auf der anderen Seite der drei großen Statornuten (26) symmetrisch in Bezug auf die große Statornut (26) in der mittleren Position angeordnet sind,
(iii) die neun Statornuten pro Pol und Phase in jeder Statornutgruppe (2) fünf große Statornuten (26) und vier kleine Statornuten (25) umfassen, die fünf großen Statornuten (26) in der Mitte der Statornutgruppe (2) angeordnet sind, und die beiden Seiten der fünf großen Statornuten (26) jeweils symmetrisch mit zwei kleinen Statornuten (25) angeordnet sind, die zwei kleinen Statornuten (25) auf einer Seite der fünf großen Statornuten (26) und die zwei kleinen Statornuten (25) auf der anderen Seite der fünf großen Statornuten (26) symmetrisch in Bezug auf den großen Statornut (26) in der mittleren Position angeordnet sind,
(iv) die neun Statornuten pro Pol und Phase in jeder Statornutgruppe (2) sieben große Statornuten (26) und zwei kleine Statornuten (25) umfassen, die sieben großen Statornuten (26) in der Mitte der Statornutgruppe (2) angeordnet sind und die beiden Seiten der sieben großen Statornuten (26) jeweils symmetrisch mit einer kleinen Statornut (25) angeordnet sind, die eine kleine Statornut (25) auf einer Seite der sieben großen Statornuten (26) und die eine kleine Statornut (25) auf der anderen Seite der sieben großen Statornuten (26) symmetrisch in Bezug auf die große Statornut (26) in der mittleren Position angeordnet sind.

9. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) fünf beträgt, einschließlich einer großen Statornut (26), zwei mittlerer Statornuten (27) und zwei kleiner Statornuten (25), wobei die eine große Statornut (26) in der Mitte der Statornutgruppe (2) angeordnet ist, die beiden Seiten der großen Statornut (26) jeweils mit einer kleinen Statornut (25) angeordnet sind, und zwischen der großen Statornut (26) und der kleinen Statornut (25) jeweils eine mittlere Statornut (27) angeordnet ist, die eine kleine Statornut (25) auf einer Seite der großen Statornut (26) und die eine kleine Statornut (25) auf der anderen Seite der großen Statornut (26) symmetrisch in Bezug auf die große Statornut (26) in der mittleren Position angeordnet sind, und die eine mittlere Statornut (27) auf einer Seite der großen Statornut (26) und die eine mittlere Statornut (27) auf der anderen Seite der großen Statornut (26) symmetrisch in Bezug auf die große Statornut (26) in der mittleren Position angeordnet sind.

10. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) sechs beträgt, einschließlich zweier großer Statornuten (26), zweier mittlerer Statornuten (27) und zweier kleiner Statornuten (25), die beiden großen Statornuten (26) in der Mitte der Statornutgruppe (2) angeordnet sind, die beiden Seiten der beiden großen Statornuten (26) jeweils mit einer kleinen Statornut (25) angeordnet sind und zwischen der großen Statornut (26) und der kleinen Statornut (25) jeweils eine mittlere Statornut (27) angeordnet ist, die eine kleine Statornut (25) auf einer Seite der zwei großen Statornuten (26) und die eine kleine Statornut (25) auf der anderen Seite der zwei großen Statornuten (26) symmetrisch in Bezug auf die Mittellinie der zwei großen Statornuten (26) entlang der Umfangsrichtung des zweiten Substrats (1) angeordnet sind, und die eine mittlere Statornut (27) auf einer Seite der beiden großen Statornuten (26) und die eine mittlere Statornut (27) auf der anderen Seite der beiden großen Statornuten (26) symmetrisch in Bezug auf die Mittellinie der beiden großen Statornuten (26) entlang der Umfangsrichtung des zweiten Substrats (1) angeordnet sind.

11. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) sieben beträgt, einschließlich großer Statornuten (26), mittlerer Statornuten (27) und kleiner Statornuten (25), und dass die Anzahl und Anordnung der großen Statornuten (26), der mittleren Statornuten (27) und der kleinen Statornuten (25) eine oder mehrere der folgenden Formen sind:
(i) die sieben Statornuten pro Pol und Phase in jeder Statornutgruppe (2) eine große Statornut (26), zwei mittlere Statornuten (27) und vier kleine Statornuten (25) umfassen, wobei die eine große Statornut (26) in der Mitte der Statornutgruppe (2) angeordnet ist, die beiden Seiten der großen Statornut (26) jeweils mit zwei kleinen Statornuten (25) angeordnet sind und zwischen dem großen Statornut (26) und dem kleinen Statornut (25) jeweils ein mittlerer Statornut (27) angeordnet ist, die beiden kleinen Statornuten (25) auf der einen Seite der großen Statornut (26) und die beiden kleinen Statornuten (25) auf der anderen Seite der großen Statornut (26) symmetrisch in Bezug auf den großen Statornut (26) in der mittleren Position angeordnet sind, und dier eine mittlere Statornut (27) auf einer Seite der großen Statornut (26) und der eine mittlere Statornut (27) auf der anderen Seite der großen Statornut (26) symmetrisch in Bezug auf den großen Statornut (26) in der mittleren Position angeordnet sind,
(ii) die sieben Statornuten pro Pol und Phase in jeder Statornutgruppe (2) drei große Statornuten (26), zwei mittlere Statornuten (27) und zwei kleine Statornuten (25) umfassen, wobei die drei großen Statornuten (26) in der Mitte der Statornutgruppe (2) angeordnet sind, die beiden Seiten der drei großen Statornuten (26) jeweils mit einer kleinen Statornut (25) angeordnet sind und zwischen dem großen Statornut (26) und der kleinen Statornut (25) jeweils eine mittlere Statornut (27) angeordnet ist, die eine kleine Statornut (25) auf einer Seite der drei großen Statornuten (26) und die eine kleine Statornut (25) auf der anderen Seite der drei großen Statornuten (26) symmetrisch in Bezug auf die große Statornut (26) in der mittleren Position angeordnet sind und die eine mittlere Statornut (27) auf einer Seite der drei großen Statornuten (26) und die eine mittlere Statornut (27) auf der anderen Seite der drei großen Statornuten (26) symmetrisch in Bezug auf die große Statornut (26) in der mittleren Position angeordnet sind,
(iii) die sieben Statornuten pro Pol und Phase in jeder Statornutgruppe (2) eine große Statornut (26), vier mittlere Statornuten (27) und zwei kleine Statornuten (25) umfassen, wobei die eine große Statornut (26) in der Mitte der Statornutgruppe (2) angeordnet ist, die beiden Seiten der großen Statornut (26) jeweils mit einer kleinen Statornut (25) angeordnet sind, und zwischen der großen Statornut (26) und der kleinen Statornut (25) jeweils zwei mittlere Statornuten (27) angeordnet sind, die eine kleine Statornut (25) auf einer Seite der großen Statornut (26) und die eine kleine Statornut (25) auf der anderen Seite der großen Statornut (26) symmetrisch in Bezug auf der großen Statornut (26) in der mittleren Position angeordnet sind, und die zwei mittleren Statornuten (27) auf einer Seite der großen Statornut (26) und die zwei mittleren Statornuten (27) auf der anderen Seite der großen Statornut (26) symmetrisch in Bezug auf den großen Statornut (26) in der mittleren Position angeordnet sind.

12. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) acht beträgt, einschließlich großer Statornuten (26), mittlerer Statornuten (27) und kleiner Statornuten (25), und dass die Anzahl und Anordnung der großen Statornuten (26), der mittleren Statornuten (27) und der kleinen Statornuten (25) eine oder mehrere der folgenden Formen sind:
(i) die acht Statornuten pro Pol und Phase in jeder Statornutgruppe (2) vier große Statornuten (26), zwei mittlere Statornuten (27) und zwei kleine Statornuten (25) umfassen, wobei die vier großen Statornuten (26) in der Mitte der Statornutgruppe (2) angeordnet sind, die beiden Seiten der vier großen Statornuten (26) jeweils mit einer kleinen Statornut (25) angeordnet sind und zwischen der großen Statornut (26) und der kleinen Statornut (25) jeweils eine mittlere Statornut (27) angeordnet ist, die eine kleine Statornut (25) auf einer Seite der vier großen Statornuten (26) und die eine kleine Statornut (25) auf der anderen Seite der vier großen Statornuten (26) symmetrisch in Bezug auf die Mittellinie der vier großen Statornuten (26) entlang der Umfangsrichtung des zweiten Substrats (1) angeordnet sind, und die eine mittlere Statornut (27) auf einer Seite der vier großen Statornuten (26) und die eine mittlere Statornut (27) auf der anderen Seite der vier großen Statornuten (26) symmetrisch in Bezug auf die Mittellinie der vier großen Statornuten (26) entlang der Umfangsrichtung des zweiten Substrats (1) angeordnet sind,
(ii) die acht Statornuten pro Pol und Phase in jeder Statornutgruppe (2) zwei große Statornuten (26), vier mittlere Statornuten (27) und zwei kleine Statornuten (25) umfassen, wobei die beiden großen Statornuten (26) in der Mitte der Statornutgruppe (2) angeordnet sind, die beiden Seiten der beiden großen Statornuten (26) jeweils mit einer kleinen Statornut (25) angeordnet sind und zwischen der großen Statornut (26) und der kleinen Statornut (25) jeweils zwei mittlere Statornuten (27) angeordnet sind, die eine kleine Statornut (25) auf einer Seite der zwei großen Statornuten (26) und die eine kleine Statornut (25) auf der anderen Seite der zwei großen Statornuten (26) symmetrisch in Bezug auf die Mittellinie der zwei großen Statornuten (26) entlang der Umfangsrichtung des zweiten Substrats (1) angeordnet sind, und die beiden mittleren Statornuten (27) auf einer Seite der beiden großen Statornuten (26) und die beiden mittleren Statornuten (27) auf der anderen Seite der beiden großen Statornuten (26) symmetrisch in Bezug auf die Mittellinie der beiden großen Statornuten (26) entlang der Umfangsrichtung des zweiten Substrats (1) angeordnet sind.

13. IE5-Drehstrom-Asynchronmotor auf der Basis eines Aluminiumgussrotors und eines Statorblechs mit ungleichen Nuten nach Anspruch 1, **dadurch gekennzeichnet, dass** die Anzahl der Statornuten pro Pol und Phase in jeder Statornutgruppe (2) neun beträgt, einschließlich großer Statornuten (26), mittlerer Statornuten (27) und kleiner Statornuten (25), und dass die Anzahl und Anordnung der großen Statornuten (26), der mittleren Statornuten (27) und der kleinen Statornuten (25) eine oder mehrere der folgenden Formen sind:
(i) die neun Statornuten pro Pol und Phase in jeder Statornutgruppe (2) eine große Statornut (26), zwei mittlere Statornuten (27) und sechs kleine Statornuten (25) umfassen, wobei die eine große Statornut (26) in der Mitte der Statornutgruppe (2) angeordnet ist, die beiden Seiten der großen Statornut (26) jeweils mit drei kleinen Statornuten (25) angeordnet sind und zwischen der großen Statornut (26) und der kleinen Statornut (25) jeweils eine mittlere Statornut (27) angeordnet ist, die drei kleinen Statornuten (25) auf einer Seite der großen Statornut (26) und die drei kleinen Statornuten (25) auf der anderen Seite der großen Statornut (26) symmetrisch zu der großen Statornut (26) in der mittleren Position angeordnet sind, und die eine mittlere Statornut (27) auf einer Seite der großen Statornut (26) und die eine mittlere Statornut (27) auf der anderen Seite der großen Statornut (26) symmetrisch in Bezug auf die große Statornut (26) in der mittleren Position angeordnet sind,
(ii) die neun Statornuten pro Pol und Phase in jeder Statornutgruppe (2) drei große Statornuten (26), zwei mittlere Statornuten (27) und vier kleine Statornuten (25) umfassen, wobei die drei großen Statornuten (26) in der Mitte der Statornutgruppe (2) angeordnet sind, die beiden Seiten der drei großen Statornuten (26) jeweils mit zwei kleinen Statornuten (25) angeordnet sind und zwischen der großen Statornut (26) und der kleinen Statornut (25) jeweils eine mittlere Statornut (27) angeordnet ist, die beiden kleinen Statornuten (25) auf einer Seite der drei großen Statornuten (26) und die beiden kleinen Statornuten (25) auf der anderen Seite der drei großen Statornuten (26) symmetrisch in Bezug auf die große Statornut (26) in der mittleren Position angeordnet sind, und die eine mittlere Statornut (27) auf einer Seite der drei großen Statornuten (26) und die eine mittlere Statornut (27) auf der anderen Seite der drei großen Statornuten (26) symmetrisch in Bezug auf die große Statornut (26) in der mittleren Position angeordnet sind,
(iii) die neun Statornuten pro Pol und Phase in jeder Statornutgruppe (2) fünf große Statornuten (26), zwei mittlere Statornuten (27) und zwei kleine Statornuten (25) umfassen, wobei die fünf großen Statornuten (26) in der Mitte der Statornutgruppe (2) angeordnet sind, die beiden Seiten der fünf großen Statornuten (26) jeweils mit einer kleinen Statornut (25) angeordnet sind und zwischen der großen Statornut (26) und der kleinen Statornut (25) jeweils eine mittlere Statornut (27) angeordnet ist, die eine kleine Statornut (25) auf einer Seite der fünf großen Statornuten (26) und die eine kleine Statornut (25) auf der anderen Seite der fünf großen Statornuten (26) symmetrisch in Bezug auf die große Statornut (26) in der mittleren Position angeordnet sind, und die eine mittlere Statornut (27) auf einer Seite der fünf großen Statornuten (26) und die eine mittlere Statornut (27) auf der anderen Seite der fünf großen Statornuten (26) in Bezug auf die große Statornut (26) in der mittleren Position symmetrisch angeordnet sind,
(iv) die neun Statornuten pro Pol und Phase in jeder Statornutgruppe (2) eine große Statornut (26), vier mittlere Statornuten (27) und vier kleine Statornuten (25) umfassen, wobei die eine große Statornut (26) in der Mitte der Statornutgruppe (2) angeordnet ist, die beiden Seiten der großen Statornut (26) jeweils mit zwei kleinen Statornuten (25) angeordnet sind, und zwischen der großen Statornut (26) und der kleinen Statornut (25) jeweils zwei mittlere Statornuten (27) angeordnet sind, die beiden kleinen Statornuten (25) auf der einen Seite der großen Statornut (26) und die beiden kleinen Statornuten (25) auf der anderen Seite der großen Statornut (26) symmetrisch in Bezug auf die große Statornut (26) in der mittleren Position angeordnet sind, und die beiden mittleren Statornuten (27) auf einer Seite der großen Statornut (26) und die beiden mittleren Statornuten (27) auf der anderen Seite der großen Statornut (26) symmetrisch in Bezug auf die großen Statornut (26) in der mittleren Position angeordnet sind,
(v) die neun Statornuten pro Pol und Phase in jeder Statornutgruppe (2) drei große Statornuten (26), vier mittlere Statornuten (27) und zwei kleine Statornuten (25) umfassen, wobei die drei großen Statornuten (26) in der Mitte der Statornutgruppe (2) angeordnet sind, die beiden Seiten der drei großen Statornuten (26) jeweils mit einer kleinen Statornut (25) angeordnet sind und zwischen der großen Statornut (26) und der kleinen Statornut (25) jeweils zwei mittlere Statornuten (27) angeordnet sind, die eine kleine Statornut (25) auf einer Seite der drei großen Statornuten (26) und die eine kleine Statornut (25) auf der anderen Seite der drei großen Statornuten (26) symmetrisch in Bezug auf die große Statornut (26) in der mittleren Position angeordnet sind, und die zwei mittleren Statornuten (27) auf einer Seite der drei großen Statornuten (26) und die zwei mittleren Statornuten (27) auf der anderen Seite der drei großen Statornuten (26) symmetrisch in Bezug auf die großen Statornut (26) in der mittleren Position angeordnet sind,
(vi) die neun Statornuten pro Pol und Phase in jeder Statornutgruppe (2) eine große Statornut (26), sechs mittlere Statornuten (27) und zwei kleine Statornuten (25) umfassen, wobei die eine große Statornut (26) in der Mitte der Statornutgruppe (2) angeordnet ist, die beiden Seiten der großen Statornut (26) jeweils mit einer kleinen Statornut (25) angeordnet sind, und zwischen der großen Statornut (26) und der kleinen Statornut (25) jeweils drei mittlere Statornuten (27) angeordnet sind, die eine kleine Statornut (25) auf einer Seite der großen Statornut (26) und die eine kleine Statornut (25) auf der anderen Seite der großen Statornut (26) symmetrisch in Bezug auf die große Statornut (26) in der mittleren Position angeordnet sind, und die drei mittleren Statornuten (27) auf einer Seite der großen Statornut (26) und die drei mittleren Statornuten (27) auf der anderen Seite der großen Statornut (26) symmetrisch in Bezug auf die große Statornut (26) in der mittleren Position angeordnet sind.

14. IE5-Drehstrom-Asynchronmotor auf der Basis von Aluminiumguss-Rotor- und -Statorblechen mit ungleichen Nuten nach einem der Ansprüche 1 bis 13, **dadurch gekennzeichnet, dass** 8 bis 16 Schnallennuten (3) gleichmäßig auf der Außenringfläche des zweiten Substrats (1) entlang der Umfangsrichtung des zweiten Substrats (1) angeordnet sind, um die Schnalle zu installieren, der untere Boden der Schnallennut (3) als eine gerade Linie festgelegt ist, die obere Basis der Schnallennut (3) ist natürlich entlang der Umfangsrichtung des zweiten Substrats (1) geöffnet, die Breite der Schnallennut (3) beträgt 14-25 mm, die Höhe der Schnallennut (3) beträgt 3-5 mm, der Winkel zwischen der Hypotenuse und der Basis der Schnallennut (3) beträgt 15°-25°, und eine Bearbeitungsnut (4) ist am Boden einer beliebigen Schnallennut (3) angeordnet.

## Revendications

1. Un moteur asynchrone triphasé IE5 basé sur une stratification du rotor et du stator en aluminium moulé avec des fentes inégales, comprenant un arbre (100), un capuchon d'extrémité avant (101), un roulement (102), une boîte de jonction (103), un stator (104), un rotor (105), un châssis de moteur (106), un capuchon d'extrémité arrière (107), un ventilateur (108) et un couvercle de ventilateur (109), dans lequel le rotor (105) est installé dans la cavité interne du stator (104), le centre du rotor (105) est pourvu d'un trou d'arbre dans lequel l'arbre (100) est installé, le roulement (102) installé sur l'arbre (100) supporte le rotor (105) sur le capuchon d'extrémité avant (101) et le capuchon d'extrémité arrière (107), dans lequel :
le rotor (105) est composé d'un noyau de rotor (1051) et d'un enroulement de rotor (1052), le noyau de rotor (1051) est fabriqué par stratification d'une pluralité de stratifications de rotor, la stratification de rotor comprend un premier substrat (11) en forme d'anneau, une pluralité de fentes fermées (12) sont disposées radialement de manière uniforme sur la surface de l'anneau extérieur du premier substrat (11) le long de la direction de la circonférence du premier substrat (11), toutes les fentes fermées (12) de la pluralité de tôles de rotor forment ensemble la goulotte d'enroulement du rotor, des bandes de guidage en aluminium (13) sont coulées dans la goulotte d'enroulement du rotor et forment l'enroulement du rotor(1052) ;
le stator (104) est composé d'un enroulement (1041) de stator et d'un noyau (1042) de stator, le noyau (1042) de stator est réalisé par stratification d'une pluralité de stratifications de stator avec des fentes inégales, où
la stratification de stator avec des fentes inégales comprend un deuxième substrat (1) en forme d'anneau, au moins six groupes de fentes de stator (2) pour placer le fil de cuivre sont disposés radialement et uniformément sur la surface de l'anneau intérieur du deuxième substrat (1) le long de la direction de la circonférence du deuxième substrat (1), le nombre de fentes de stator par pôle et par phase dans chaque groupe de fentes de stator (2) est d'au moins trois, le nombre et la disposition des fentes de stator sont l'une des formes suivantes : (i) les encoches de stator par pôle et par phase dans chaque groupe de fentes de stator (2) comprennent au moins une grande fente de stator (26) et au moins deux petites fentes de stator (25), la grande fente de stator (26) est disposée au milieu du groupe de fentes de stator (2), les deux côtés de la grande fente de stator (26) sont respectivement agencés avec une ou plusieurs petites fentes de stator (25), la ou les petites fentes de stator (25) d'un côté de la grande fente de stator (26) et la ou les petites fentes de stator (25) de l'autre côté de la grande fente de stator (26) sont disposées symétriquement par rapport à la grande fente de stator (26) ; ou ii) les fentes de stator par pôle et par phase dans chaque groupe de fentes de stator (2) comprennent au moins une grande fente de stator (26), au moins deux fentes moyennes de stator (27) et au moins deux petites fentes de stator (25), la grande fente de stator (26) étant disposée au milieu du groupe de fentes de stator (2), les deux côtés de la grande fente de stator (26) sont respectivement pourvus d'une ou plusieurs petites fentes de stator (25), et entre la grande fente de stator (26) et la petite fente de stator (25) sont respectivement pourvues d'une ou plusieurs fentes moyennes de stator (27), la ou les petites fentes de stator (25) d'un côté de la grande fente de stator (26) et la ou les petites fentes de stator (25) de l'autre côté de la grande fente de stator (26) sont respectivement disposées symétriquement par rapport à la grande fente de stator (26), la ou les fentes de stator moyennes (27) d'un côté de la grande fente de stator (26) et la ou les fentes moyennes de stator (27) de l'autre côté de la grande fente de stator (26) sont respectivement disposées de manière symétrique par rapport à la grande fente de stator (26) ;
la surface de la petite fente de stator (25) représente 80 % - 95 % de celle de la grande fente de stator (26), la surface de la fente moyenne de stator (27) est comprise entre celle de la petite fente de stator (25) et celle de la grande fente de stator (26), et les angles centraux entre les fentes de stator adjacentes sont égaux ;
la grande fente de stator (26), la fente moyenne de stator (27) et la petite fente de stator (25) sont des fentes de forme semi fermée composées d'une fente rectangulaire (21), d'une première fente trapézoïdale isocèle (22), d'une seconde fente trapézoïdale isocèle (23) et d'une fente en demi-cercle (24), une extrémité de la fente du stator proche de la surface de l'anneau intérieur du second substrat (1) est définie comme la fente rectangulaire (21), la largeur de la fente rectangulaire (21) définissant la largeur de la fente de la stratification du stator est de 2. 5-4.2mm, la hauteur de la fente rectangulaire (21) définissant la hauteur de la fente de la stratification de stator est de 0.9-2. Omm, la seconde fente trapézoïdale isocèle (23) est disposée à l'extrémité de la première fente trapézoïdale isocèle (22) loin du centre du second substrat (1), la base supérieure de la première fente trapézoïdale isocèle (22) est colinéaire avec le côté long de la fente rectangulaire (21), la base inférieure de la première fente trapézoïdale isocèle (22) est colinéaire avec la base supérieure de la seconde fente trapézoïdale isocèle (23), la largeur de la base inférieure de la première fente trapézoïdale isocèle (22) définissant la largeur de l'épaulement de la fente de la stratification de stator est de 5 à 10 mm, l'angle entre l'hypoténuse et la base inférieure de la première fente trapézoïdale isocèle (22) définissant l'angle de la fente de la stratification de stator est de 20°-30°, la largeur de la base inférieure de la seconde fente trapézoïdale isocèle (23) est de 8-15mm, La fente en demi-cercle (24) est disposée à la base inférieure de la deuxième fente trapézoïdale isocèle (23), et le diamètre de la fente en demi-cercle (24) est égal à la largeur de la base inférieure de la deuxième fente trapézoïdale isocèle (23) ;
toutes les grandes fentes de stator (26), la fente moyenne de stator (27) et les petites fentes de stator (25) de la pluralité de stratifications de stator à fentes inégales qui forment le noyau (1042) de stator par stratification forment respectivement une grande fente de bobinage de stator, une fente de bobinage de stator moyenne et une petite fente de bobinage de stator, la bobine de l'enroulement du stator (1041) faite de fil de cuivre est encastrée dans la grande fente de bobinage de stator, la fente moyenne du bobinage du stator et la petite fente du bobinage du stator de manière à former le bobinage du stator, la cale de fente concave (30) ou la cale de fente convexe (40) sont respectivement bloquées dans la grande fente du bobinage du stator, la fente moyenne du bobinage du stator et la petite fente du bobinage du stator encastrées avec le bobinage du stator ;
la fente concave (30) comprend une partie principale rectangulaire (301), un renfoncement (302) prévu sur la surface inférieure de la partie principale rectangulaire (301), et une partie oblique (303) prévue des deux côtés du renfoncement (302), la largeur de la partie principale rectangulaire (301) est inférieure de 0. 7mm plus petite que la largeur de l'épaulement de la fente de la stratification du stator, l'angle entre l'hypoténuse de la partie oblique (303) et la surface inférieure de la partie principale rectangulaire (301) est égal à l'angle de la fente de la stratification du stator, la largeur du renfoncement (302) est la même que la largeur de la fente de la stratification du stator, et la hauteur de la partie principale rectangulaire (301) est de 1,5 à 2mm ;
la cale à fente convexe (40) comprend une partie principale rectangulaire (401), une partie trapézoïdale isocèle (402) prévue sur la surface inférieure de la partie principale rectangulaire (401), et une bosse (403) faisant saillie de la partie trapézoïdale isocèle (402), la largeur de la partie principale rectangulaire (401) est inférieure de 1 à 3 mm à la largeur de l'épaulement de la fente de la stratification de stator, la largeur de la bosse (403) est inférieure de 0. 1mm plus petite que la largeur de la fente de la stratification de stator, la hauteur de la bosse (403) est 0,3mm plus petite que la hauteur de la fente de la stratification de stator, l'angle entre l'hypoténuse de la partie trapézoïdale isocèle (402) et la surface inférieure de la partie principale rectangulaire (401) est égal à l'angle de la fente de la stratification de stator

2. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de trois, y compris une grande fente de stator (26) et deux petites fentes de stator (25), la grande fente de stator (26) est disposée au milieu du groupe de fentes de stator (2), et les deux côtés de la grande fente de stator (26) sont respectivement disposés symétriquement avec une petite fente de stator (25), la petite fente de stator (25) d'un côté de la grande fente de stator (26) et la petite fente de stator (25) de l'autre côté de la grande fente de stator (26) sont disposées symétriquement par rapport à la grande fente de stator (26) en position médiane

3. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de quatre, dont deux grandes fentes de stator (26) et deux petites fentes de stator (25), les deux grandes fentes de stator (26) sont disposées au milieu du groupe de fentes de stator (2), et les deux côtés des deux grandes fentes de stator (26) sont respectivement disposés symétriquement avec une petite fente de stator (25), la petite fente de stator (25) d'un côté des deux grandes fentes de stator (26) et la petite fente de stator (25) de l'autre côté des deux grandes fentes de stator (26) sont disposées symétriquement par rapport à la ligne centrale des deux grandes fentes de stator (26) le long de la direction de la circonférence du deuxième substrat (1).

4. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de cinq, y compris les grandes fentes de stator (26) et les petites fentes de stator (25), et le nombre et la disposition des grandes fentes de stator (26) et des petites fentes de stator (25) sont d'une ou de plusieurs des formes suivantes :
(i) les cinq fentes de stator par pôle et par phase dans chaque groupe de fentes de stator (2) comprennent une grande fente de stator (26) et quatre petites fentes de stator (25), la grande fente de stator (26) est disposée au milieu du groupe de fentes de stator (2), et les deux côtés de la grande fente de stator (26) sont respectivement disposés symétriquement avec deux petites fentes de stator (25), les deux petites fentes de stator (25) d'un côté de la grande fente de stator (26) et les deux petites fentes de stator (25) de l'autre côté de la grande fente de stator (26) sont disposées symétriquement par rapport à la grande fente de stator (26) en position médiane ;
(ii) les cinq fentes de stator par pôle et par phase dans chaque groupe de fentes de stator (2) comprennent trois grandes fentes de stator (26) et deux petites fentes de stator (25), les trois grandes fentes de stator (26) sont disposées au milieu du groupe de fentes de stator (2), et les deux côtés des trois grandes fentes de stator (26) sont respectivement disposés symétriquement par rapport à une petite fente de stator (25), la petite fente de stator (25) d'un côté des trois grandes fentes de stator (26) et la petite fente de stator (25) de l'autre côté des trois grandes fentes de stator (26) sont disposées symétriquement par rapport à la grande fente de stator (26) en position médiane

5. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de six, y compris les grandes fentes de stator (26) et les petites fentes de stator (25), et le nombre et la disposition des grandes fentes de stator (26) et des petites fentes de stator (25) sont d'une ou de plusieurs des formes suivantes :
(i) les six fentes de stator par pôle et par phase dans chaque groupe de fentes de stator (2) comprennent deux grandes fentes de stator (26) et quatre petites fentes de stator (25), les deux grandes fentes de stator (26) sont disposées au milieu du groupe de fentes de stator (2), et les deux côtés des deux grandes fentes de stator (26) sont respectivement disposés symétriquement avec deux petites fentes de stator (25), les deux petites fentes de stator (25) d'un côté des deux grandes fentes de stator (26) et les deux petites fentes de stator (25) de l'autre côté des deux grandes fentes de stator (26) sont disposées symétriquement par rapport à la ligne centrale des deux grandes fentes de stator (26) le long de la direction de la circonférence du second substrat (1) ;
(ii) les six fentes de stator par pôle et par phase dans chaque groupe de fentes de stator (2) comprennent quatre grandes fentes de stator (26) et deux petites fentes de stator (25), les quatre grandes fentes de stator (26) sont disposées au milieu du groupe de fentes de stator (2), et les deux côtés des quatre grandes fentes de stator (26) sont respectivement disposés de manière symétrique avec une petite fente de stator (25), la petite fente de stator (25) d'un côté des quatre grandes fentes de stator (26) et la petite fente de stator (25) de l'autre côté des quatre grandes fentes de stator (26) sont disposées symétriquement par rapport à la ligne centrale des quatre grandes fentes de stator (26) le long de la direction de la circonférence du deuxième substrat (1).

6. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de sept, y compris les grandes fentes de stator (26) et les petites fentes de stator (25), et le nombre et la disposition des grandes fentes de stator (26) et des petites fentes de stator (25) sont d'une ou de plusieurs des formes suivantes :
(i) les sept fentes de stator par pôle et par phase dans chaque groupe de fentes de stator (2) comprennent une grande fente de stator (26) et six petites fentes de stator (25), la grande fente de stator (26) est disposée au milieu du groupe de fentes de stator (2), et les deux côtés de la grande fente de stator (26) sont respectivement disposés symétriquement avec trois petites fentes de stator (25), les trois petites fentes de stator (25) d'un côté de la grande fente de stator (26) et les trois petites fentes de stator (25) de l'autre côté de la grande fente de stator (26) sont disposées symétriquement par rapport à la grande fente de stator (26) en position médiane ;
(ii) les sept fentes de stator par pôle et par phase dans chaque groupe de fentes de stator (2) comprennent trois grandes fentes de stator (26) et quatre petites fentes de stator (25), les trois grandes fentes de stator (26) sont disposées au milieu du groupe de fentes de stator (2), et les deux côtés des trois grandes fentes de stator (26) sont respectivement disposés symétriquement par rapport à deux petites fentes de stator (25), les deux petites fentes de stator (25) d'un côté des trois grandes fentes de stator (26) et les deux petites fentes de stator (25) de l'autre côté des trois grandes fentes de stator (26) sont disposées symétriquement par rapport à la grande fente de stator (26) en position médiane ;
(iii) les sept fentes de stator par pôle et par phase dans chaque groupe de fentes de stator (2) comprennent cinq grandes fentes de stator (26) et deux petites fentes de stator (25), les cinq grandes fentes de stator (26) sont disposées au milieu du groupe de fentes de stator (2), et les deux côtés des cinq grandes fentes de stator (26) sont respectivement disposés symétriquement par rapport à une petite fente de stator (25), la petite fente de stator (25) d'un côté des cinq grandes fentes de stator (26) et la petite fente de stator (25) de l'autre côté des cinq grandes fentes de stator (26) sont disposées symétriquement par rapport à la grande fente de stator (26) en position médiane

7. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de huit, y compris les grandes fentes de stator (26) et les petites fentes de stator (25), et le nombre et la disposition des grandes fentes de stator (26) et des petites fentes de stator (25) sont d'une ou de plusieurs des formes suivantes :
(i) les huit fentes de stator par pôle et par phase dans chaque groupe de fentes de stator (2) comprennent deux grandes fentes de stator (26) et six petites fentes de stator (25), les deux grandes fentes de stator (26) sont disposées au milieu du groupe de fentes de stator (2), et les deux côtés des deux grandes fentes de stator (26) sont respectivement disposés symétriquement avec trois petites fentes de stator (25), les trois petites fentes de stator (25) d'un côté des deux grandes fentes de stator (26) et les trois petites fentes de stator (25) de l'autre côté des deux grandes fentes de stator (26) sont disposées symétriquement par rapport à la ligne centrale des deux grandes fentes de stator (26) le long de la direction de la circonférence du deuxième substrat (1) ;
(ii) les huit fentes de stator par pôle et par phase dans chaque groupe de fentes de stator (2) comprennent quatre grandes fentes de stator (26) et quatre petites fentes de stator (25), les quatre grandes fentes de stator (26) sont disposées au milieu du groupe de fentes de stator (2), et les deux côtés des quatre grandes fentes de stator (26) sont respectivement disposés symétriquement avec deux petites fentes de stator (25), les deux petites fentes de stator (25) d'un côté des quatre grandes fentes de stator (26) et les deux petites fentes de stator (25) de l'autre côté des quatre grandes fentes de stator (26) sont disposées symétriquement par rapport à la ligne centrale des quatre grandes fentes de stator (26) le long de la direction de la circonférence du deuxième substrat (1) ;
(iii) les huit fentes de stator par pôle et par phase dans chaque groupe de fentes de stator (2) comprennent six grandes fentes de stator (26) et deux petites fentes de stator (25), les six grandes fentes de stator (26) sont disposées au milieu du groupe de fentes de stator (2), et les deux côtés des six grandes fentes de stator (26) sont respectivement disposés de manière symétrique avec une petite fente de stator (25), la petite fente de stator (25) d'un côté des six grandes fentes de stator (26) et la petite fente de stator (25) de l'autre côté des six grandes fentes de stator (26) sont disposées symétriquement par rapport à la ligne centrale des six grandes fentes de stator (26) le long de la direction de la circonférence du deuxième substrat (1).

8. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de neuf, y compris les grandes fentes de stator (26) et les petites fentes de stator (25), et le nombre et la disposition des grandes fentes de stator (26) et des petites fentes de stator (25) sont d'une ou de plusieurs des formes suivantes :
(i) les neuf fentes de stator par pôle et par phase dans chaque groupe de fentes de stator (2) comprennent une grande fente de stator (26) et huit petites fentes de stator (25), la grande fente de stator (26) est disposée au milieu du groupe de fentes de stator (2), et les deux côtés de la grande fente de stator (26) sont respectivement disposés symétriquement avec quatre petites fentes de stator (25), les quatre petites fentes de stator (25) d'un côté de la grande fente de stator (26) et les quatre petites fentes de stator (25) de l'autre côté de la grande fente de stator (26) sont disposées symétriquement par rapport à la grande fente de stator (26) en position médiane ;
(ii) les neuf fentes de stator par pôle et par phase dans chaque groupe de fentes de stator (2) comprennent trois grandes fentes de stator (26) et six petites fentes de stator (25), les trois grandes fentes de stator (26) sont disposées au milieu du groupe de fentes de stator (2), et les deux côtés des trois grandes fentes de stator (26) sont respectivement disposés symétriquement par rapport à trois petites fentes de stator (25), les trois petites fentes de stator (25) d'un côté des trois grandes fentes de stator (26) et les trois petites fentes de stator (25) de l'autre côté des trois grandes fentes de stator (26) sont disposées symétriquement par rapport à la grande fente de stator (26) en position médiane ;
(iii) les neuf fentes de stator par pôle et par phase dans chaque groupe de fentes de stator (2) comprennent cinq grandes fentes de stator (26) et quatre petites fentes de stator (25), les cinq grandes fentes de stator (26) sont disposées au milieu du groupe de fentes de stator (2), et les deux côtés des cinq grandes fentes de stator (26) sont respectivement disposés symétriquement par rapport à deux petites fentes de stator (25), les deux petites fentes de stator (25) d'un côté des cinq grandes fentes de stator (26) et les deux petites fentes de stator (25) de l'autre côté des cinq grandes fentes de stator (26) sont disposées symétriquement par rapport à la grande fente de stator (26) en position médiane ;
(iv) les neuf fentes de stator par pôle et par phase dans chaque groupe de fentes de stator (2) comprennent sept grandes fentes de stator (26) et deux petites fentes de stator (25), les sept grandes fentes de stator (26) sont disposées au milieu du groupe de fentes de stator (2), et les deux côtés des sept grandes fentes de stator (26) sont respectivement disposés symétriquement par rapport à une petite fente de stator (25), la petite fente de stator (25) d'un côté des sept grandes fentes de stator (26) et la petite fente de stator (25) de l'autre côté des sept grandes fentes de stator (26) sont disposées symétriquement par rapport à la grande fente de stator (26) en position centrale

9. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de cinq, dont une grande fente de stator (26), deux fentes moyennes de stator (27) et deux petites fentes de stator (25), la grande fente de stator (26) est disposée au milieu du groupe de fentes de stator (2), les deux côtés de la grande fente de stator (26) sont respectivement disposés avec une petite fente de stator (25), et entre la grande fente de stator (26) et la petite fente de stator (25) sont respectivement disposées une fente moyenne de stator (27), la petite fente de stator (25) d'un côté de la grande fente de stator (26) et la petite fente de stator (25) de l'autre côté de la grande fente de stator (26) sont disposées symétriquement par rapport à la grande fente de stator (26) dans la position médiane, et la fente moyenne de stator (27) d'un côté de la grande fente du stator (26) et la fente moyenne du stator (27) de l'autre côté de la grande fente du stator (26) sont disposées symétriquement par rapport à la grande fente du stator (26) en position centrale.

10. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de six, dont deux grandes fentes de stator (26), deux fentes moyennes de stator (27) et deux petites fentes de stator (25), les deux grandes fentes de stator (26) sont disposées au milieu du groupe de fentes de stator (2), les deux côtés des deux grandes fentes de stator (26) sont respectivement disposés avec une petite fente de stator (25), et entre la grande fente de stator (26) et la petite fente de stator (25) sont respectivement disposés avec une fente moyenne de stator (27), la petite fente de stator (25) d'un côté des deux grandes fentes de stator (26) et la petite fente de stator (25) de l'autre côté des deux grandes fentes de stator (26) sont disposées symétriquement par rapport à la ligne centrale des deux grandes fentes de stator (26) le long de la direction de la circonférence du deuxième substrat (1), et la fente moyenne de stator (27) d'un côté des deux grandes fentes de stator (26) et la fente moyenne de stator (27) de l'autre côté des deux grandes fentes de stator (26) sont disposées symétriquement par rapport à la ligne centrale des deux grandes fentes de stator (26) le long de la direction de la circonférence du deuxième substrat (1).

11. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de sept, y compris les grandes fentes de stator (26), les fentes moyennes de stator (27) et les petites fentes de stator (25), et le nombre et la disposition des grandes fentes de stator (26), des fentes moyennes de stator (27) et des petites fentes de stator (25) sont d'une ou de plusieurs des formes suivantes :
(i) les sept fentes de stator par pôle et par phase dans chaque groupe de fentes de stator (2) comprennent une grande fente de stator (26), deux fentes moyennes de stator (27) et quatre petites fentes de stator (25), la grande fente de stator (26) est disposée au milieu du groupe de fentes de stator (2), les deux côtés de la grande fente de stator (26) sont respectivement pourvus de deux petites fentes de stator (25), et entre la grande fente de stator (26) et la petite fente de stator (25) se trouve respectivement une fente moyenne de stator (27), les deux petites fentes de stator (25) d'un côté de la grande fente de stator (26) et les deux petites fentes de stator (25) de l'autre côté de la grande fente de stator (26) sont disposées symétriquement par rapport à la grande fente de stator (26) en position médiane, et la fente moyenne de stator (27) d'un côté de la grande fente de stator (26) et la fente moyenne de stator (27) de l'autre côté de la grande fente de stator (26) sont disposées symétriquement par rapport à la grande fente de stator (26) en position médiane ;
(ii) les sept fentes de stator par pôle et par phase dans chaque groupe de fentes de stator (2) comprennent trois grandes fentes de stator (26), deux fentes moyennes de stator (27) et deux petites fentes de stator (25), les trois grandes fentes de stator (26) étant disposées au milieu du groupe de fentes de stator (2), les deux côtés des trois grandes fentes de stator (26) sont respectivement disposés avec une petite fente de stator (25), et entre la grande fente de stator (26) et la petite fente de stator (25) sont respectivement disposés avec une fente moyenne de stator (27), la petite fente de stator (25) d'un côté des trois grandes fentes de stator (26) et la petite fente de stator (25) de l'autre côté des trois grandes fentes de stator (26) sont disposées symétriquement par rapport à la grande fente de stator (26) en position médiane, et la fente moyenne de stator (27) d'un côté des trois grandes fentes de stator (26) et la fente moyenne de stator (27) de l'autre côté des trois grandes fentes de stator (26) sont disposées symétriquement par rapport à la grande fente de stator (26) en position médiane ;
(iii) les sept fentes de stator par pôle et par phase dans chaque groupe de fentes de stator (2) comprennent une grande fente de stator (26), quatre fentes moyennes de stator (27) et deux petites fentes de stator (25), la grande fente de stator (26) étant disposée au milieu du groupe de fentes de stator (2), les deux côtés de la grande fente de stator (26) sont respectivement disposés avec une petite fente de stator (25), et entre la grande fente de stator (26) et la petite fente de stator (25) sont respectivement disposées deux fentes moyennes stator (27), la petite fente de stator (25) d'un côté de la grande fente de stator (26) et la petite fente de stator (25) de l'autre côté de la grande fente de stator (26) sont disposées symétriquement par rapport à la grande fente de stator (26) en position médiane, et les deux fentes moyennes de stator (27) d'un côté de la grande fente de stator (26) et les deux fentes moyennes de stator (27) de l'autre côté de la grande fente de stator (26) sont disposées symétriquement par rapport à la grande fente de stator (26) en position médiane

12. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de huit, y compris les grandes fentes de stator (26), les fentes moyennes de stator (27) et les petites fentes de stator (25), et le nombre et la disposition des grandes fentes de stator (26), des fentes moyennes de stator (27) et des petites fentes de stator (25) sont d'une ou de plusieurs des formes suivantes :
(i) les huit fentes de stator par pôle et par phase dans chaque groupe de fentes de stator (2) comprennent quatre grandes fentes de stator (26), deux fentes moyennes de stator (27) et deux petites fentes de stator (25), les quatre grandes fentes de stator (26) sont disposées au milieu du groupe de fentes de stator (2), les deux côtés des quatre grandes fentes de stator (26) sont respectivement disposés avec une petite fente de stator (25), et entre la grande fente de stator (26) et la petite fente de stator (25) sont respectivement disposés avec une moyenne fente de stator (27), la petite fente de stator (25) d'un côté des quatre grandes fentes de stator (26) et la petite fente de stator (25) de l'autre côté des quatre grandes fentes de stator (26) sont disposées symétriquement par rapport à la ligne centrale des quatre grandes fentes de stator (26) le long de la direction de la circonférence du deuxième substrat (1), et la fente moyenne de stator (27) d'un côté des quatre grandes fentes de stator (26) et la fente moyenne de stator (27) de l'autre côté des quatre grandes fentes de stator (26) sont disposées symétriquement par rapport à la ligne centrale des quatre grandes fentes de stator (26) le long de la direction de la circonférence du deuxième substrat (1) ;
(ii) les huit fentes de stator par pôle et par phase dans chaque groupe de fentes de stator (2) comprennent deux grandes fentes de stator (26), quatre fentes moyennes de stator (27) et deux petites fentes de stator (25), les deux grandes fentes de stator (26) sont disposées au milieu du groupe de fentes de stator (2), les deux côtés des deux grandes fentes de stator (26) sont respectivement disposés avec une petite fente de stator (25), et entre la grande fente de stator (26) et la petite fente de stator (25) sont respectivement disposés deux fentes moyennes de stator (27), la petite fente de stator (25) d'un côté des deux grandes fentes de stator (26) et la petite fente de stator (25) de l'autre côté des deux grandes fentes de stator (26) sont disposées symétriquement par rapport à la ligne centrale des deux grandes fentes de stator (26) le long de la direction de la circonférence du deuxième substrat (1), et les deux fentes moyennes de stator (27) d'un côté des deux grandes fentes de stator (26) et les deux fentes moyennes de stator (27) de l'autre côté des deux grandes fentes de stator (26) sont disposées symétriquement par rapport à la ligne centrale des deux grandes fentes de stator (26) le long de la direction de la circonférence du deuxième substrat (1).

13. Moteur asynchrone triphasé IE5 à base de rotor en fonte d'aluminium et de stratification de stator à fentes inégales selon la revendication 1, **caractérisé en ce que** le nombre de fentes de stator par pôle et par phase dans chaque groupe de fentes de stator (2) est de neuf, y compris les grandes fentes de stator (26), les fentes moyennes de stator (27) et les petites fentes de stator (25), et le nombre et la disposition des grandes fentes de stator (26), des fentes moyennes de stator (27) et des petites fentes de stator (25) sont d'une ou de plusieurs des formes suivantes :
(i) les neuf fentes de stator par pôle et par phase dans chaque groupe de fentes de stator (2) comprennent une grande fente de stator (26), deux fentes moyennes de stator (27) et six petites fentes de stator (25), la grande fente de stator (26) est disposée au milieu du groupe de fentes de stator (2), les deux côtés de la grande fente de stator (26) sont respectivement pourvus de trois petites fentes de stator (25), et entre la grande fente de stator (26) et la petite fente de stator (25) se trouve respectivement une fente moyenne de stator (27), les trois petites fentes de stator (25) d'un côté de la grande fente de stator (26) et les trois petites fentes de stator (25) de l'autre côté de la grande fente de stator (26) sont disposées symétriquement par rapport à la grande fente de stator (26) en position médiane, et la fente moyenne de stator (27) d'un côté de la grande fente de stator (26) et la fente moyenne de stator (27) de l'autre côté de la grande fente de stator (26) sont disposées symétriquement par rapport à la grande fente de stator (26) en position médiane ;
(ii) les neuf fentes de stator par pôle et par phase dans chaque groupe de fentes de stator (2) comprennent trois grandes fentes de stator (26), deux fentes moyennes de stator (27) et quatre petites fentes de stator (25), les trois grandes fentes de stator (26) étant disposées au milieu du groupe de fentes de stator (2), les deux côtés des trois grandes fentes de stator (26) sont respectivement disposés avec deux petites fentes de stator (25), et entre la grande fente de stator (26) et la petite fente de stator (25) sont respectivement disposés avec une fente moyenne de stator (27), les deux petites fentes de stator (25) d'un côté des trois grandes fentes de stator (26) et les deux petites fentes de stator (25) de l'autre côté des trois grandes fentes de stator (26) sont disposées symétriquement par rapport à la grande fente de stator (26) en position médiane, et la fente moyenne de stator (27) d'un côté des trois grandes fentes de stator (26) et la fente moyenne de stator (27) de l'autre côté des trois grandes fentes de stator (26) sont disposées symétriquement par rapport à la grande fente de stator (26) en position médiane ;
(iii) les neuf fentes de stator par pôle et par phase dans chaque groupe de fentes de stator (2) comprennent cinq grandes fentes de stator (26), deux fentes moyennes de stator (27) et deux petites fentes de stator (25), les cinq grandes fentes de stator (26) étant disposées au milieu du groupe de fentes de stator (2), les deux côtés des cinq grandes fentes de stator (26) sont respectivement disposés avec une petite fente de stator (25), et entre la grande fente de stator (26) et la petite fente de stator (25) sont respectivement disposés avec une moyenne fente de stator (27), la petite fente de stator (25) d'un côté des cinq grandes fentes de stator (26) et la petite fente de stator (25) de l'autre côté des cinq grandes fentes de stator (26) sont disposées symétriquement par rapport à la grande fente de stator (26) en position médiane, et la fente moyenne de stator (27) d'un côté des cinq grandes fentes de stator (26) et la fente moyenne de stator (27) de l'autre côté des cinq grandes fentes de stator (26) sont disposées symétriquement par rapport à la grande fente de stator (26) en position médiane ;
(iv) les neuf fentes de stator par pôle et par phase dans chaque groupe de fentes de stator (2) comprennent une grande fente de stator (26), quatre fentes moyennes de stator (27) et quatre petites fentes de stator (25), la grande fente de stator (26) étant disposée au milieu du groupe de fentes de stator (2), les deux côtés de la grande fente de stator (26) sont respectivement disposés avec deux petites fentes de stator (25), et entre la grande fente de stator (26) et la petite fente de stator (25) sont respectivement disposées deux moyennes fentes de stator (27), les deux petites fentes de stator (25) d'un côté de la grande fente de stator (26) et les deux petites fentes de stator (25) de l'autre côté de la grande fente de stator (26) sont disposées symétriquement par rapport à la grande fente de stator (26) en position médiane, et les deux fentes moyennes de stator (27) d'un côté de la grande fente de stator (26) et les deux fentes moyennes de stator (27) de l'autre côté de la grande fente de stator (26) sont disposées symétriquement par rapport à la grande fente de stator (26) en position médiane ;
(v) les neuf fentes de stator par pôle et par phase dans chaque groupe de fentes de stator (2) comprennent trois grandes fentes de stator (26), quatre fentes moyennes de stator (27) et deux petites fentes de stator (25), les trois grandes fentes de stator (26) étant disposées au milieu du groupe de fentes de stator (2), les deux côtés des trois grandes fentes de stator (26) sont respectivement disposés avec une petite fente de stator (25), et entre la grande fente de stator (26) et la petite fente de stator (25) sont respectivement disposés deux fentes moyennes de stator (27), la petite fente de stator (25) d'un côté des trois grandes fentes de stator (26) et la petite fente de stator (25) de l'autre côté des trois grandes fentes de stator (26) sont disposées symétriquement par rapport à la grande fente de stator (26) en position médiane, et les deux fentes moyennes de stator (27) d'un côté des trois grandes fentes de stator (26) et les deux fentes moyennes de stator (27) de l'autre côté des trois grandes fentes de stator (26) sont disposées symétriquement par rapport à la grande fente de stator (26) en position médiane ;
(vi) les neuf fentes de stator par pôle et par phase dans chaque groupe de fentes de stator (2) comprennent une grande fente de stator (26), six fentes moyennes de stator (27) et deux petites fentes de stator (25), la grande fente de stator (26) étant disposée au milieu du groupe de fentes de stator (2), les deux côtés de la grande fente de stator (26) sont respectivement disposés avec une petite fente de stator (25), et entre la grande fente de stator (26) et la petite fente de stator (25) sont respectivement disposées trois fentes moyennes stator (27), la petite fente de stator (25) d'un côté de la grande fente de stator (26) et la petite fente de stator (25) de l'autre côté de la grande fente de stator (26) sont disposées symétriquement par rapport à la grande fente de stator (26) en position médiane, et les trois fentes moyennes de stator (27) d'un côté de la grande fente de stator (26) et les trois fentes moyennes de stator (27) de l'autre côté de la grande fente de stator (26) sont disposées symétriquement par rapport à la grande fente de stator (26) en position médiane

14. Le moteur asynchrone triphasé IE5 à base de stratification de rotor et de stator en aluminium moulé avec des fentes inégales selon l'une quelconque des revendications 1 à 13, **caractérisé en ce que** 8-16 rainures de bouclage (3) sont uniformément disposées sur la surface de l'anneau extérieur du deuxième substrat (1) le long de la direction de la circonférence du deuxième substrat (1) pour installer la boucle, la base inférieure de la rainure de bouclage (3) est réglée comme une ligne droite, la base supérieure de la rainure de la boucle (3) est naturellement ouverte le long de la direction de la circonférence du second substrat (1), la largeur de la rainure de la boucle (3) est de 14 à 25 mm, la hauteur de la rainure de la boucle (3) est de 3 à 5 mm, l'angle entre l'hypoténuse et la base de la rainure de la boucle (3) est de 15 à 25°, et une rainure de traitement (4) est placée au fond de l'une quelconque des rainures de la boucle (3).
